(19)

Europäisches
Patentamt
European
Patent Office
Office européen
des brevets

(11)     **EP 2 451 174 A2**

(12)     **EUROPEAN PATENT APPLICATION**

(43) Date of publication:
      **09.05.2012   Bulletin 2012/19**

(51) Int Cl.:
      ***H04N 13/00*** *(2006.01)*

(21) Application number: **11008412.6**

(22) Date of filing: **19.10.2011**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **05.11.2010   JP 2010248049**<br><br>(71) Applicant: **Hitachi Consumer Electronics Co., Ltd. Tokyo 100-0004 (JP)** | (72) Inventors:<br>• **Otsuka, Satoshi**<br>  **Tokyo 100-8220 (JP)**<br>• **Tsuruga, Sadao**<br>  **Tokyo 100-8220 (JP)**<br><br>(74) Representative: **Strehl Schübel-Hopf & Partner Maximilianstrasse 54 80538 München (DE)** |

(54)     **Video output device, video output method, reception device and reception method**

(57)     In order to effectively determine 3D video from the video information, improve the user convenience while avoiding the risk of erroneous determination due to unconditional 3D switching, and reduce process load due to unconditional determination of the video, a 3D determination method based on video information is performed by means of a plurality of resources such as the correlation information of the video. At this time, it is determined whether the video signal is 3D video or 2D video according to the time and conditions set for the determination. Then, the video output is switched between 2D video and 3D video based on the determination result. Or a message is displayed to check if the user enables or disables 3D switching before the video is switched. Or, the conditions for the video determination are limited.

## FIG. 41

**Description**

FIELD OF THE INVENTION

The technical field of the present invention relates to the transmission and reception of content including three-dimensional (referred to as "3D" from this point forward) video.

BACKGROUND OF THE INVENTION

An object of The JP-A No. 1991-295393 is to provide "a three-dimensional (3D) video automatic determination device capable of automatically discriminating between 3D video and normal side, to display the normal side or automatically switch to the normal side based on the determination result" (see JP-A No. 1991-295393). The solution described in JP-A No. 1991-295393 is to "detect that the correlation between the left and right images is low, because images of the same view are continuously transmitted on the normal side, but in the case of the 3D video, images for the right eye and left eye are alternately transmitted, in which the left and right views are different in the area standing out as 3D video, so that the positions of the two views are different in the reproduced video" (see the JP-A No. 1991-295393).

SUMMARY OF THE INVENTION

In the JP-A No. 1991-295393, as a method of discriminating the three-dimensional picture, there is described a device for switching images based on the subtraction waveform of the N frame and the (N+2) frame. However, there is no description of the other methods. Thus, it may not be able to effectively determine 3D image, and may not be able to provide an appropriate image display to a user.

In order to solve this problem, an aspect of the present invention uses, for example, the technical features described in the claims of the present invention.

With the method described above, it is possible to output an appropriate image to the user. As a result, the user convenience can be improved.

BRIEF DESCRIPTION OF THE DRAWINGS

Fig. 1 is an example of a block diagram of a system;
Fig. 2 is an example of a block diagram of a transmission device 1;
Fig. 3 is an example of stream type assignment;
Fig. 4 is an example of the structure of a component descriptor;
Fig. 5A is an example of component content and component type, which are the elements of the component descriptor;
Fig. 5B is an example of component content and component type, which are the elements of the component descriptor;
Fig. 5C is an example of component content and component type, which are the elements of the component descriptor;
Fig. 5D is an example of component content and component type, which are the elements of the component descriptor;
Fig. 5E is an example of component content and component type, which are the elements of the component descriptor;
Fig. 6 is an example of the structure of a component group descriptor;
Fig. 7 is an example of component group type;
Fig. 8 is an example of component group identification;
Fig. 9 is an example of charge unit identification;
Fig. 10A is an example of the structure of a detailed 3D program descriptor;
Fig. 10B is an example of 3D/2D type;
Fig. 11 is an example of 3D method type;
Fig. 12 is an example of the structure of a service descriptor;
Fig. 13 is an example of service type;
Fig. 14 is an example of the structure of a service list descriptor;
Fig. 15 is an example of transmission operation rules of component descriptor in the transmission device 1;
Fig. 16 is an example of transmission operation rules of component group descriptor in the transmission device 1;
Fig. 17 is an example of transmission operation rules of detailed 3D program descriptor in the transmission device 1;
Fig. 18 is an example of transmission operation rules of service descriptor in the transmission device 1;
Fig. 19 is an example of transmission operation rules of service list descriptor in the transmission device 1;

Fig. 20 is an example of the process for each field of the component descriptor in a reception device 4;

Fig. 21 is an example of the process for each field of the component group descriptor in the reception device 4;

Fig. 22 is an example of the process for each field of the detailed 3D program descriptor in the reception device 4;

Fig. 23 is an example of the process for each field of the service descriptor in the reception device 4;

Fig. 24 is an example of the process for each field of the service list descriptor in the reception device 4;

Fig. 25 is an example of the configuration of the reception device according to the present invention;

Fig. 26 is an example of a block diagram schematically showing a CPU internal function in the reception device according to the present invention;

Fig. 27 is an example of a block diagram of a system;

Fig. 28 is an example of a block diagram of a system;

Figs. 29A and 29B show examples of 3D reproduction/output/display process of 3D content;

Fig. 30 is an example of 3D reproduction/output/display process of 3D content;

Figs. 31A and 31B show examples of 3D reproduction/output/display process of 3D content;

Figs. 32A to 32D show examples of 2D reproduction/output/display process of 3D content;

Fig. 33 is an example of message display;

Fig. 34 is an example of message display;

Fig. 35 is an example of a combination of streams in 3D video transmission;

Fig. 36 is an example of the structure of the content descriptor;

Fig. 37 is an example of a code table of program categories;

Fig. 38 is an example of a code table of program characteristics;

Fig. 39 is an example of a code table of program characteristics;

Fig. 40 is an example of a flow chart of a system control unit in program switching;

Fig. 41 is an example of a user response reception object;

Fig. 42 is an example of a flow chart of the system control unit in 3D determination process by video information;

Fig. 43 is an example of a flow chart of the system control unit in 3D determination process by video information;

Fig. 44 is an example of a flow chart of the system control unit in 3D determination process by video information;

Fig. 45 is an example of a message display;

Fig. 46 is an example of a message display; and

Fig. 47 is an example of a user setting menu.

## DETAILED DESCRIPTION OF THE PREFERRED EMBODIMENTS

Hereinafter, a preferred embodiment (example) of the present invention will be described. However, it is to be understood that the present invention is not limited to this embodiment. The embodiment in which a reception device is mainly described is particularly applicable to the reception device, but this does not prevent it from being applied to other than the reception device. Further, all the configurations of the embodiment are not necessarily used, and can be selected according to the necessity.

<System>

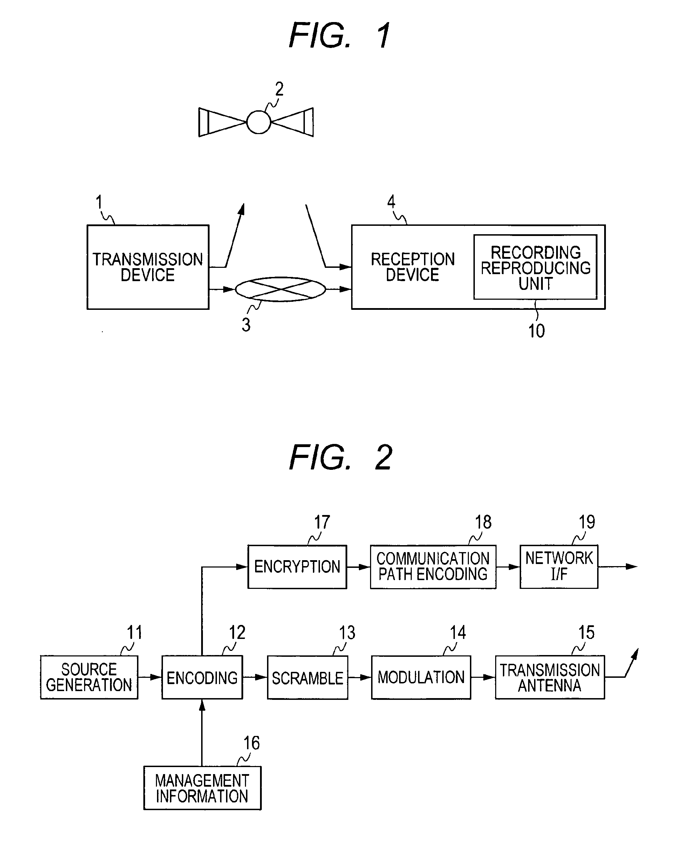

Fig. 1 is a block diagram showing a configuration example of a system according to this embodiment. Fig. 1 shows an example in which information is transmitted and received over the air and then recorded and reproduced. However, the present invention is not limited to over-the-air broadcast and may use VOD by communication, and both are also commonly referred to as distribution.

Reference numeral 1 denotes a transmission device placed in an information service station such as a broadcast station. Reference numeral 2 denotes a repeater placed in a relay station or a broadcast satellite. Reference numeral 3 denotes a public network for connecting home, such as the Internet, and broadcast station. Reference numeral 4 denotes a reception device placed in the user's home. Reference numeral 10 denotes a receiving/recording/reproduction unit mounted in the reception device 4. The receiving/recording/reproduction unit 10 can record and reproduce the broadcasted information, or can reproduce content from removable external media.

The transmission device 1 transmits a modulated signal wave through the repeater 2. In addition to the transmission by a satellite as shown in Fig. 1, other transmissions can be used, such as, for example, transmission over telephone lines, terrestrial broadcast transmission, transmission over network such as the Internet over the public network 3. As described below, the signal wave received by the reception device 4 is demodulated into an information signal. Then, the information signal is recorded in a recording medium if necessary. Further, the signal wave transmitted over the public network 3 is converted into a format such as a data format (IP packet) according to a protocol (for example, TCP/IP) suitable for the public network 3. Upon receiving the data, the reception device 4 decodes the data into an information signal suitable for recording if necessary, and records the information signal into a recording medium. Further, the user can monitor the video and audio represented by the information signal, on a display if it is included in the reception device 4. Otherwise the user can monitor the video and audio by connecting the reception device 4 to a display not shown.

<Transmission device>

Fig. 2 is a block diagram showing a configuration example of the transmission device 1 of the system shown in Fig. 1.

Reference numeral 11 denotes a source generation unit, 12 denotes an encoder for compressing by MPEG2, H.264 or other methods to add program information and the like, 13 denotes a scrambler, 14 denotes a modulator, 15 denotes a transmission antenna, and 16 denotes a management information addition unit. Information such as video and audio are generated by the source generation unit 11 including a camera, a recording reproduction device, and the like. Then, the generated information is compressed by the encoder 12 to occupy a smaller bandwidth in data transmission. The information is also transmitted encrypted by the scrambler 13 so that a specific viewer can monitor if necessary. Then, the information signal is modulated by the modulator 14 into a signal suitable for transmission, such as OFDM, TC8PSK, QPSK, and multi-value QAM. Then, the information signal is transmitted from the transmission antenna 15 as a radio wave to the repeater 2. At this time, the management information addition unit 16 adds program specific information, such as the attribution of content (for example, encoding information of video, encoding information of audio, program structure, 3D video or not) generated by the source generation unit 11. Further, the management information addition unit 16 also adds the service information generated by the broadcast station (for example, structure of the current or next program, service type, structure information of the program for one week). Hereinafter, both the program specific information and the service information will be referred to as program information.

Note that a plurality of information resources is often multiplexed on a single radio wave by time division, spectral diffusion or other methods. In this case, although not shown in Fig. 2 for simplicity, there are a plurality of systems of the source generation unit 11 and the encoder 12. A multiplexing unit for multiplexing a plurality of information resources is placed between the encoder 12 and the scrambler 13, or between the encoder 12 and an encrypting unit 17.

Further, also in the case of the signal transmitted over the public network 3, the signal generated by the encoder 12 is encrypted by the encryption unit 17 so that a specific viewer can monitor if necessary. The signal is encoded by a communication channel encoder 18 into a signal suitable for transmitting over the public network 3. Then, the signal is transmitted to the public network 3 from a network interface (I/F) 19.

<3D transmission method>

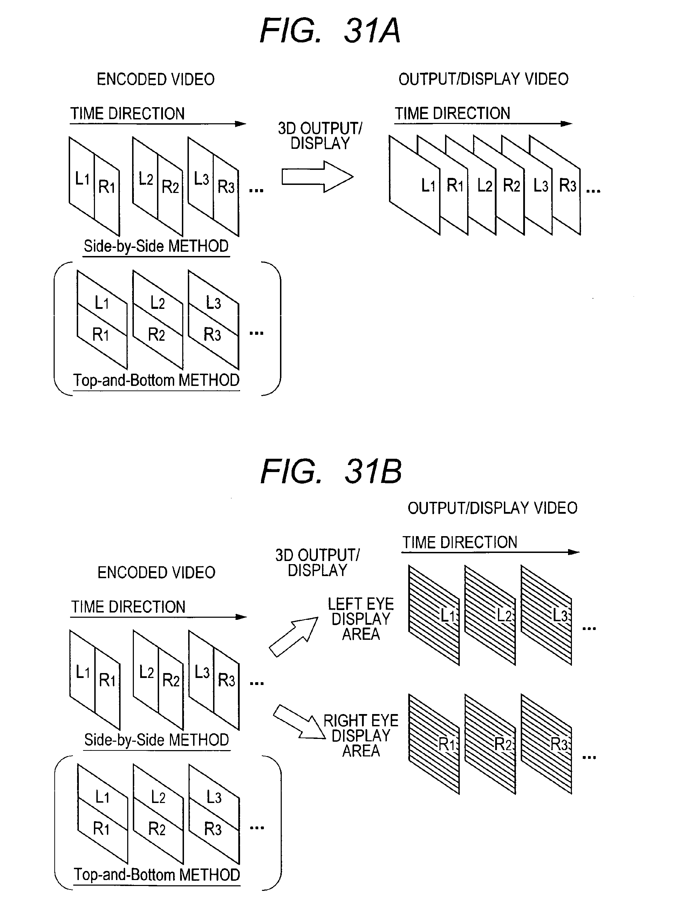

The transmission method of 3D program transmitted from the transmission device 1 is roughly divided into two methods. One is a method of containing left eye and right eye images in one picture by taking advantage of the existing broadcast method of 2D program. This method uses the existing Moving Picture Experts Group 2 (MPEG2) or H.264 AVC as the image compression method. The features of the method are that it is compatible with the existing broadcast, able to use the existing relay infrastructure, and able to receive by the existing reception device (such as STB) . However, the 3D image is transmitted with half the maximum resolution of the existing broadcast (in the vertical or horizontal direction). For example, Fig. 31A shows "Side-by-Side" method and "Top-and-Bottom" method. The "Side-by-Side" method divides a picture into left and right parts such that the width in the horizontal direction of the left eye image (L) and right eye image (R) is about half the width of the 2D program, and that the width in the vertical direction of the respective images is the same as the width of the 2D program. The Top-and-Bottom method divides a picture into up and down parts such that the width in the horizontal direction of the left eye image (L) and the right eye image (R) is the same as the width of 2D program, and that the width in the vertical direction of the respective images is half the width of 2D program. Other methods are "Field alternative" method for using interlace, "Line alternative" method for alternately setting left eye and right eye images for each scan line, and "Left+Depth" method that includes 2D (one side) image and the depth (the distance to an object) information for each pixel of the image. These methods divide a picture into a plurality of images and then store images of a plurality of views. This is an advantage that the encoding methods such as MPEG2 and H.264 AVC (except MVC), which have not been designated as multi-view video encoding methods, can be used as they are to perform 3D program broadcast by taking advantage of the existing 2D broadcast method. Note that, for example, it is assumed that the 2D program can be transmitted in a screen size of 1920 dots in the maximum horizontal direction and 1080 lines in the vertical direction. In this case, when the 3D program broadcast is performed using the "Side-by-Side" method, a picture is divided into left and right parts. Then, the picture is transmitted by setting the left eye image (L) and the right eye image (R) in the screen size of 960 dots in the horizontal direction and 1080 lines in the vertical direction, respectively. Also in this case, when the 3D program broadcast is performed using the "Top-and-Bottom" method, a picture is divided into upper and lower parts. Then, the picture is transmitted by setting the left eye image (L) and the right eye image (R) in the screen size of 1920 dots in the horizontal direction and 540 lines in the vertical direction, respectively.

As another example, there is a method for transmitting the left eye image and the right eye image in different streams (ES). In this embodiment, this method will be hereinafter referred to as "2 view-based ES transmission". As an example of this method, for example, there is a transmission method by H.264 MVC, which is the multi-view video encoding method. The feature of this method is to be able to transmit high resolution 3D video. In other words, the method has the effect of transmitting high resolution 3D video. Note that the multi-view video encoding method is the standardized encoding method for encoding multi-view video. The multi-view video encoding method can encode multi-view video without dividing a picture for each view. In other words, the multi-view video encoding method encodes different pictures for each view.

When 3D video is transmitted by this method, for example, the encoded picture for the left eye view is defined as the main view picture, and the encoded picture for the right eye view is transmitted as the other view picture. In this way, the main view picture can maintain compatibility with the existing 2D broadcast method. For example, when H.264 MVC is used as the multi-view video encoding method, the main view picture can maintain compatibility with the 2D video of H.264 AVC with respect to the base sub-stream of H. 264 MVC. Thus, the main view picture can be displayed as 2D video.

Further, according to this embodiment of the present invention, the following methods are cited as other examples of "3D2 view-based ES transmission method".

As another example of the "3D2 view-based ES transmission method", there is a method in which the left eye encoding picture is treated as the main view picture and encoded by MPEG2, while the right eye encoding picture is treated as another view picture and encoded by H.264 AVC. In this way, the main view picture and another view picture are transmitted as separate streams. With this method, the main view picture is compatible with MPEG2 and can be displayed as 2D video. This makes it is possible to maintain compatibility with the existing 2D broadcast method in which pictures encoded by MPEG2 have been widely used.

As yet another example of the "3D2 view based ES transmission method", there is a method in which the left eye encoding picture is treated as the main view picture and encoded by MPEG2, while the right eye encoding picture treated as another view picture and encoded by MPEG2. In this way, the main view picture and another view picture are transmitted as separate streams. In this method also, the main view image is compatible with MPEG2 and can be displayed as 2D video. This makes it possible to maintain compatibility with the existing 2D broadcast method in which pictures encoded by MPEG2 have been widely used.

As still another example of the "3D2 view based ES transmission method", there may be a method in which the left eye encoding picture is treated as the main view picture and encoded by H. 264 AVC or H. 264 MVC, while the right eye encoding picture is treated as another view picture and encoded by MPEG2.

Note that even with the encoding methods other than the "3D2 view-based ES transmission method", such as MPEG2 and H. 264 AVC (except MVC) which have not been designated as the standardized multi-view video encoding methods, 3D transmission can be achieved by generating a stream in which left eye images and right eye images are alternately stored.

<Program information>

Both the program specific information and the service information are referred to as program information.

The program specific information, which is also called PSI, is the information necessary to select a required program. The program specific information includes the following four tables. A program association table (PAT) is the table that specifies a packet identifier of a TS packet to transmit a program map table (PMT) associated with the broadcast program. PMT is the table that specifies a packet identifier of a TS packet to transmit encoded signals constituting the broadcast program, as well as a packet identifier of a TS packet to transmit the common information of the pay-TV related information. A network information table (NIT) is the table that transmits information associating the transmission line information, such as modulation frequency, with the broadcast program. A conditional access table (CAT) is the table that specifies a packet identifier of a TS packet to transmit individual information of the pay-TV related information. These tables of the program specific information are defined in the MPEG2 system standard. For example, the video encoding information, the audio encoding information, and the program structure are included. In the present invention, there is also included information indicating 3D video or not. This PSI is added by the management information addition unit 16.

The service information, which is also called SI, is various types of information defined for the convenience of program selection. The service information also includes the PSI information of the MPEG-2 system standard, such as an event information table (EIT) and a service description table (SDT). EIT describes the information about the program such as program name, broadcast date and time, and program content. SDT describes the information on the sub-channel (service) such as sub-channel name and broadcast service provider name.

For example, there is included information relating to the structure of on-air program or next program, the service type, and the structure of the program for one week. This SI is added by the management information addition unit 16.

The program information includes a component descriptor, a component group identifier, a detailed 3D program descriptor, a service descriptor, a service list descriptor, and the like, all of which are the elements of the program information. These descriptors are described in the tables such as PMT, EIT [schedule basic/schedule extended/present/following], NIT, and SDT.

The tables of PMT and EIT are different in use. For example, PMT describes only the information of the present program, so that the information of the program to be aired may not be checked. However, the transmission cycle from the transmission side is short and the time until reception completion is short. In addition, the information relates to the present program, which will not be changed. For this reason, PMT is highly reliable. On the other hand, with respect to EIT [schedule basic/schedule extended], it is possible to obtain the information for 7 days ahead, in addition to the information of the present program. However, the transmission cycle from the transmission side is longer than that of PMT and the time until reception completion is long, requiring a large storage area. In addition, the information relates to the future event, which may be changed. For this reason, EIT is less reliable. The information relating to the next broadcast program can be obtained with EIT [following].

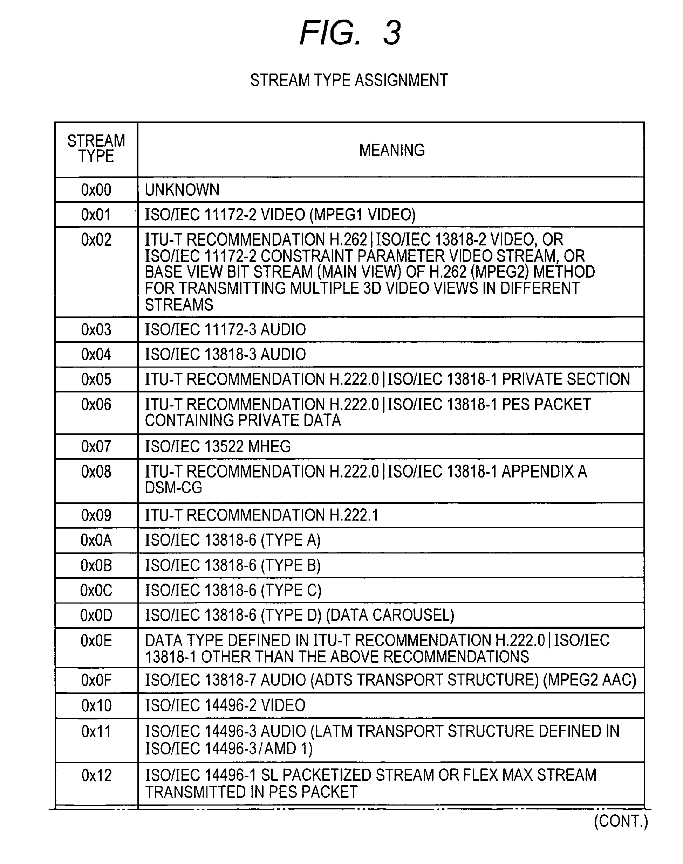

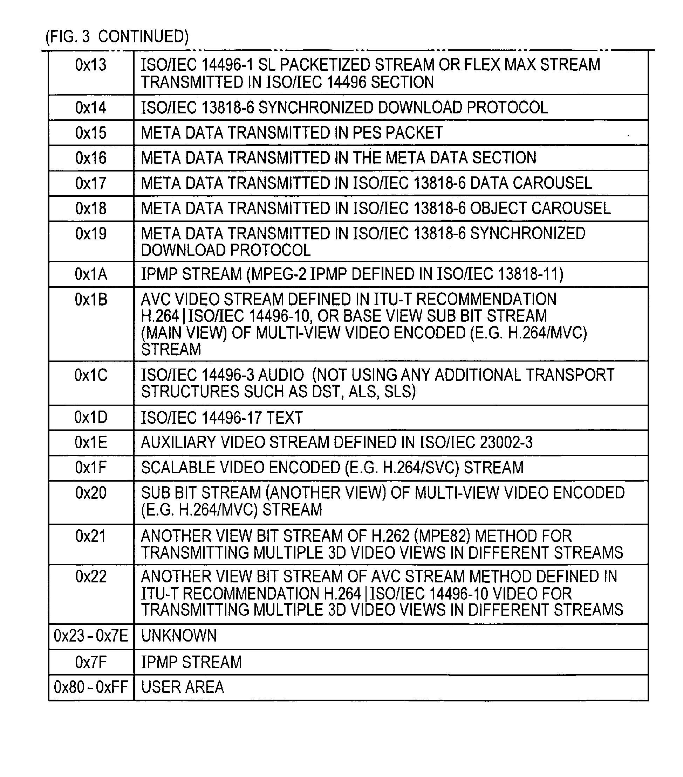

The program specific information PMT can show the elementary stream (ES) type of the broadcasting program, by stream_type (stream type) which is the 8-bit information described in the second loop (the loop for each ES), using the table structure defined in ISO/IEC 13818-1. In this embodiment of the present invention, the number of ES types is more than the number of existing ES types. For example, the ES types of broadcasting programs are assigned as shown in Fig. 3.

First, Ox1B is assigned to the base view sub bit stream (main view) of the multi-view video encoded (for example, H.264/MVC) stream. The stream type Ox1B is the same as the AVC video stream defined in the existing ITU-T recommendation H.264|ISO/IEC 14496-10 video. Next, 0x20 is assigned to the sub bit stream (another view) of the multi-view video encoded stream (for example, H. 264 MVC) that can be used for 3D video programs.

Further, 0x02 is assigned to the base view bit stream (main view) of the H.262 (MPEG2) method used in the 3D2 view-based ES transmission method for transmitting multiple 3D video views in different streams. The stream type 0x02 is the same as the existing ITU-T recommendation H.262|ISO/IEC 13818-2 video. Here, the base view bit stream (main view) of the H.262 (MPEG2) method for transmitting multiple 3D video views in different streams, is the stream in which only the main view video of the multi-view 3D videos is encoded by the H.262 (MPEG2) method.

Further, Ox21 is assigned to the other view bit stream of the H. 262 (MPEG2) method for transmitting multiple 3D video views in different streams.

Further, 0x22 is assigned to the bit stream of the other view bit stream of the AVC stream method defined in the ITU-T recommendation H.264|ISO/IEC 14496-10 video for transmitting multiple 3D video views in different streams.

In the above description, first 0x20 is assigned to the sub bit stream of the multi-view video encoded stream that can be used in the 3D video program. Next, 0x21 is assigned to the other view bit stream of the H262 (MPEG2) method for transmitting multiple 3D video views in different streams. Then, 0x22 is assigned to the AVC stream defined in the ITU-T recommendation H.264|ISO/IEC 14496-10 video for transmitting multiple 3D video views in different streams. However, these streams may also be assigned to any of 0x23 to 0x7E. Note that the MVC video stream is only an example, and a video stream other than the H.264/MVC stream can also be used as long as it represents the multi-view video encoded stream that can be used for the 3D video program.

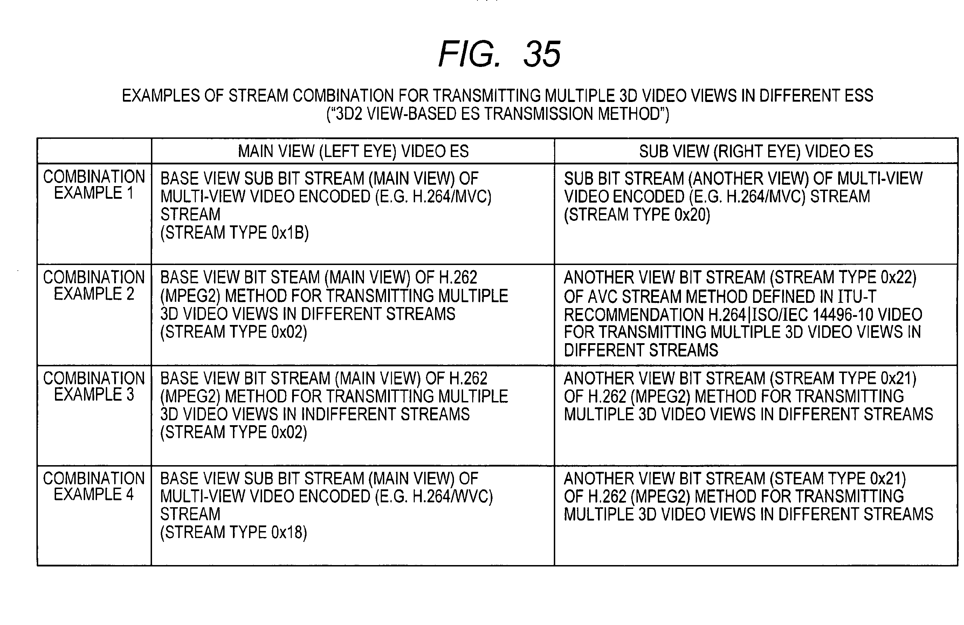

As described above, according to this embodiment of the present invention, when the broadcast service provider on the transmission device 1 side transmits (broadcasts) a 3D program by assigning bits of stream_type (stream type) , it is possible to transmit the 3D program, for example, by the stream combinations shown in Fig. 35.

In combination example 1, the base view sub bit stream (main view) (stream type Ox1B) of the multi-view video encoded (e.g., H.264/MVC) stream is transmitted as the main view (left eye) video stream. Further, the other view sub bit stream (stream type 0x20) of the multi-view video encoded (e.g., H.264/MVC) stream is transmitted as the sub view (right eye) video stream.

In this case, both the main view (left eye) video stream and the sub view (right eye) video stream use the stream of the multi-view video encoded (e.g., H.264/MVC) method. The multi-view video encoded (e.g., H.264/MVC) method is basically the method for transmitting the multi-view video, able to transmit the 3D program the most effectively of the other combination examples shown in Fig. 35.

Further, when the 3D program is displayed (output) in 3D, the reception device can reproduce the 3D program by processing both main view (left eye) and sub view (right eye) video streams.

When the 3D program is displayed (output) in 2D, the reception device can display (output) the 3D program as 2D program by processing only the main view (left eye) video stream.

Note that the base view sub bit stream of the multi-view video encoding method H. 264/MVC is compatible with the existing H.264/AVC (except MVC) video stream. Thus, the following effect can be obtained by assigning the two stream types to the same value, 0x1B, as shown in Fig. 3. In other words, even if the reception device, which does not have the function of displaying (outputting) 3D programs in 3D, receives the 3D program of the combination example 1, the reception device can recognize the main view (left eye) video stream of the particular program as the same stream as the existing H. 264/AVC (except MVC) video stream based on the stream type and can display (output) the 3D program as the normal 2D program, as long as the reception device has the function of displaying (outputting) the video stream (AVC video stream defined in the ITU-T recommendation H. 264|ISO/IEC 14496-10 video) of the existing H. 264/AVC (except MVC).

Further, the stream type not existing in the past is assigned to the sub view (right eye) video stream. Thus, the sub view video stream is ignored by the existing reception device. This makes it possible to prevent the existing reception device from displaying (outputting) the sub view (right eye) video stream that the broadcast service provider does not intend.

Thus, even if the 3D program broadcast of the combination example 1 is newly started, it is possible to avoid the situation where the 3D program is not displayed (output) by the existing reception device having the function of displaying (outputting) the existing H.264/AVC (except MVC) video streams. Thus, even if the particular 3D program is newly started on the broadcast supported by ad revenues, such as commercial messages (CM) , the particular program can be viewed by the reception device that does not support the 3D display (output) function. Thus, it is possible to avoid falling ratings due to the limited function of the reception device. This is also advantageous to the broadcast service provider.

In combination example 2, the base view bit stream (main view) (stream type Ox02) of the H.262 (MPEG2) method for transmitting multiple 3D video views in different streams, is transmitted as the main view (left eye) video stream. Further, the AVC stream (stream type Ox22) defined in the ITU-T recommendation H.264|ISO/IEC 14496-10 video for transmitting multiple 3D video views, is transmitted as the sub view (right eye) video stream.

Similarly to the combination example 1, when the 3D program is displayed (output) in 3D, the reception device can reproduce the 3D program by processing both the main view (left eye) video stream and the sub view (right eye) video stream. When the reception device displays (outputs) the 3D program in 2D, it is enough to process only the main view (left eye) video stream to display (output) the particular 3D program as 2D program.

Further, the base view bit stream (main view) of the H.262 (MPEG2) method for transmitting multiple 3D video views in different streams, is compatible with the existing ITU-T recommendation H.262|ISO/IEC 13818-2 video stream. In this case, even if the reception device does not have the 3D display (output) function but has the function of displaying (outputting) the existing ITU-T recommendation H.262|ISO/IEC 13818-2 video stream, it is possible to display (output) the particular 3D program as the 2D program by assigning the two stream types to the same value, Ox1B, as shown in Fig. 3.

Further, similarly to the combination example 1, the stream type not existing in the past is assigned to the sub view (right eye) video stream. Thus, the sub view video stream is ignored by the existing reception device. This makes it possible to prevent the existing reception device from displaying (outputting) the sub view (right eye) video stream that the broadcast service provider does not intend.

The reception device having the function of displaying (outputting) the existing ITU-T recommendation H. 262|ISO/IEC 13818-2 video stream has been widely used. Thus, it is possible to further prevent ratings from falling due to the limited function of the reception device. As a result, the broadcast service provider can achieve the most appropriate broadcast.

Further, the sub view (right eye) video stream is treated as the AVC stream (stream type 0x22) defined in the ITU-T recommendation H.264|ISO/EIC 14496-10 video. In this way, it is possible to transmit the sub view (right eye) video stream at a high compression rate.

In other words, according to the combination example 2, it is possible to obtain the commercial advantage of the broadcast service provider as well as the technical advantage by highly effective transmission.

In combination example 3, the base view bit stream (main view) (stream type 0x02) of the H.262 (MPEG2) method for transmitting multiple 3D video views in different streams, is transmitted as the main view (left eye) video stream. Further, the other view bit stream (stream type 0x21) of the H.262 (MPEG2) method for transmitting multiple 3D video views in different streams, is transmitted as the sub view (right eye) video stream.

In this case also, similarly to the combination example 2, even if the reception device does not have the 3D display (output) function but has the function of displaying (outputting) the existing ITU-T recommendation H.262|ISO/IEC 13818-2 video stream, it is possible to display (output) the 3D program as 2D program.

In addition to the commercial advantage of the broadcast service provider by preventing ratings from falling due to the limited function of the reception device, it is also possible to simplify the hardware configuration of the video encoding function in the reception device by unifying the main view (left eye) video stream and the sub view (right eye) video stream into the encoding method defined in H. 262 (MPEG2) method.

It is also possible, as shown in combination example 4, that the base view sub bit stream (main view) (stream type Ox1B) of the multi-view video encoded (e.g., H.264/MVC) stream, is transmitted as the main view (left eye) video stream, and that the other view bit stream (stream type 0x21) of the H. 262 (MPEG2) method for transmitting multiple 3D video views in different streams, is transmitted as the sub view (right eye) video stream.

In the combination examples of Fig. 35, the same effect can be obtained when the AVC video stream (stream type 0x1B) defined in the ITU-T recommendation H.264|ISO/IEC 14496-10 video is used in place of the base view sub bit stream (main view) (stream type Ox1B) of the multi-view video encoded (e.g., H. 264/MVC) stream.

Further, in the combination examples of Fig. 35, the same effect can be obtained when the ITU-T recommendation H.262|ISO/IEC 13818-2 video stream (stream type 0x1B) is used in place of the base view bit stream (main view) of the H.262 (MPEG2) method for transmitting multiple 3D video views in different streams.

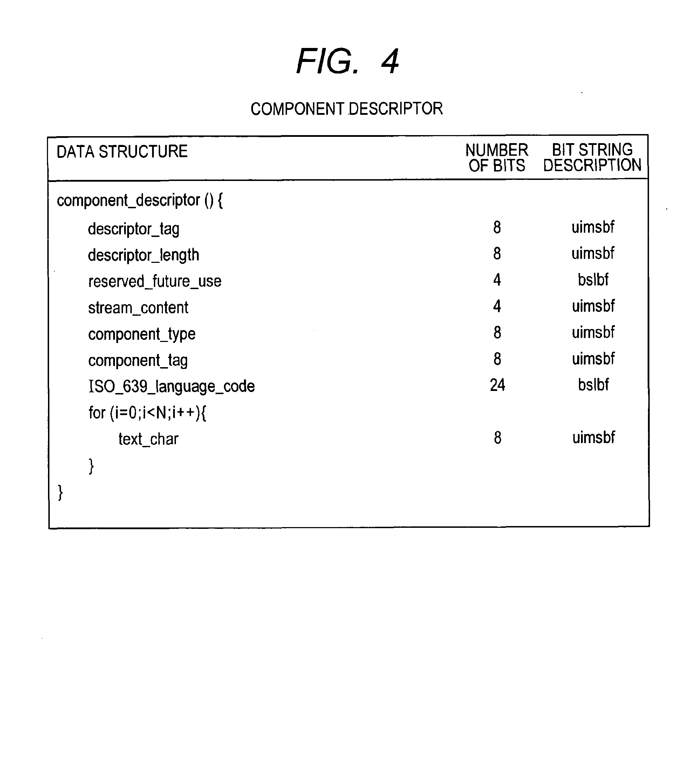

Fig. 4 shows an example of the structure of the component descriptor which is one of the program information resources. The component descriptor indicates the type of the component (an element constituting the program, for example, such as video, audio, characters, and various data). In addition, the component descriptor is used for expressing the elementary stream in the form of character. This descriptor is placed in PMT and/or EIT.

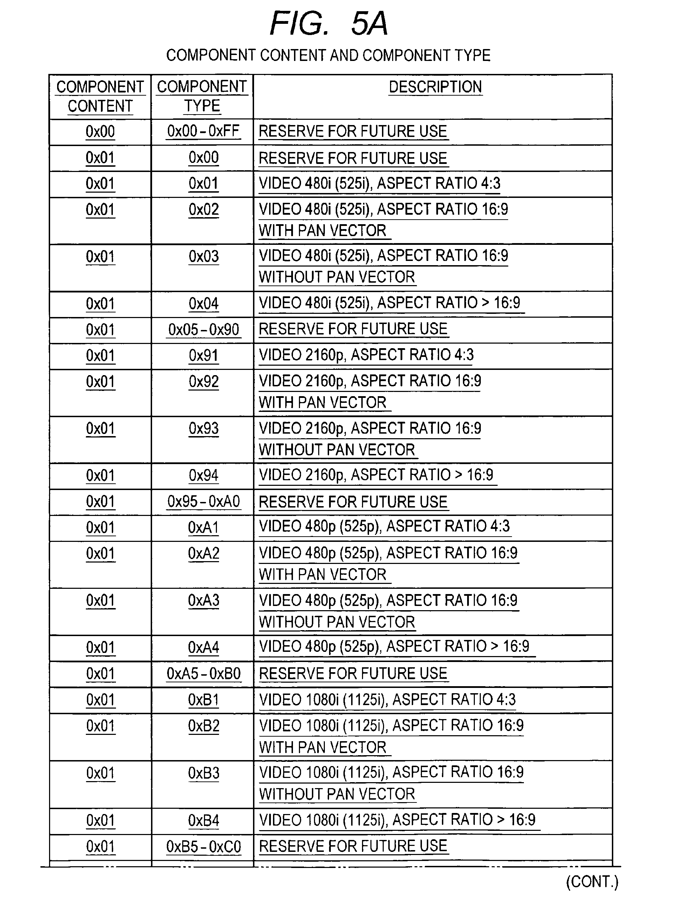

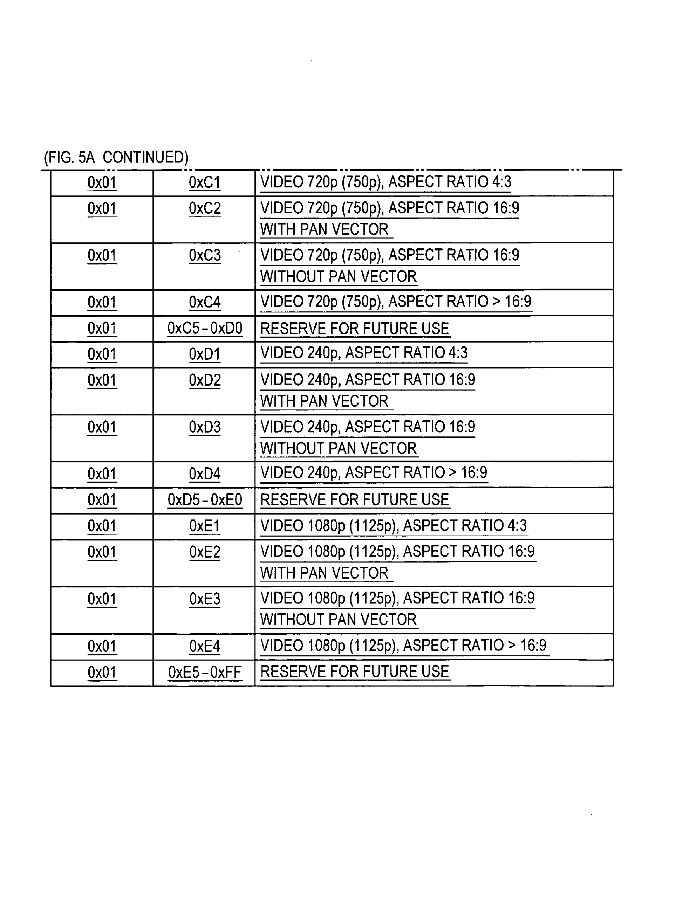

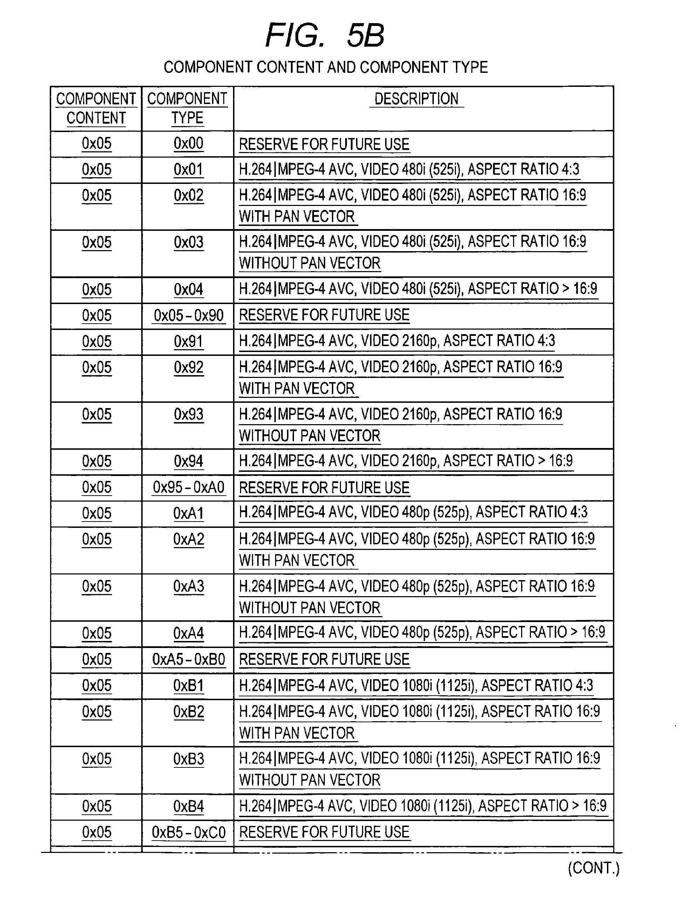

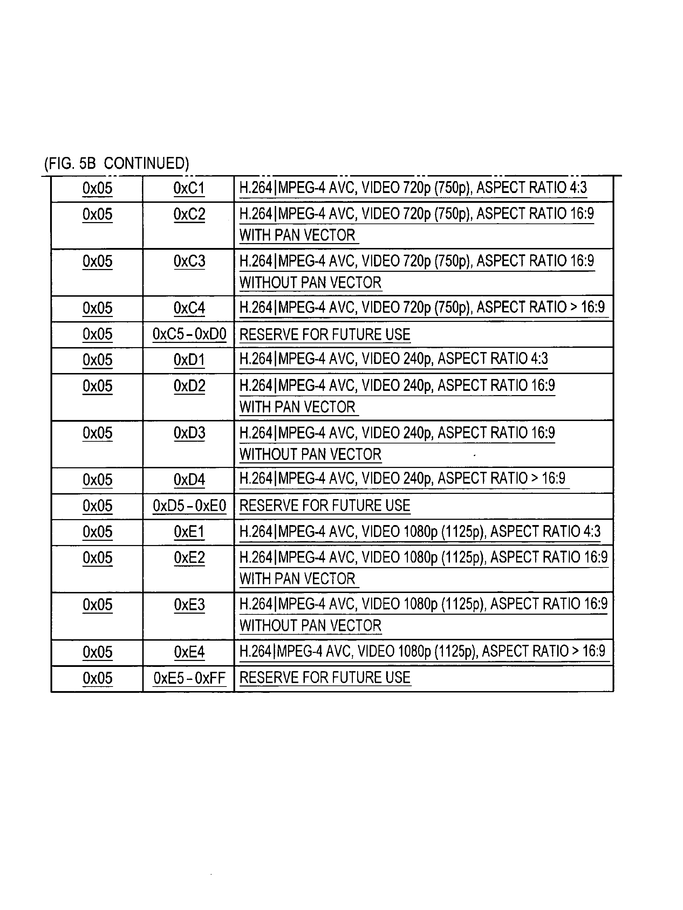

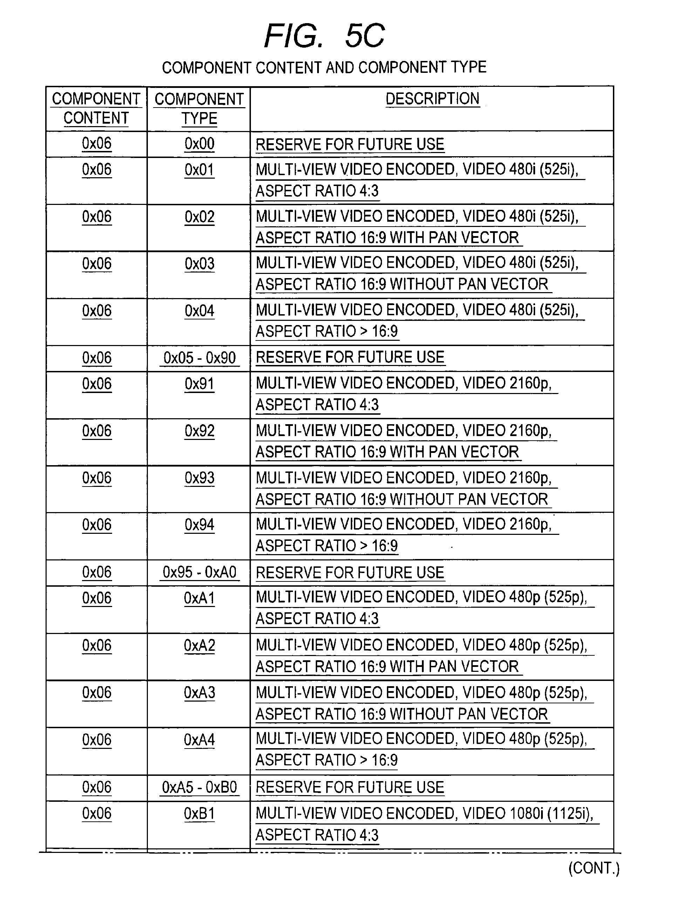

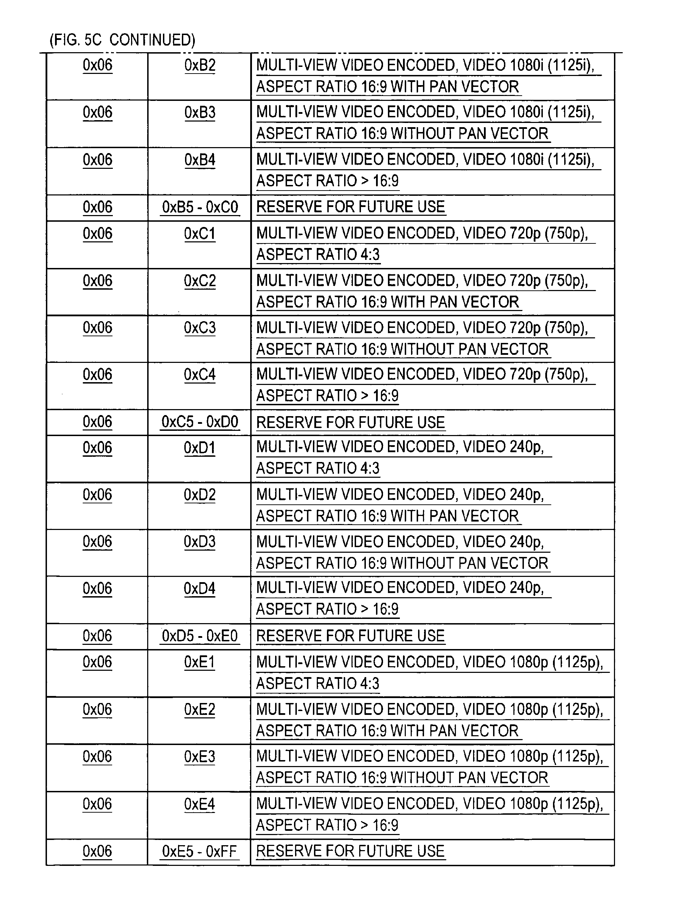

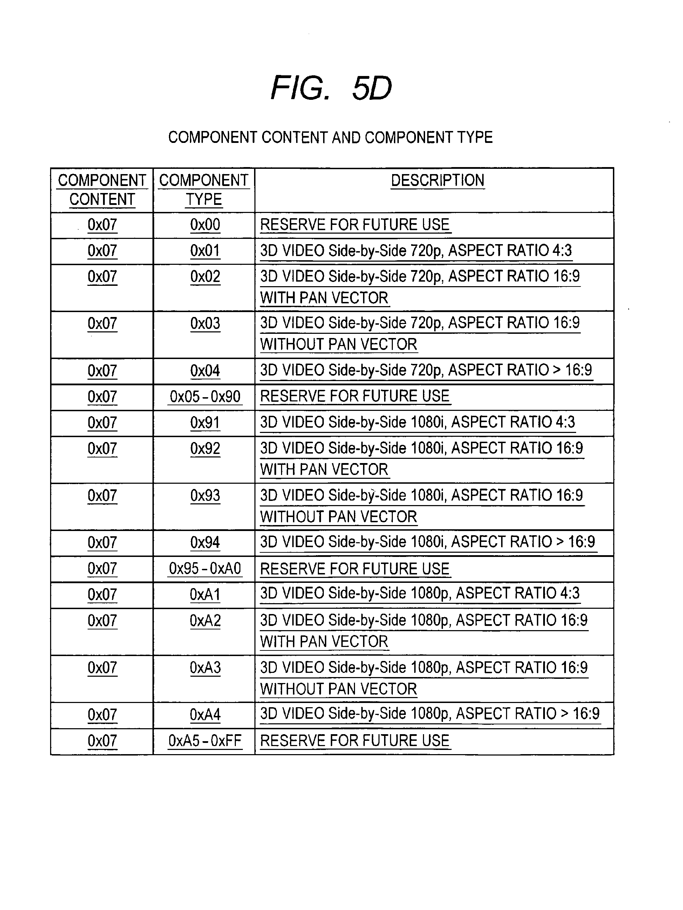

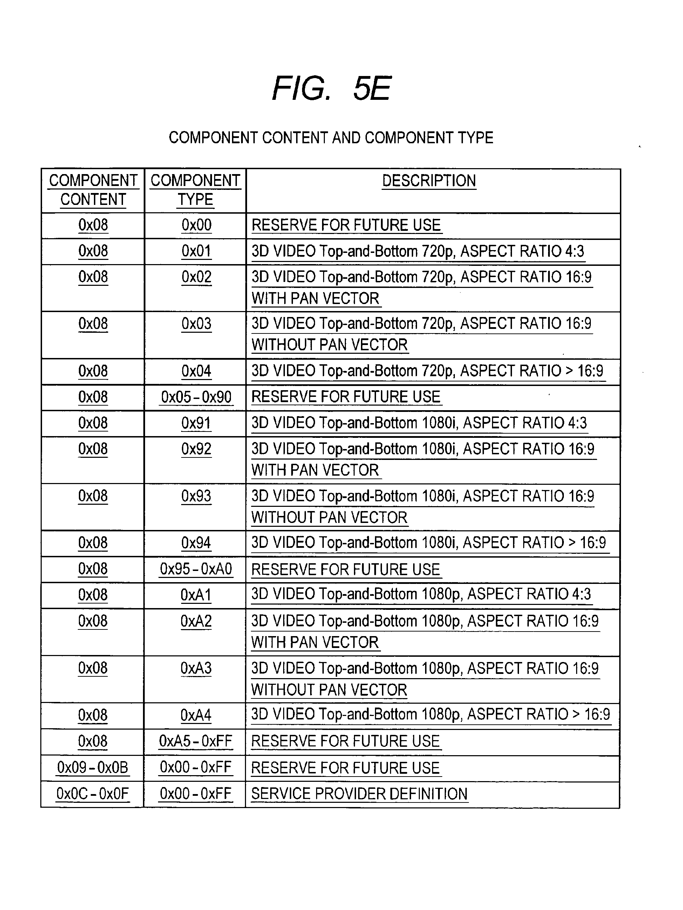

The meaning of the component descriptor is as follows. A descriptor_tag is an 8-bit field that describes a value by which the descriptor can be identified as the component descriptor. A descriptor_length is an 8-bit field that describes the size of the descriptor. A stream_component (component content) is a 4-bit field that indicates the type of stream (video, audio, data). This field is encoded according to Fig. 4. A component_type (component type) is an 8-bit field that specifies the type of component such as video, audio, or data. This filed is encoded according to Fig. 4. A component_tag (component tag) is an 8-bit field. The component stream of the service can refer to the description content (Fig. 5) indicated by the component descriptor by the 8-bit field.

In the program map section, each of the streams should have different values of the component tag. The component tag is a label for identifying the component stream, and has the same value as the component tag within the stream identification descriptor (for the case in which the stream identification descriptor is present in the PMT). A 24-bit field of ISO_639_language_code (language code) identifies the language of the component (audio or data), as well as the language of the character description included in this descriptor.

The language code is expressed by a three alphabetic character code defined in ISO 639-2 (22) . Each of the characters is encoded by 8 bits according to ISO 8859-1 (24), and is inserted into the 24-bit field in this order. For example, the Japanese language is expressed by the three alphabetic character code "jpn", and is encoded as follows: "0110 1010 0111 0000 0110 1110". Atext_char (component description) is an 8-bit field. A set of fields of the component description specifies the character description of the component stream.

Figs. 5A to 5E show examples of stream_content (component content) and component_type (component type), which are the elements of the component descriptor. The component content 0x01 shown in Fig. 5A indicates various video formats of the video stream compressed by MPEG2.

The component content 0x05 shown in Fig. 5B indicates various video formats of the video stream compressed by H.264 AVC. The component content 0x06 shown in Fig. 5C indicates various video formats of the 3D video stream compressed by the multi-view video encoding (e.g., H.264 MVC) method.

The component content 0x07 shown in Fig. 5D indicates various video formats of the Side-by-Side method stream of the 3D video that is compressed by MPEG2 or H.264 AVC. In this example, the component content values are the same in MPEG2 and H.264 AVC. However, it is also possible to set different values in MPEG2 and in H.264 AVC.

The component content 0x08 shown in Fig. 5E indicates various video formats of the Top-and-Bottom method stream of the 3D video that is compressed by MPEG2 or H.264 AVC. In this example, the component content values are the same in MPEG2 and H.264 AVC. However, it is also possible to set different values in MPEG2 and H.264 AVC.

As shown in Figs. 5D and 5E, the combination of stream_content (component content) and component_type (component type), which are the elements of the component descriptor, indicates the information on 3D video or not, 3D video method, resolution, and aspect ratio. With such a structure, even in the case of mixed 3D and 2D broadcasting, it is possible to transmit information of different video methods, including the 2D program/3D program identification, with a small transmission quantity.

In particular, the 3D video program is transmitted in such a way that multi-view images are included in a picture by using the transmission methods such as Side-by-Side and Top-and-Bottom, to transmit using the encoding methods, such as MPEG2 and H.264 AVC (except MVC), which have not been designated as multi-view video encoding methods. In such a case, it is difficult to discriminate between the picture including multi-view images for transmitting the 3D video program, and the normal one-view picture, only based on the stream_type (stream type) described above. Thus in this case, stream_content (component content) and component_type (component type) are combined to identify various types of video methods including 2D program/3D program identification of the particular program. Further, the component descriptor relating to the present program or future broadcasting program is distributed by EIT. The reception device obtains the EIT and can generate an electronic program guide (EPG). The EPG includes such information as 3D video or not, 3D video method, resolution, and aspect ratio. The reception device has an advantage of being able to display the information in the EPG.

As described above, the reception device 4 can recognize that the program currently received or the program to be received in the future is the 3D program by monitoring stream_content and component_type.

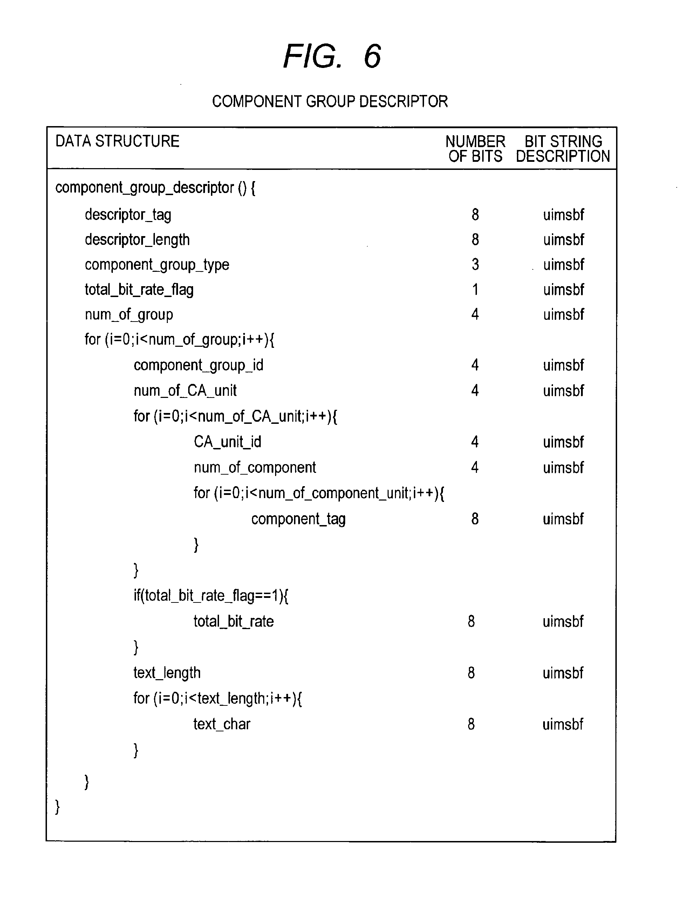

Fig. 6 shows an example of the structure of a component group descriptor which is one of the program information resources. The component group descriptor defines the combination of components in the event, and identifies the combination. In other words, the component group descriptor describes the grouping information of a plurality of components. This descriptor is placed in EIT.

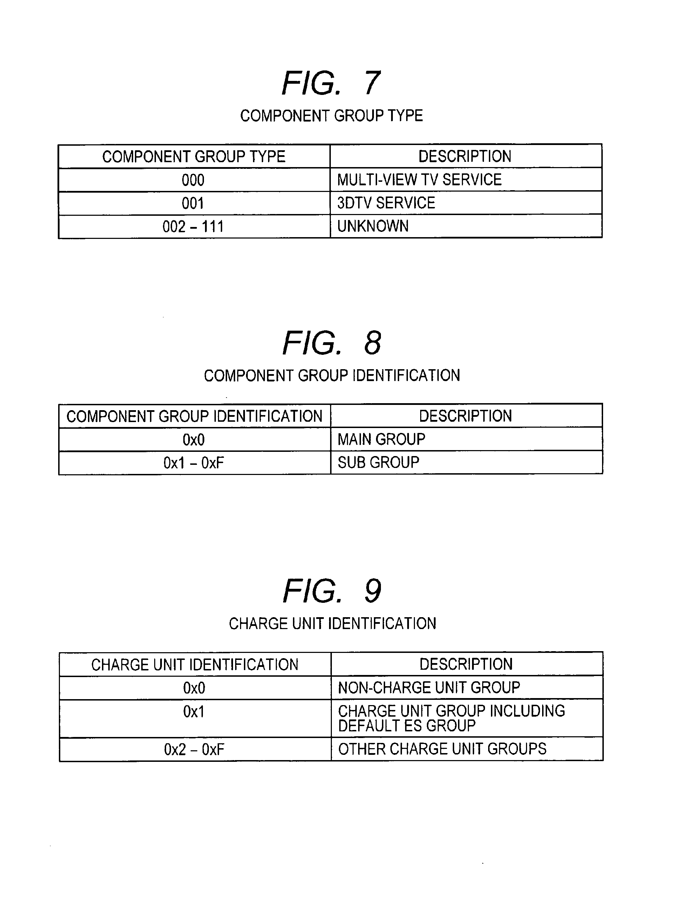

The meaning of the component group descriptor is as follows. A descriptor_tag is an 8-bit field that describes a value by which the descriptor can be identified as the component group descriptor. A descriptor_length is an 8-bit field that describes the size of the descriptor. A component_group_type (component group type) is a 3-bit field that indicates the group type of the component according to Fig. 7.

Here, 001 represents the 3DTV service, which is discriminated from 000 representing the multi-view TV service. Here, the multi-view TV service is the TV service that can display the 2D video with multiple views by switching between the views. For example, the multi-view video encoded video stream, or the stream of the encoding method that has not been designated as the multi-view video encoding method, is transmitted in such a way that multi-view images are included in a picture. In this case, the stream may be used not only for the 3D video program but also for the multi-view TV program. In this case, it may not be able to identify whether the stream including multi-view images is the 3D video program or the multi-view TV program, only based on the stream_type (stream type). In such a case, the identification by component_group_type (component group type) is effective. A total_bit_rate_flag (total bit rate flag) is a flag of one bit that indicates the description state of the total bit rate of the component group in the event. If the bit is "0", this indicates that the total bit rate field of the component group is not present in the particular descriptor. If the bit is "1", this indicates that the total bit rage field of the component group is present in the particular descriptor. A num_of_group (number of groups) is a 4 bit field that indicates the number of component groups in the event.

A component_group_id (component group identification) is a 4-bit filed that describes the component group identification according to Fig. 8. A num_of_CA_unit (number of charge units) is a 4-bit field that indicates the number of charge/non-charge units in the component group. A CA_unit_id (charge unit identification) is a 4-bit field that describes the charge unit identification to which the component belongs, according to Fig. 9.

A num_of component (number of components) is a 4-bit field that indicates the number of components belonging to the particular component group, and also belonging to the charge/non-charge unit indicated by the previous CA_unit_id. A component_tag (component tag) is an 8-bit field that indicates the value of the component tag belonging to the component group.

A total_bit_rate (total bit rate) is an 8-bit filed that describes the total bit rate of the components in the component group, by rounding up the transmission rate of the transport stream packet for each 1/4 Mbps . A text_length (component group description length) is an 8-bit filed that indicates the byte length of the following component group description. A text_char (component group description) is an 8-bit field. A set of character information fields describes the details of the component group.

As described above, the reception device 4 can recognize that the program currently received or to be received in the future is the 3D program by monitoring component_group_type.

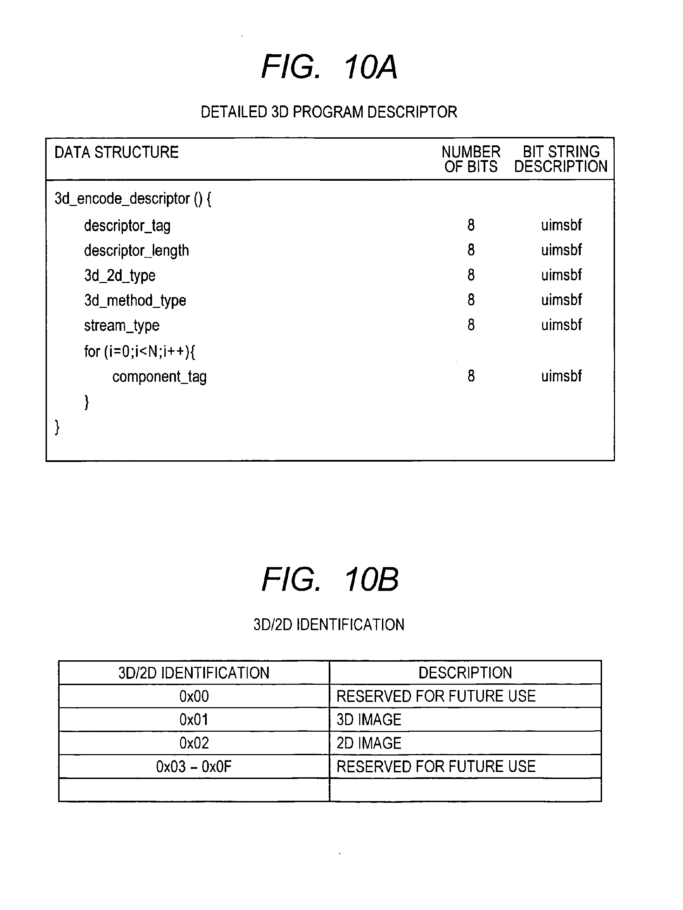

Next is an example of using a new descriptor for indicating information on the 3D program. Fig. 10A shows an example of the structure of a detailed 3D program descriptor which is one of the program information resources. The detailed 3D program descriptor indicates the detailed information when the program is the 3D program, and is used for 3D program determination in the reception device. This descriptor is placed in PMT and/or EIT. The detailed 3D program descriptor can be used in conjunction with stream_content (component content) and component_type (component type) for 3D video programs, which are described above with reference to Figs. 5C to 5E. However, it can also be designed to transmit the detailed 3D program descriptor instead of transmitting stream_content (component content) and component_type (component type) for 3D video programs. The meaning of the detailed 3D program descriptor is as follows. A descriptor_tag is an 8-bit field that describes a value by which this descriptor can be identified as the detailed 3D program descriptor (e.g., 0xE1). A descriptor_length is an 8-bit field that describes the size of this descriptor.

A 3d_2d_type (3D/2D type) is an 8-bit field that indicates the type of the 3D image/2D image in the 3D program according to Fig. 10B. This field contains information for identifying 3D image or 2D image in the 3D program such that, for example, the main program is 3D video but commercials or other content inserted into the program are 2D video. The purpose of this field is to prevent malfunction in the reception device, namely, the display (output) problem that occurs when the reception device performs the 3D process but the broadcast program is the 2D video. Here, 0x01 represents the 3D video and 0x02 represents the 2D video.

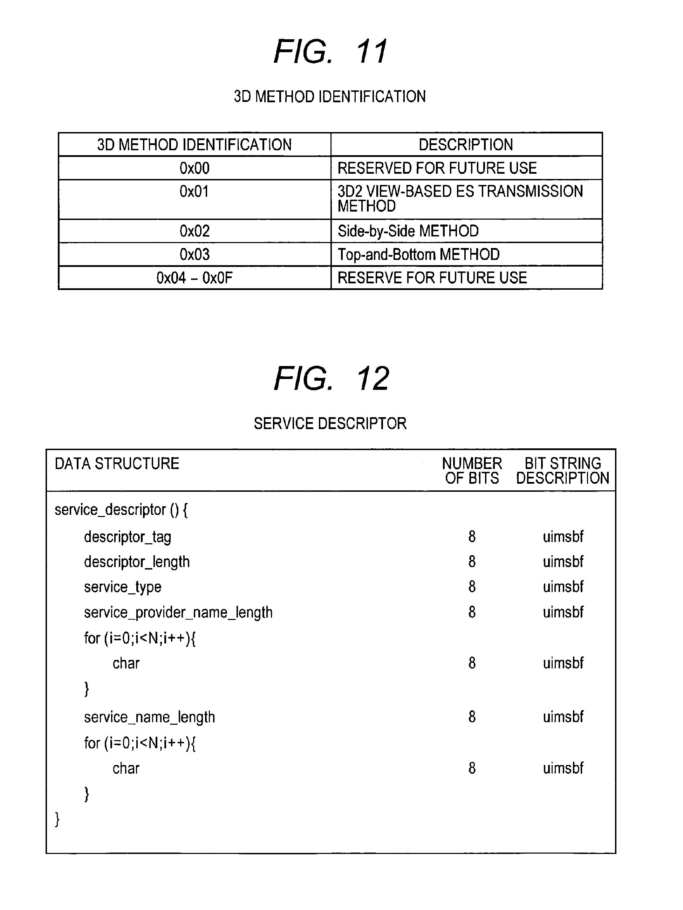

A 3d_method_type (3D method type) is an 8-bit field that indicates the 3D method type according to Fig. 11. Here, 0x01 represents the 3D2 view-based ES transmission method, 0x02 represents the Side-by-Side method, and 0x03 represents the Top-and-Bottom method. A steram_type (stream type) is an 8-bit field that indicates the ES type of the program according to the description in Fig. 3.

Note that it is also possible that the detailed 3D program descriptor is transmitted in the case of the 3D video program, and is not transmitted for the 2D video program. This makes it possible to identify whether the particular program is the 2D video program or the 3D video program only based on the presence of transmission of the detailed 3D program descriptor about the received program.

A component_tag (component tag) is an 8-bit field. The component stream of the service can refer to the description content (Fig. 5) specified by the 8-bit field of the component descriptor. In the program map section, each of the streams should have different values of the component tag. The component tag is the label for identifying the component stream, and has the same value as the value of the component tag in the stream identification descriptor (only for the case in which the stream identification descriptor is present in the PMT).

As described above, the reception device 4 can monitor the detailed 3D program descriptor and can recognize that the program current received or to be received in the future is 3D program if the detailed 3D program descriptor is present. In addition, it is also possible to recognize the type of the 3D transmission method when the program is the 3D program, and to identify 3D video or 2D video when they are both included in the particular program.

The following description is an example of identifying 3D video or 2D video for each service (sub-channel). Fig. 12 shows an example of the structure of a service descriptor which is one of the program information resources. The service descriptor is specified by a character code in conjunction with the sub-channel name and the provider name. The service descriptor is placed in SDT.

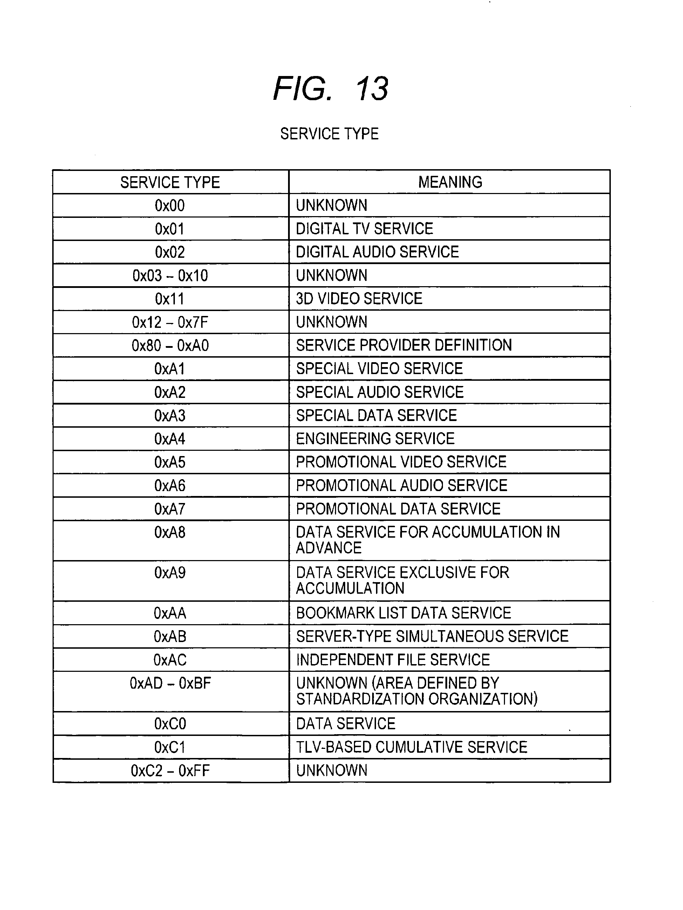

The meaning of the service descriptor is as follows. A service_type (service type) is an 8-bit field that indicates the type of the service according to Fig. 13. Here, 0x01 represents the 3D video service. A service_provider_name_length (service provider name length) is an 8-bit field that indicates the byte length of the following service provider name. A char (character code) is an 8-bit field. A set of character information fields indicates the service provider name or the service name. A service_name_length (service name length) is an 8-bit field that indicates the byte length of the following service name.

As described above, the reception device 4 can recognize that the service (sub-channel) is the 3D program channel by monitoring service_type. In this way, when the reception device 4 can identify whether the service (sub-channel) is the 3D video service or the 2D video service, for example, it is possible to display a message saying that the particular service is the 3D broadcast service, on the EPG display. However, even in the service of mainly broadcasting 3D video programs, for example, when the ad is 2D video, the service may have to transmit the 2D video. Thus, it is preferable to perform the identification of the 3D video service by service_type (service type) of the particular service descriptor, in conjunction with the 3D video program identification by the combination of stream_content (component content) and component_type (component type), the 3D video program identification by component_group_type (component group type), or the 3D video program identification by the detailed 3D program descriptor, all of which are described above. When the identification is performed by combining a plurality of information resources, it is possible to identify the 3D video broadcast service, and identify the case in which only a part of the program is 2D video. Such identification allows the reception device to define that the particular service is the "3D video broadcast service" in the EPG. In addition, even if 2D video program is present together with the 3D video program in the particular service, the reception device can switch the display control, and the like, between the 3D video program and the 2D video program, for example, upon receiving the program.

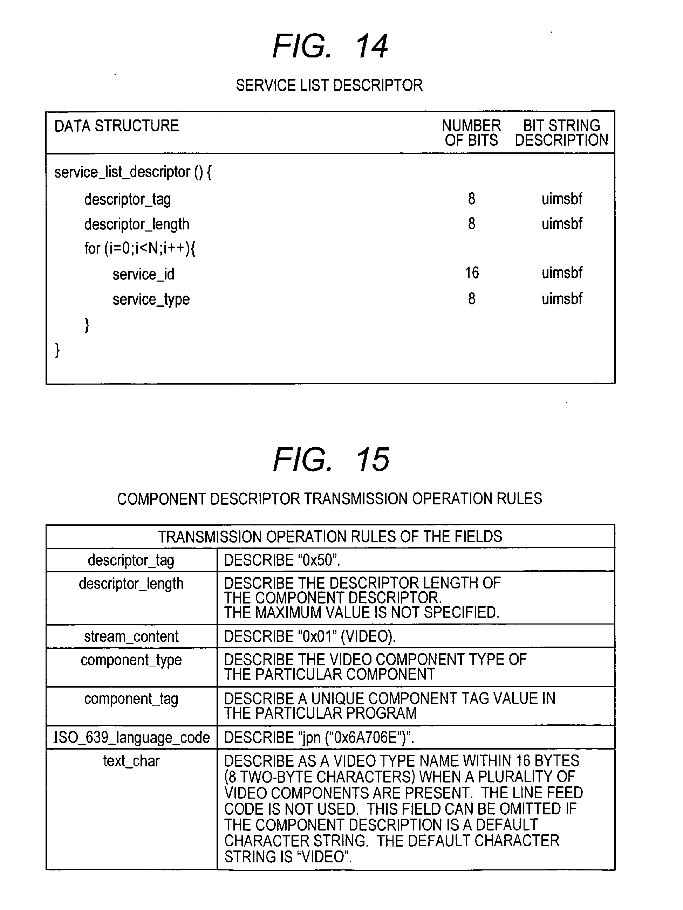

Fig. 14 shows an example of the structure of the service list descriptor which is one of the program information resources. The service list descriptor provides a service list of service identifications and service types. In other words, the service list descriptor describes the list of sub-channels and their types. This descriptor is placed in NIT.

The meaning of the service list descriptor is as follows. A service_id (service identification) is a 16-bit field that uniquely identifies the information service in a particular transport stream. The service identification is equal to a broadcast program number identification (program_number) in the corresponding program map section. A service_type (service type) is an 8-bit field that indicates the type of the service according to the description in Fig. 12.

As described above, it is possible to identify the 3D broadcast service or not from service_type (service type). This make it possible, for example, to display the grouping of only the 3D broadcast service on the EPG display, using the list of sub-channels and their types indicated by the particular service list descriptor.

As described above, the reception device 4 can recognize that the sub-channel is the 3D program channel by monitoring service_type.

The above examples of the descriptors show only representative members. However, it can also be considered that the other members are added, a plurality of members are grouped together, and one member is divided into a plurality of members having detailed information.

<Example of transmission operation rules of program information>

The component descriptor, the component group descriptor, the detailed 3D program descriptor, the service descriptor, and the service list descriptor are the information resources that are generated and added, for example, by the management information addition unit 16. These information resources are stored in PSI (for example, PMT) or SI (for example, EIT, SDT, or NIT) of MPEG-TS, and then transmitted from the transmission device 1.

Here is an example of transmission operation rules of program information in the transmission device 1.

Fig. 15 shows an example of the transmission operation rules of the component descriptor in the transmission device 1. A descriptor_tag describes "0x50" which means the component descriptor. A descriptor_length describes the descriptor length of the component descriptor. The maximum value of the descriptor length is not specified. A stream_content describes "0x01" (video).

A component_type describes the video component type of the particular component. The component type is set from Fig. 5. A component_tag describes a unique component tag value in the particular program. An ISO_639_language_code describes "jpn (Ox6A706E").

A text char describes the video type name with a size of 16 bytes (8 two-byte characters) or less if a plurality of video components are present. The line feed code is not used. If the component description is a default character string, this field can be omitted. The default character string is "video".

Note that one for each of all the video components having a value of component_tag in the range of 0x00 to 0x0F included in the event (program) should be transmitted without fail.

With the transmission operation performed in the transmission device 1 as described above, the reception device 4 can recognize that the program currently received or to be received in the future is the 3D program, by monitoring stream_content and component_type.

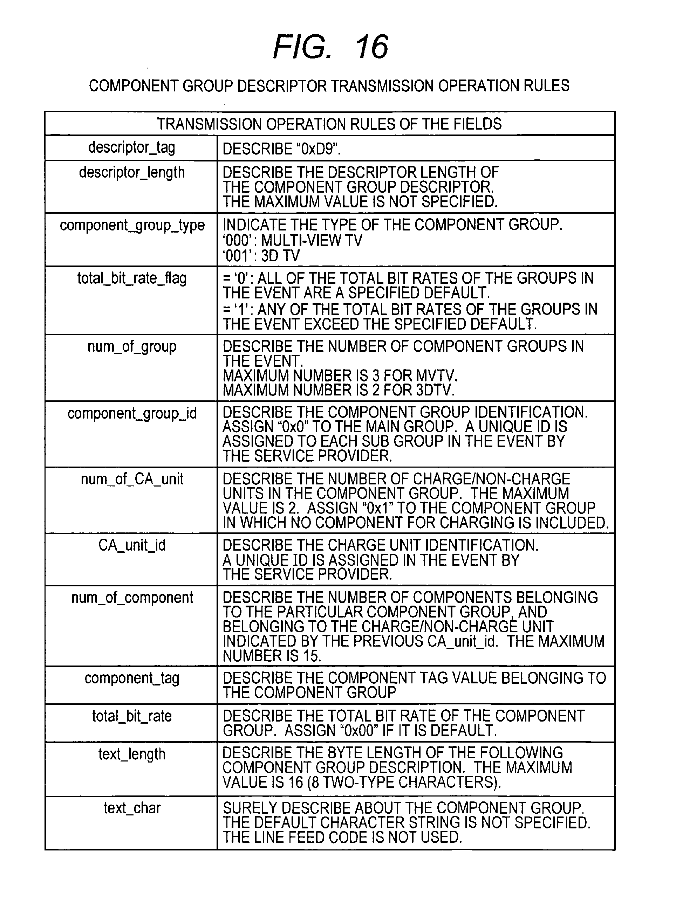

Fig. 16 shows an example of the transmission operation rules of the component group descriptor in the transmission device 1.

A descriptor_tag describes "0xD9" which means the component group descriptor. A descriptor_lentgth describes the descriptor length of the component group descriptor. The maximum value of the descriptor length is not specified. A component_group_type indicates the type of the component group. Here, '000' represents the multi-view television, and '001' represents the 3D television.

A total_bit_rate_flag indicates '0' if the total bit rates of the group in the event are all set to a defined default value, and indicates '1' if any of the total bit rate of the group in the event exceeds the defined default value.

A num_of_group describes the number of component groups in the event. The maximum number of component groups is set to 3 in the case of the multi-view television (MVTV), and to 2 in the case of the 3D television (3DTV).

A component_group_id describes the component group identification. Here, "0x0" is assigned in the case of the main group. Each sub group is uniquely assigned in the event by the broadcast service provider.

A num_of_CA_unit describes the number of charge/non-charge units in the component group. The maximum number is set to 2. When the particular component group does not include the component for charging, the number of charge/non-charge units is set to "0x1".

A CA_unit_id describes the charge unit identification. The charge unit identification is uniquely assigned in the event by the broadcast service provider. A num_of_component belongs to the particular component group, and describes the number of components belonging to the charge/non-charge unit indicated by the previous "CA_unit_id". The maximum value is set to 15.

A component_tag describes the value of the component tag belonging to the component group. A total_bit_rate describes the total bit rate in the component group. However, in the case of the default value, "0x00" is described.

A text_length describes the byte length of the following component group description. The maximum value is set to 16 (8 two-byte characters). A text_char surely describes the explanation of the component group. The default character string is not specified. Further, the line feed code is not used.

Note that component_group_type with '000' should be transmitted if the multi-view TV service is performed. Further, "component_group_type with 00 l' should be transmitted if the 3D TV service is provided.

With the transmission operation performed in the transmission device 1 as described above, the reception device 4 can recognize that the program currently received or to be received in the future is the 3D program by monitoring component_group_type.

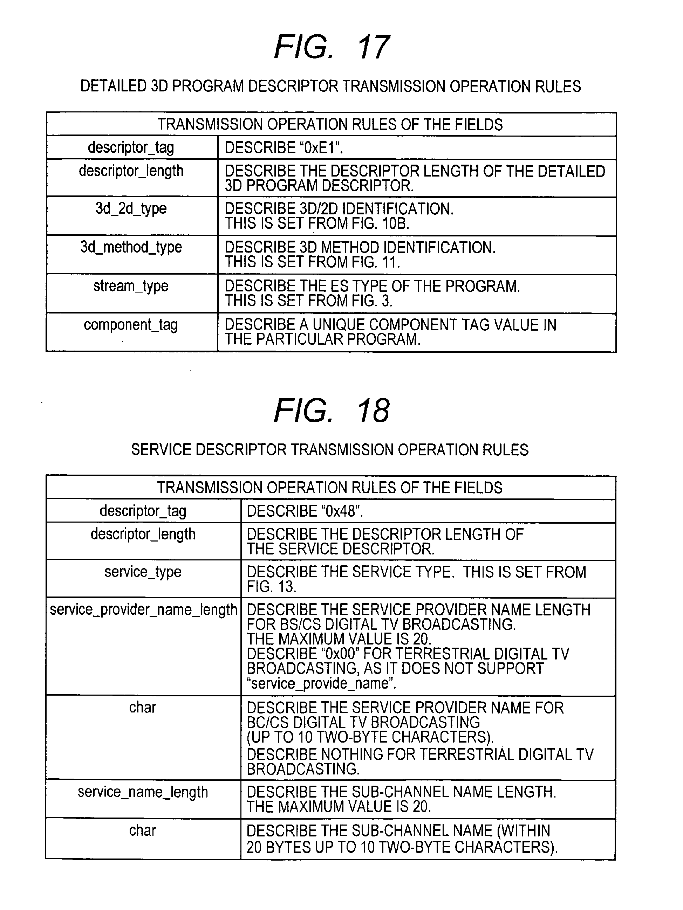

Fig. 17 shows an example of the transmission operation rules of the detailed 3D program descriptor in the transmission device 1. A descriptor_tag describes "0xEl" which means the detailed 3D program descriptor. A descriptor_length describes the descriptor length of the detailed 3D program descriptor. A 3d_2d_type describes the 3D/2D identification. This is set from Fig. 10B. A 3d_method_type describes the 3D method identification. This is set from Fig. 11. A stream_type describes the type of ES of the program. This is set from Fig. 3. A component_tag describes a unique value of the component tag in the particular program.

With the transmission operation performed in the transmission device 1 as described above, the reception device 4 can monitor the detailed 3D program descriptor, and can recognize that the program currently received or to be received in the future is the 3D program if the detailed 3D program descriptor is present.

Fig. 18 shows an example of the transmission operation rules of the service descriptor in the transmission device 1. A descriptor_tag describes "0x48" which means the service descriptor. A descriptor_length describes the descriptor length of the service descriptor. A service_type describes the service type.

The service type is set from Fig. 13. A service_provider_name_length describes the length of the service provider name for the BS/CS digital TV broadcasting. The maximum value is set to 20. The terrestrial digital TV broadcasting does not support service_provider_name, and "0x00" is described in this field.

A char describes the service provider name for the BS/CS digital TV broadcasting (up to 10 two-byte characters). No description is given for the terrestrial digital TV broadcasting. A service_name_length describes the sub-channel name length. The maximum value is set to 20. A char describes the sub-channel name within 20 bytes and within 10 two-byte characters. Note that only one should be set to the target sub-channel without fail.

With the transmission operation performed in the transmission device 1 as described above, the reception device 4 can recognize that the sub-channel is the 3D program channel by monitoring service_type.

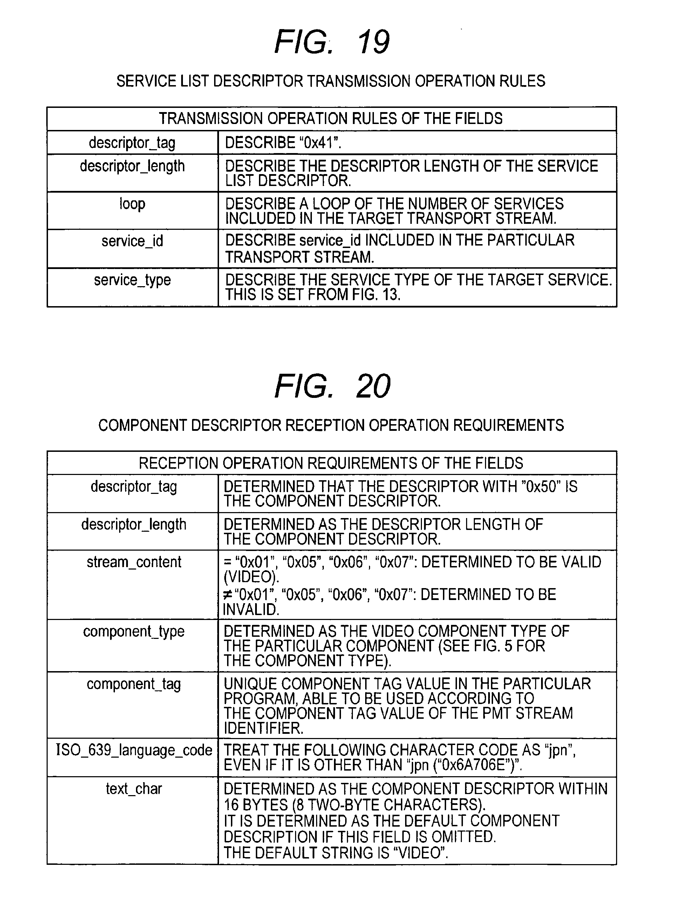

Fig. 19 shows an example of the transmission rules of the service list descriptor in the transmission device 1. A descriptor_tag describes "0x41" which means the service list descriptor. A descriptor_length describes the descriptor length of the service list descriptor. A loop describes a loop of the number of services included in the target transport stream.

A service_id describes service_id included in the particular transport stream. A service_type describes the service type of the target service. This is set from Fig. 13. Note that the service type should be set to the TS loop in NIT without fail.

With the transmission operation performed in the transmission device 1 as described above, the reception device 4 can recognize that the sub-channel is the 3D program channel by monitoring service_type.

These are the examples of program information transmission in the transmission device 1. When the program is switched from 2D program to 3D program, the following messages are displayed on the first screen where the 3D program is started, for example, using telop: "3D program goes on air", "ware 3D viewing glasses when viewing in the 3D display", "viewing in the 2D display is recommended when getting eyes strain or feeling sick", and "viewing 3D program for a long time may cause tired eyes or sick". The messages are inserted into the video of the 3D program generated in the transmission device 1, and then transmitted to the reception device 4. In this way, the reception device 4 can provide a warning about 3D program viewing to the user viewing the 3D program.

<Hardware configuration of the reception device>

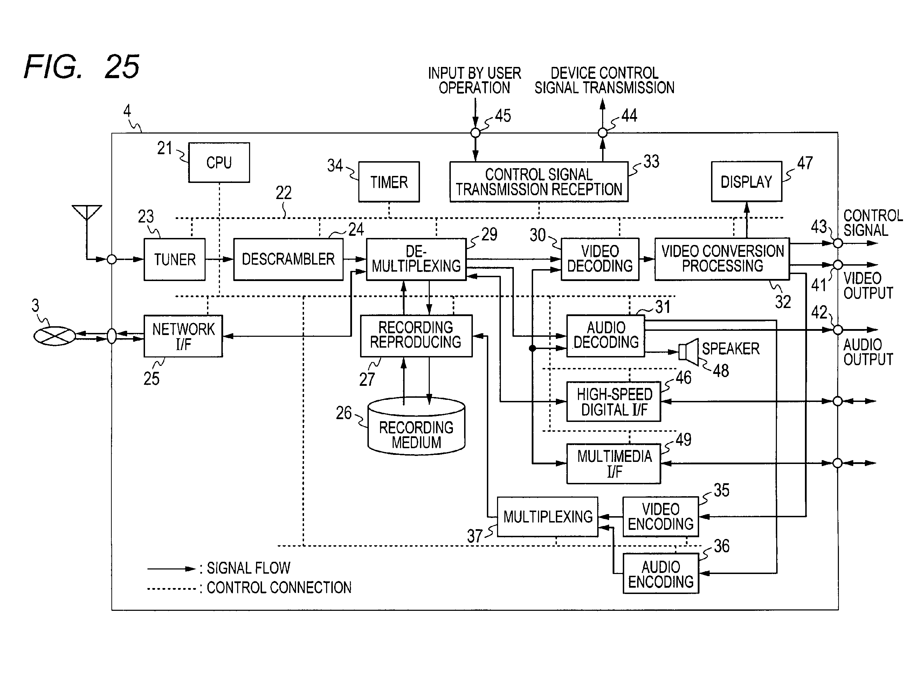

Fig. 25 is a diagram showing an example of the hardware configuration of the reception device 4 of the system shown in Fig. 1. Reference numeral 21 denotes a central processing unit (CPU) for controlling the entire reception device. Reference numeral 22 denotes a generic bus for transmitting control and information between the CPU 21 and the individual units in the reception device. Reference numeral 23 denotes a tuner for receiving broadcast signals transmitted from the transmission device 1 through broadcast transmission networks such as radio transmission (satellite, terrestrial) and cable, selecting a specific frequency channel to perform demodulation and error correction processes, and outputting a multiplexed packet such as MPEG2-Transport Stream (hereinafter also referred to as "TS"). Reference numeral 24 denotes a descrambler for decoding data scrambled by a scrambler 13. Reference numeral 25 denotes a network interface (I/F) for transmitting and receiving information to and from network, and transmitting and receiving various types of information and MPEG2-TS between the Internet and the reception device. Reference numeral 26 denotes a recording medium such as, for example, hard disk drive (HDD) or flash memory mounted in the reception device 4, or removable HDD, disk-shaped recoding medium, or flash memory. Reference numeral 27 denotes a recoding reproducing unit for controlling the recording medium 26, to control recording of signals to the recording medium 26 and reproducing of signals from the recording medium 26. Reference numeral 29 denotes a demultiplexing unit for demultiplexing signals multiplexed in MPEG2-TS or other formats into signals of video elementary stream (ES), audio ES, or program information. Here, ES means each of compressed and encoded video/audio data. Reference numeral 30 denotes a video decoder for processing video in an appropriate format according to the input video signal, such as decoding the video ES to a video signal, and then outputting the processed video signal. Reference numeral 31 denotes an audio decoder for processing audio in an appropriate format according to the input audio signal, such as decoding the audio ES into an audio signal, and then outputting the processed audio signal to a speaker 48 or from an audio output 42. Reference numeral 32 denotes a video conversion processing unit for converting the video signal (3D or 2D video signal) decoded by the video decoder 30 into a predetermined format by the conversion process described below, according to an instruction of the CPU. Further, the video conversion processing unit 32 superimposes a display such as an on screen display (OSD) generated by the CPU 21 onto the video signal, performing 2D3D conversion described below, and outputting the processed video signal on a display 47 or to a video signal output 41 or to a video encoder 35. At the same time, the video conversion processing unit 32 also outputs a synchronization signal or control signal (used for device control) corresponding to the format of the processed video signal, from the video signal output 41 or from a control signal output 43. Reference numeral 33 denotes a control signal transmission reception unit for receiving an operation input (for example, a key code from the remote controller transmitting an Infrared Radiation (IR) signal) from a user operation input unit 45, and transmitting a device control signal (for example, IR) generated by the CPU 21 or the video conversion processing unit 32 to an external device, from a device control signal transmission unit 44. Reference numeral 34 denotes a timer including a counter and maintaining the current time. Reference numeral 35 denotes a video encoder for encoding the input video signal into a video ES. Reference numeral 36 denotes an audio encoder for encoding the input audio signal into an audio ES. Reference numeral 37 denotes a multiplexing unit for multiplexing the input video ES, audio ES, and program information into MPEG2-TS or other formats. Reference numeral 46 denotes a high-speed digital I/F, such as serial interface or IP interface, for performing encryption or other necessary processes with respect to the TS reconfigured by the demultiplexing unit, and then outputting the processed TS to the outside. Or the high-speed digital I/F 46 decodes the TS received from the outside, and then inputs the decoded TS to the demultiplexing unit 29. Reference numeral 47 denotes a display for displaying the 3D video and 2D video of the video that is decoded by the video decoder 30 and converted by the video conversion processing unit 32. Reference numeral 48 denotes a speaker for outputting audio based on the audio signal decoded by the audio decoder. Reference numeral 49 denotes a multimedia interface (for example, HDMI) for inputting and outputting the video signal and audio signal between the external device and the video decoder 30 or the audio decoder 31. The reception device 4 is mainly formed by these units. Even in the case of performing 3D display on the display, the synchronization signal and the control signal are output from the control signal output 43 or the device control signal transmission terminal 44 according to the necessity.

HDMI or High-Definition Multimedia Interface is a registered trademark of LLC, which is one of the digital interfaces of video/audio signals.

In the figure, the signal flow connecting the individual blocks is schematically shown as a single signal path. However, a plurality of signals may be simultaneously transmitted and received by a plurality of signal lines, time-division multiplexing, and the like. For example, a plurality of video signals can be transmitted between the demultiplexing unit 29 and the video decoder 30. This allows for decoding of a plurality of video ESs by the video decoder, enabling processes such as two-screen display and simultaneous decoding for video recording and viewing.

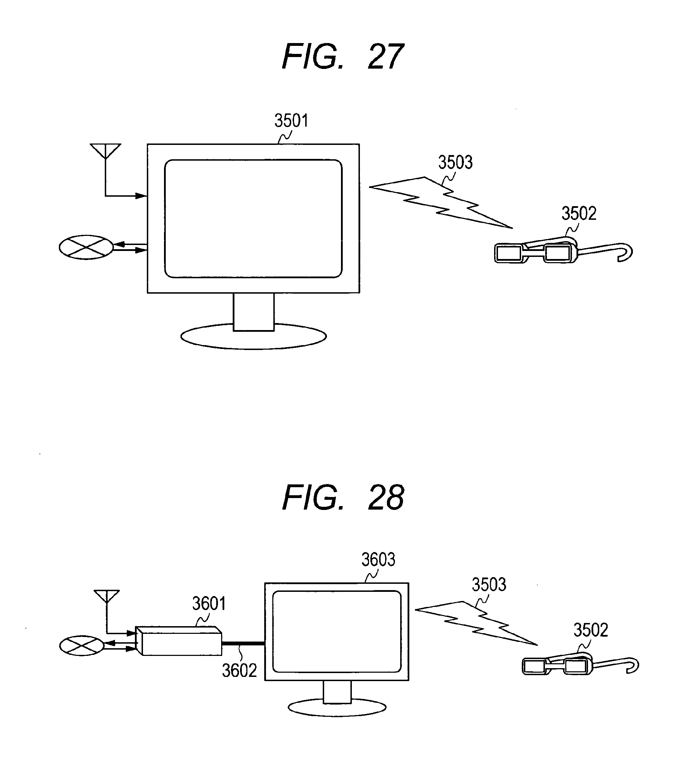

Examples of the system configuration including the reception device, a viewing device, and a 3D viewing assist device (for example, 3D glasses) are shown in Fig. 27 and Fig. 28. Fig. 27 shows an example of the system configuration in which the reception device and the viewing device are formed into one unit. Fig. 28 shows an example of the system configuration in which the reception device and the viewing device are separately configured.

In Fig. 27, reference numeral 3501 denotes a display device including the reception device 4 and capable of displaying 3D video and outputting audio. Reference numeral 3503 denotes a 3D viewing assist device control signal (for example, an IR signal) output from the display device 3501. Reference numeral 3502 denotes a 3D viewing assist device. In the example of Fig. 27, the video signal is displayed on the video display included in the display device 3501, and the audio signal is output from the speaker included in the display device 3501. Further, the display device 3501 includes an output terminal for outputting the 3D viewing assist device control signal that is output from the output part of the device control signal 44 or the control signal 43.

Note that the above description assumes that the display device 3501 and the 3D viewing assist device 3502, which are shown in Fig. 27, perform display by the active shutter method described below. However, when the display device 3501 and the 3D viewing assist device 3502 are designed to implement a 3D video display device by a polarization splitter described below, it is enough that the 3D viewing assist device 3502 can split polarized light so that different images are input to the left and right eyes. In this case, the display device 3501 may not output the 3D viewing assist device control signal 3503 that is output to the 3D viewing assist device 3502 from the output part of the device control signal 44 or from the output part of the control signal 43.

In Fig. 28, reference numeral 3601 denotes a video audio output device including the configuration of the reception device 4. Reference numeral 3602 denotes a transmission path (for example, HDMI cable) for transmitting video/audio/control signals. Reference numeral 3603 represents a display for displaying and outputting video and audio signals input from the outside.

In this case, the video signal, the audio signal, and the control signal that are output from the video output 41, the audio output 42, and the control signal output 43 of the video audio output device 3601 (reception device 4), respectively, are converted into a transmission signal in a format suitable for the transmission line 3602, for example, a format defined in the HDMI standard. Then, the transmission signal is input to the display 3603 through the transmission line 3602. Upon receiving the transmission signal, the display 3603 decodes the received signal into the original video, audio, and control signals. Then, the display 3603 outputs video and audio, while outputting the 3D viewing assist device control signal 3503 to the 3D viewing assist device 3502.

Note that the above description assumes that the display device 3603 and the 3D viewing assist device 3502, shown in Fig. 28, perform display by the active shutter method. However, when the display device 3603 and the 3D viewing assist device 3502, shown in Fig. 28, are designed to implement the 3D video display device by a polarization splitter described below, it is enough that the 3D viewing assist device 3502 can split polarized light so that different images are input to the left and right eyes. In this case, the display device 3603 may not output the 3D viewing assist device control signal 3603 to the 3D viewing assist device 3502.

Note that part of the configuration requirements 21 to 46 shown in Fig. 25 may be formed from one or a plurality of LSIs. Further, part of the function of the configuration requirements 21 to 46 shown in Fig. 25 may be realized by software.

<Functional block diagram of the reception device>

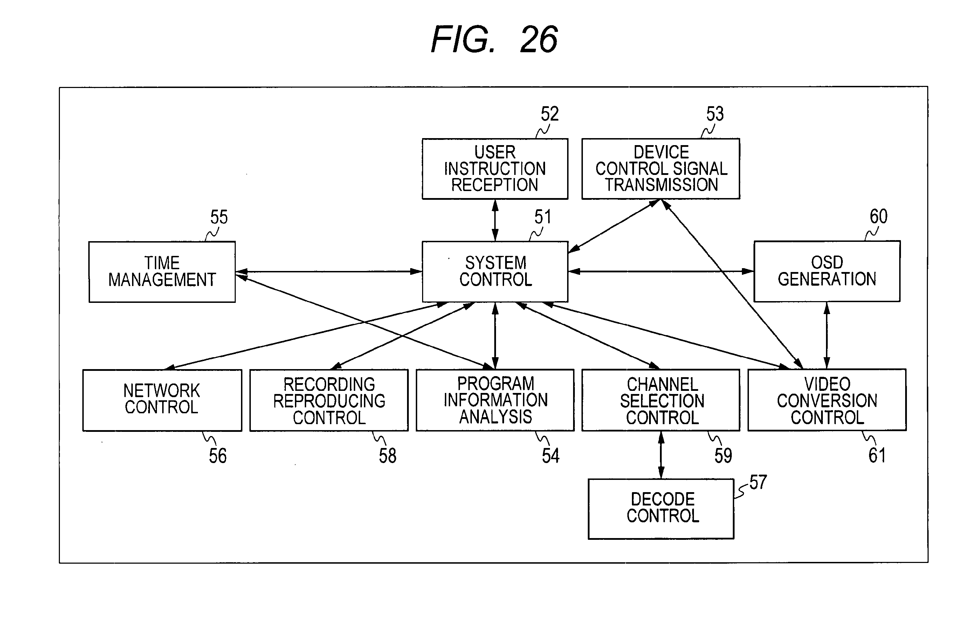

Fig. 26 shows an example of the functional block configuration of the process within the CPU 21. Here, each functional block is present, for example, as a module of the software executed by the CPU 21. The information or data transfer as well as the control instruction are performed between the modules by any of the methods such as, for example, message passing, function call, and event transmission.

Further, each module transmits and receives information to and from each hardware component in the reception device 4 through the generic bus 22. Note that the relationship lines (arrows) in the figure mainly show the information processing involved in this description. However, there are also processes requiring communication methods and communications between other modules. For example, a channel selection control unit 59 obtains program information necessary for selecting a channel from a program information analysis unit 54 accordingly.

Next, the functions of the individual functional blocks will be described. A system control unit 51 manages the state of the individual modules as well as the user instruction state, and controls and instructs the individual modules. A user operation input signal is received by the control signal transmission reception unit 33. Then, a user instruction reception unit 52 interprets the received user operation input signal. Then, the user instruction reception unit 52 transmits the user instruction to the system control unit 51. A device control signal transmission unit 53 instructs the control signal transmission reception unit 33 to transmit a device control signal according to the instructions of the system control unit 51 or the other modules.

The program information analysis unit 54 obtains program information from the demultiplexing unit 29. Then, the program information analysis unit 54 analyzes the content to provide the necessary information to each module. A time management unit 55 obtains a time offset table (TOT) included in TS from the program information analysis unit 54, to manage the current time. In addition, the time management unit 55 provides notification of the alarm (notification of the arrival of the specified time) and notification of the one shot timer (notification of the elapse of a given time) by using the counter of the timer 34.

A network control unit 56 controls the network I/F 25 to obtain various types of information and TS, from specific Unique Resource Locater (URL) and specific Internet Protocol (IP) addresses. A decode control unit 57 controls the video decoder 30 and the audio decoder 41 to start/stop decoding, and obtain information included in the stream.

A recoding reproducing control unit 58 controls the recording reproducing unit 27 to read a signal from the recording medium 26 in a specific location of a specific content in an arbitrary reading format (in general, playback, fast-forward, rewind, and pause). Further, the recoding reproducing control unit 58 controls the recoding medium 26 to record the signal input to the recoding reproducing unit 27.

The channel selection control unit 59 controls the tuner 23, the descrambler 24, the demultiplexing unit 29, and the decode control unit 57 to receive a broadcast and records the broadcast signal. Or the channel selection control unit 59 provides control of reproduction from the recording medium, and output of video and audio signals. The detailed description of the broadcast reception operation, the broadcast signal recording operation, and the reproducing operation from the recording medium will be provided below.

An OSD generation unit 60 generates OSD data including a specific message. Then the OSD generation unit 60 instructs the video conversion control unit 61 to superimpose the generated OSD data on the video signal and to output the video signal. Here, the OSD generation unit 60 generates the OSD data with different views in the left and right eyes. The OSD generation unit 60 requires the video conversion control unit 61 to perform 3D display based on the OSD data for the left and right eyes. In this way, the message display and the like is performed in 3D.

The video conversion control unit 61 controls the video conversion processing unit 32 to convert the video signal, which is input to the video conversion processing unit 32 from the video decoder 30, into 3D or 2D video according to the instruction of the system control unit 51. Then, the video conversion control unit 61 superimposes the OSD input from the OSD generation unit 60 on the converted video signal. Further, the video conversion control unit 61 applies processes to the video (such as scaling, PinP, 3D display), or performs 2D3D conversion according to the necessity. Then, the video conversion control unit 61 displays the processed video on the display 47 or output to the outside. The conversion of the 3D video/2D video into a specific format as well as the 2D3D conversion method in the video conversion processing unit 32 will be described in detail below. The functional blocks provide the functionality described above.

<Broadcast reception>

The control procedure and signal flow for the broadcast reception will be described. First, the system control unit 51 receives a user instruction (for example, a press of the CH button on the remote controller) that indicates the broadcast reception of a specified channel (CH) from the user instruction reception unit 52. Then, the system control unit 51 instructs the channel selection control unit 59 to perform channel selection according to the CH specified by the user (hereinafter after referred to as specified CH).

Upon receiving the instruction, the channel selection control unit 59 instructs the tuner 23 to control the reception of the specified CH (channel selection to the specified frequency band, broadcast signal decoding, forward error correction), to output TS to the descrambler 24.

Next, the channel selection control unit 59 instructs the descrambler 24 to descramble the TS to output the descrambled TS to the demultiplexing unit 29. Then, the channel selection control unit 59 instructs the demultiplexing unit 29 to demultiplex the input TS, to output the demultiplexed video ES to the video decoder 30, and to output the demultiplexed audio ES to the audio decoder 31.

Further, the channel selection control unit 59 instructs the decode control unit 57 to decode the video ES and the audio ES that are input to the video decoder 30 and the audio decoder 31, respectively. Upon receiving the decoding instruction, the decode control unit 31 controls the video decoder 30 to output the decoded video signal to the video conversion processing unit 32. Also, the decode control unit 31 controls the audio decoder 31 to output the decoded audio signal to the speaker 48 or the audio output 42. In this way, the channel selection control unit 59 controls the output of the video and audio of the CH specified by the user.

Further, in order to display a CH banner (OSD that displays the CH number, the program name, the program information, and the like) at the time of channel selection, the system control unit 51 instructs the OSD generation unit 60 to generate and output the CH banner. Upon receiving the instruction, the OSD generation unit 60 transmits the generated CH banner data to the video conversion control unit 61. The video conversion control unit 61 receives the data, and controls the CH banner to be superimposed on the video signal and output. In this way, the message display is performed in the channel selection.

In addition to the above, the system control unit 51 also controls the high-speed digital I/F 46 to control input/output of signals, acquisition of the information through communication with the external device, and cooperation with the external device.

<Broadcast signal recording>

Next, the recording control of broadcast signal and the signal flow will be described. In order to record a specified CH, the system control unit 51 instructs the channel selection control unit 59 to select the specified CH and output the signal to the recording reproducing unit 27.

Upon receiving the instruction, similarly to the broadcast reception process described above, the channel selection control unit 59 instructs the tuner 23 to receive the specified CH. Then, the channel selection control unit 59 instructs the descrambler 24 to descramble the MPEG2-TS received from the tuner 23. Also, the channel selection control unit 59 instructs the demultiplexing unit 29 to output the input from the descrambler 24, to the recording reproducing unit 27.

Further, the system control unit 51 instructs the recording reproducing control unit 58 to record the input TS to the recording reproducing unit 27. Upon receiving the instruction, the recording reproducing control unit 58 performs the encryption or other necessary processes of the signal (TS) that is input to the recording reproducing unit 27. Further, the recording reproducing control unit 58 generates supplemental enhancement information (content information of the recorded CH, such as program information and bit rate) necessary for recording and reproduction. Also, the recording reproducing control unit 58 records to the management data (recording content ID, recording position on the recording medium 26, recording format, encryption information, and the like). After that, the recording reproducing control unit 58 writes the MPEG2-TS, the supplemental enhancement information, and the management data into the recording medium 26. This is the process of recording the broadcast signal. This recording method is hereinafter referred to as TS recording, in order to discriminate from the method of converting first and recording after, which will be described below.

Here is an example of a method of first performing processes of the video and audio included in the broadcast signal (for example, video audio signal format conversion, video compression, 2D3D conversion of video), and then recording (hereinafter referred to as convert recording). In this convert recording, it is assumed that the recording is performed in the other path. The system control unit 51, similarly to the case of the TS recording, instructs the channel selection control unit 59 to output the specified CH. Upon receiving the instruction, similarly to the broadcast reception process, the channel selection control unit 59 instructs the tuner 23 to control the reception of the specified CH. Further, the channel selection control unit 59 instructs the descrambler 24 to descramble the MPEG2-TS received from the tuner 23. Also, the channel selection control unit 59 instructs the demultiplexing unit 29 to demultiplex the TS input from the descrambler 24, and output to the video decoder 30 and to the audio decoder 31. The video decoder 30 decodes the video signal and outputs the video to the video conversion processing unit 32. Here, the video conversion processing unit 32 performs necessary conversion processes (video signal format conversion, 2D3D conversion process, and the like), and outputs the signal to the video encoder 35. The video encoder 35 receives the output from the video conversion processing unit 32. Then, the video encoder 35 encodes the input signal, and outputs the video ES to the multiplexing unit 37. Similarly, the audio signal is decoded by the audio decoder 31 and output to the audio encoder 36. Then, the audio encoder performs necessary processes of the audio signal, and output the audio ES to the multiplexing unit 37. In this way, the video ES and the audio ES are input to the multiplexing unit 37. Then, the multiplexing unit 37 obtains additional information (for example, program information) necessary for multiplying, from the demultiplexing 29, and from the CPU 21 according to the necessity. Then, the multiplexing unit 37 multiplexes the obtained information with the video ES and the audio ES, and outputs to the recording reproducing unit 27.

Then, similarly to the case of the TS recording, the system control unit 51 instructs the recording reproducing control unit 58 to record the input TS from the multiplexing unit 37 to the recording reproducing unit 27. Upon receiving the instruction, the recording reproducing control unit 58 performs necessary processes such as encryption of the signal (TS) input to the recording reproducing unit 27. Further, the recording reproducing control unit 58 generates supplemental enhancement information (content information of the recoded CH, such as program information and bit rate) necessary for recording and reproduction. Also, the recording reproducing control unit 58 records to the management data (recorded content ID, recording position on the recording medium 26, recording format, encryption information, and the like). After that, the recording reproducing control unit 58 writes the MPEG2-TS, the supplemental enhancement information, and the management data into the recording medium 26. This is the process of recoding the converted broadcast signal.

<Reproduction from the recording medium>

Next, the process of reproducing from the recording medium will be described. In order to reproduce a specific program, the system control unit 51 instructs the recording reproducing control unit 58 to reproduce the specific program. At this time, as the instruction, the system control unit 51 indicates the content ID and the reproduction start position (for example, the top of the program, the position of 10 minutes from the top, the continuation of the previous one, the position of 100 Mbytes from the top). Upon receiving the instruction, the recording reproducing control unit 58 controls the recoding reproducing unit 27 to read the signal (TS) from the recoding medium 26 based on the supplemental enhancement information and the management data, perform necessary processes such as encryption and decoding, and then output the TS to the demultiplexing unit 29.

Further, the system control unit 51 instructs the channel selection control unit 59 to output the video/audio of the reproduced signal. Upon receiving the instruction, the channel selection control unit 59 controls outputting the input from the recording reproducing unit 27 to the demultiplexing unit 29. Then, the channel selection control unit 59 instructs the demultiplexing unit 29 to demultiplex the input TS, output the demultiplexed video EX to the video decoder 30, and output the demultiplexed audio ES to the audio decoder 31.

Further, the channel selection control unit 59 instructs the decode control unit 57 to decode the video ES and the audio ES that are input to the video decoder 30 and the audio decoder 31, respectively. Upon receiving the decoding instruction, the decode control unit 57 controls the video decoder 30 to output the decoded video signal to the video conversion processing unit 32. Further, the decode control unit 57 also controls the audio decoder 31 to output the decoded audio signal to the speaker 48 or the audio output 42. This is the process of reproducing the signal from the recording medium.

<3D video display method>

As the 3D video display method that can be applied to the present invention, there are several approaches to allow the human eyes to view images as if they are a solid state, by generating the images for the left and right eyes to make the left and right eyes feel different.

One approach is the active shutter method for generating parallax between the left-eye and right-eye views of the glasses worn by the user, by using liquid crystal shutters to alternatively block the light through the left and right glasses, and displaying the left eye image and the right eye image synchronized with the light through the left and right glasses.

In this case, the reception device 4 outputs a synchronization signal and a control signal from the control signal output 43 and the device control signal transmission terminal 44, to the active shutter glasses worn by the user. Further, the reception device 4 outputs a video signal from the video signal output 41 to the external 3D video display device. Thus, the left-eye view and right-eye view images are alternatively displayed on the external 3D video display device. Or the same 3D images are displayed on the display 47 included in the reception device 4. In this way, the user wearing the active shutter glasses can view the 3D video on the 3D video display device or on the display 47 included in the reception device 4.

Another approach is the polarization method for generating parallax between the left-eye and right-eye views of the glasses worn by the user. This is achieved by applying a film orthogonal with the linearly polarized light or a linear polarization coating on the left and right glasses, or by applying a film in which the polarization axis (circularly polarized light) is rotated in the reverse direction or a circular polarization coating on the left and right glasses, and simultaneously outputting the left-eye view and right-eye view images by different polarizations corresponding to each of the polarizations of the left and right eye glasses.

In this case, the reception device 4 outputs the video signal from the video signal output 41 to the outside 3D video display device. The 3D video display device displays the left-eye view and right-eye view images in different polarization states. Or the reception device 4 displays the left-eye view and right-eye view images on the display 47 included in the reception device 4. In this way, the user wearing the polarization glasses can view the 3D video on the 3D video display device or on the display 47 included in the reception device 4. Note that the polarization method allows 3D viewing without the reception device 4 transmitting the synchronization signal and control signal to the polarization glasses. Thus, there is no need to output the synchronization signal and the control signal from the control signal output part 43 and the device control signal transmission terminal 44, respectively.

In addition to the methods described above, a color separation method can also be used. The color separation method is the method of separating the left-eye view and right-eye view images by colors. Further, it is also possible to use a parallax barrier method for generating 3D images by using the parallax barrier that can be seen naked eyes.

It is to be understood that the 3D display methods according to the present invention is not limited to the particular methods.

<Detailed example of the 3D program determination method using program information or other information>

As an example of the 3D program determination method, as described above, there is the method that determine 3D program or not by obtaining information for determining whether a particular signal is a newly included 3D program, from various types of tables and descriptors included in the program information of the broadcast signal and reproduction signal.

The determination of 3D program is done by checking the information for determining whether the 3D program is newly included in the component descriptor and the component group descriptor, which are described in the tables such as PMT and EIT [schedule basic/schedule extended/present/following], or by checking the detailed 3D program descriptor which is the new descriptor for 3D program determination, or by checking the information for determining whether the 3D program is newly included in the service descriptor and the service list descriptor described, which are described by the tables such as NIT and SDT. The information is added to the broadcast signal in the transmission device described above, and then is transmitted. In the transmission device, for example, the information is added to the broadcast signal by the management information addition unit 16.

The use of each of the tables as follows. For example, PMT describes only the current program information and has high reliability, although the future program information may not be checked. In the case of EIT [schedule basic/schedule extended] , it is possible to obtain not only the current program information but also the future program information. However, it takes long time until the reception is completed, requiring large storage areas to be maintained, and having low reliability due to uncertainty regarding future events. The EIT [following] can be used to obtain the program of the next broadcast time, and is suitable for the application to this embodiment. Further, the EIT [present] can be used to obtain the current program information, so that it is possible to obtain the information that is different from the information obtained from the PMT.

Next is a detailed description of an example of the process of the reception device 4 that relates to the program information shown in Figs. 4, 6, 10, 12, and 14, which is transmitted from the transmission device 1.

Fig. 20 shows an example of the process for the fields of the component descriptor in the reception device 4.

If "descriptor_tag" is "0x50", it is determined that the particular descriptor is the component descriptor. From "descriptor_length", it is determined as the descriptor length of the component descriptor. If "stream_content" is "0x01", "0x05", "0x06", or "0x07", it is determined that the particular descriptor is valid (video). If this field is not "0x01", "0x05", "0x06", or "0x07", it is determined that the particular descriptor is invalid. If "stream_content" is "0x01", "0x05", "0x06", or "0x07", the following process is performed.

From "component_type", it is determined as the video component type of the particular component. The component type is assigned to any of the values in Fig. 5. From the content of this field, it is possible to determine whether the particular component is of the 3D video program.

A "component_tag" represents a unique component tag value in the particular program, which can be used according to the component tag value of the PMT stream identifier.

An "ISO_639_language_code" treats the following character code as "jpn (0x6A706E)" even if it is other than "jpn".

In "text_char", it is determined as the component description with 16 bytes (8 two-byte characters). The default character string is "video".

As described above, the component descriptor can determine the type of the video component constituting the event (program), and can be used for video component selection in the reception device.

Note that the video components with the component_tag values of 0x00 to 0x0F are considered as distinct targets. The video components with the other component_tag values are not considered as distinct targets, and thus should not be the target of the component selection function and the like.

Further, there may be a case in which the component description is not the same as the actual component due to a mode change or other reason in the event (program). (The component_type of each component descriptor describes a typical component type of the particular component. This value is not changed in real time in the mode change during the program.)

Further, the component_type described according to the component descriptors is referred to in order to determine the default maximum_bit_rate, when a digital copy control descriptor is omitted in the particular event (program). The digital copy control descriptor is not only the information for the control of the copy generation in digital recording devices, but also the description of the maximum transmission rate.

As described above, there is the effect that the reception device 4 can recognize that the program currently received or to be received in the future is the 3D program, by monitoring stream_content and component_type by processing the fields of the particular descriptor in the reception device 4.

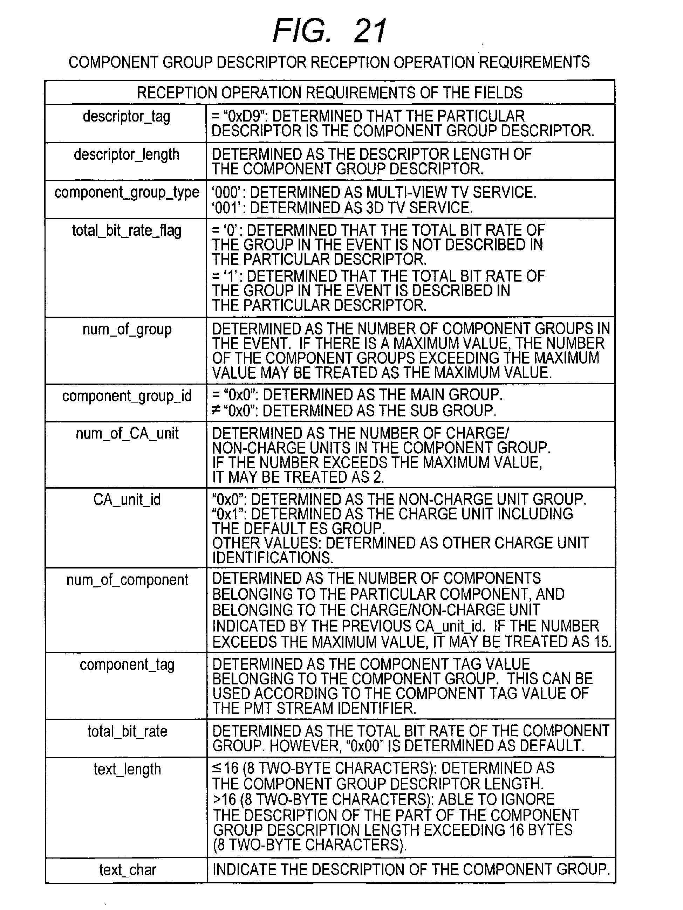

Fig. 21 shows an example of the processes of the fields of the component group descriptor in the reception device 4.

If "descriptor_tag" is "0xD9", it is determined that the particular descriptor is the component group descriptor. From "descriptor_length", it is determined as the descriptor length of the component group descriptor.

If "component_group_type" is '000', it is determined as the multi-view television service. If '001' , it is determined as the 3D television service.

If "total_bit_rate_flag" is '0', it is determined that the total bit rate of the group in the event (program) is not described in the particular descriptor. If '1', it is determined that the total bit rate of the group in the event (program) is described in the particular descriptor.

From "num_of_group", it is determined as the number of component groups in the event (program) . If there is a maximum value, the number exceeding the maximum value may be treated as the maximum value.

If "component_group_id" is "0x0", it is determined as the main group. If other than "0x0", it is determined as the sub group.

From "num_of_CA_unit", it is determined as the number of charge/non-charge units in the component group. If the value exceeds the maximum value, it may be treated as 2.

If "CA_unit_id" is "0x0", it is determined as the non-charge unit group. If "0x1", it is determined as the charge unit including the default ES group. If other than "0x0" and "0x1", it is determined as the other charge unit identifications.

From "num_of_component", it is determined as the number of components belonging to the particular component group, and also belonging to the charge/non-charge unit indicated by the previous CA_unit_id. If the value exceeds the maximum value, it may be treated as 15.

From "component_tag", it is determined as the component tag value belonging to the component group, and can be used according to the component tag value of the PMT stream identifier.

From "total_bit_rate", it is determined as the total bit rate in the component group. If the value is "0x00", it is determined as default.

If "text_length" is 16 (8 two-byte characters) or less, it is determined as the component group descriptor. If "text_length" is more than 16 (8 two-byte characters), it is possible to ignore the description of the part of the component group description length exceeding 16 (8 two-byte characters) .

A "text_char" indicates the description about the component group. Note that from the location of the component group descriptor of component_group_type='000' , it is possible to determine that the multi-view television service is performed in the particular event (program). This can be used in the process for each component group.

Further, from the location of the component group descriptor of component_group_type='001', it is possible to determine that the 3D television service is performed in the particular event (program). This can be used in the process for each component group.

The default ES group of each group should be described in the component loop placed in the top of the CA_ unit loop without fail.

In the main group (component_group_id=0x0) :

- If the default ES group of the group is the non-charge target, free_CA_mode=0 is set. In this case, the component loop of CA_unit_id=0x1 should not be set;

- If the default ES group of the group is the charge target, free_CA_mode=1 is set. In this case, the component loop of CA_unit_id=0x1 should be set and described without fail;

Further, in the sub group (component_group_id>0x0):

- The same charge unit as the main group, or only the non-charge unit can be set to the sub group;
- If the default ES group of the group is the non-charge target, the component loop of CA_unit_id=0x0 is set and described;

- If the default ES group of the group is the charge target, the component loop of CA_unit_id=0x1 is set and described.

As described above, the reception device 4 can recognize that the program currently received or to be received in the future is the 3D program, by monitoring component_group_type by processing the fields of the particular descriptor in the reception device 4.

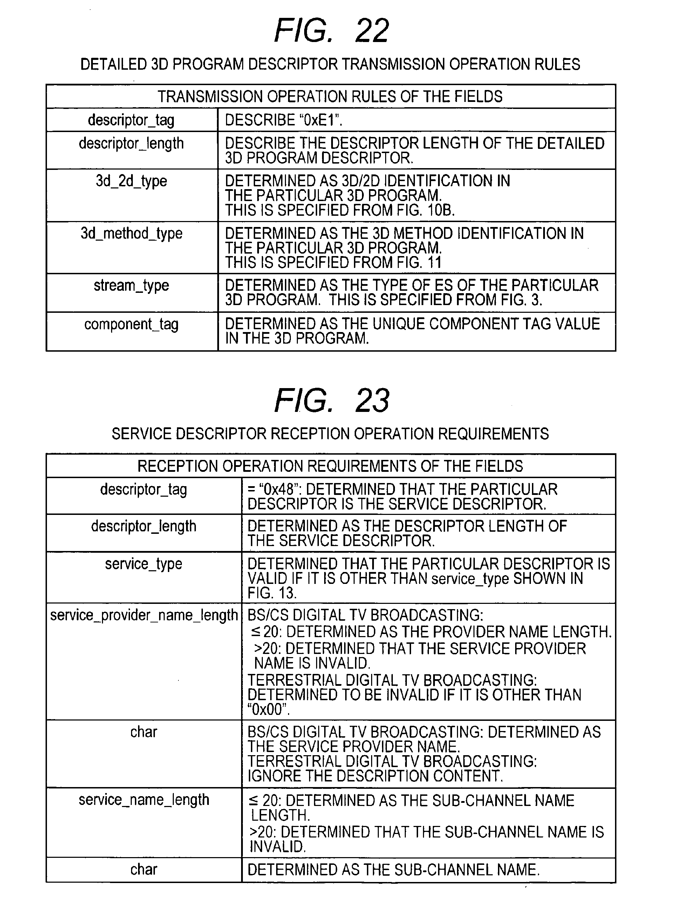

Fig. 22 shows an example of the processes of the fields of the detailed 3D program descriptor in the reception device 4.

If "descriptor_tag" is "0xE1", it is determined that the particular descriptor is the detailed 3D program descriptor. From "descriptor_length", it is determined as the descriptor length of the detailed 3D program descriptor. From "3d_2d_type", it is determined as the 3D/2D identification in the particular 3D program. This is specified from Fig. 10B. From "3d_method_type", it is determined as the 3D method identification in the particular 3D program. This is specified from Fig. 11.

From "stream_type", it is determined as the ES type of the particular 3D program. This is specified from Fig. 3. From "component_tag", it is determined as the unique component tag value in the particular 3D program. This can be used according to the component tag value of the PMT stream identifier.

Note that the reception device 4 can also be designed to determine whether the particular program is the 3D video program by the presence of the detailed 3D program descriptor itself. In other words, in this case, if the detailed 3D program descriptor is not present, the particular program is determined as 2D video program. On the other hand, if the detailed 3D program descriptor is present, the particular program is determined as 3D video program.

As described above, the reception device 4 can recognize that the program currently received or to be received in the future is the 3D program if the detailed 3D program descriptor is present, by monitoring the detailed 3D program descriptor by processing the fields of the particular descriptor in the reception device 4.

Fig. 23 shows an example of the processes of the fields of the service descriptor. If "descriptor_tag" is "0x48", it is determined that the particular descriptor is the service descriptor. From "descriptor_length", it is determined as the descriptor length of the service descriptor. From "service_type", it is determined that the particular descriptor other than the service_type shown in Fig. 13 is invalid.

If "service_provider_name_length" is 20 or less, it is determined as the service provider name length in the case of the reception of BS/CS digital television broadcasting. If it is more than 20, it is determined that the service provider name is invalid. In the case of the reception of terrestrial digital television broadcasting, all values other than "0x00" are determined to be invalid.

From "char", it is determined as the service provider name in the case of the reception of BS/CS digital television broadcasting. In the case of the reception of terrestrial digital television broadcasting, the description content is ignored. If "service_name_length" is 20 or less, it is determined as the sub-channel name. If it is more than 20, it is determined that the sub-channel name is invalid.

From "char", it is determined as the sub-channel name. Note that if the SDT in which the descriptor is placed according to the example of the transmission operation rules described above with reference to Fig. 18, the basic information of the target service is determined to be invalid.

As described above, the reception device 4 can recognize that the sub-channel is the 3D program channel by monitoring service_type by processing the fields of the particular descriptor in the reception device 4.

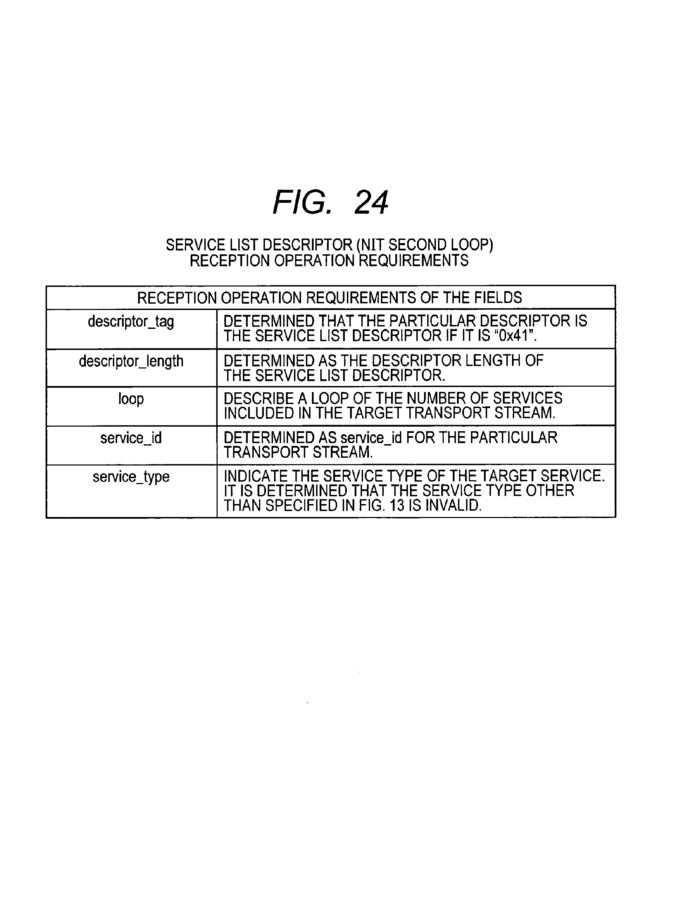

Fig. 24 shows an example of the processes of the fields of the service list descriptor in the reception device 4. If "descriptor_tag" is "0x41", it is determined that the particular descriptor is the service list descriptor. From "descriptor_length", it is determined as the descriptor length of the service list descriptor.

A "loop" describes a loop of the number of services included in the target transport stream. From "service_id", it is determined as service_id for the target transport stream. A "service_type" indicates the service type of the target service. Any service other than the services specified in Fig. 13 is determined to be invalid.

As described above, the service list descriptor can be determined as the information of the transport streams included in the target network.

As described above, the reception device 4 can recognize that the sub-channel is the 3D program channel by monitoring service_type by processing the fields of the particular descriptor in the reception device 4.

Next, the descriptors in the tables will be described in detail. First, the type of the ES can be determined as described with reference to Fig. 3 by the type of the data in "stream_type" described in the second loop (the loop for each ES) of the PMT. If there is a description indicating that the on-air stream is the 3D video in this field, the particular program is determined as the 3D program. For example, If there is stream_type with 0x1F that indicates the sub bit stream (another view) of the multi-view video encoded (e.g. H.264/MVC) stream, it is determined that the program is the 3D program.

Further, instead of using "stream_type", a new 2D/3D identification bit can be assigned to a reserved area in the PMT, to determine the 3D program or 2D program in this area.

Similarly in the case of the EIT, the determination can be performed by assigning a new 2D/3D identification bit to the reserved area.

When the 3D program is determined by the component descriptor placed in the PMT and/or EIT, as described above with reference to Figs. 4 and 5, the type indicating the 3D video is assigned to "component_type" of the component descriptor (for example, Figs. 5C to 5E). If there is a program whose "component_type" indicates 3D, it is possible to determine that the particular program is the 3D program. (For example, this is done by assigning the values in Figs. 5C to 5E, and by checking if the value is present in the program information of the target program.)

The determination method using the component descriptor placed in EIT is as follows. As described above with reference to Figs. 6 and 7, a description indicating the 3D service is assigned to the value of component_group_type. If the value of component_group_type represents the 3D service, it can be determined as the 3D program. (For example, the bit field "001" assigns the 3DTV service and the like, to check whether the value is present in the program information of the target program.)

The determination method using the detailed 3D program descriptor placed in the PMT and/or EIT is as follows. When the target program is determined as the 3D program as described above with reference to Figs. 10 and 11, the determination can be performed based on the content of 3d_2d_type (3D/2D type) of the detailed 3D program descriptor. If the detailed 3D program descriptor for the received program is not transmitted, it is determined that the particular program is the 2D program. If the 3D method is such that the reception device can support the 3D method type (3d_method_type) included in the detailed 3D program descriptor, it can be determined that the next program is the 3D program. In this case, the analysis process of the descriptor is complicated. However, the reception device can stop the operation of the message display process and the recording process with respect to the 3D program that the reception device may not support.

In the information of service_type included in the service descriptor placed in SDT and in the service descriptor list placed in NIT, 0x01 is assigned to the 3D video service as described above with reference to Figs. 12, 13, and 14. If the particular descriptor obtains certain program information, it can be determined that the program is the 3D program. In this case, the determination is not performed for each program, but for each service (CH, sub-channel) . Thus, this method may not be used for the 3D program determination of the next program in the same sub-channel. However, there is an advantage that the information can be easily obtained because it is not for each program.

There is also a method of obtaining the program information through a dedicated communication line (broadcast signal or the Internet). In this case also, the 3D program determination can be performed using the start time of the program, CH (broadcast sub-channel, URL or IP address), and the identifier indicating if a particular program is the 3D program.

The above description focused on the various types of information (the information included in the tables and the descriptors) used for determining 3D program or not for each service (CH) or each program. However, all the data are not necessarily transmitted in the present invention. Only the necessary information can be transmitted according to the broadcast system. It is possible to determine 3D video or not for each service (CH) or each program by checking each specific information of the information resources. Further, it is also possible to determine 3D video or not for each service (CH) or each program by combining a plurality of information resources. When the determination is performed by combining a plurality of information resources, it is possible to determine that the service is 3D video broadcast service but some programs are 2D video. When this determination can be achieved, for example, the reception device can clearly indicate that the particular service is "3D Broadcast Service" on the EPG. In addition, even if the particular service includes not only 3D video programs but also 2D video programs, the reception device can switch the display control, and the like, between the 3D video programs and the 2D video programs at the time when the broadcast is received.

In addition to the determination method using the program information as in the above example, for example with respect to the signal input from the outside, there is a method for determining whether the video is 2D video or 3D video from the control signal transmitted in conjunction with the video signal. For example, in the case of an HDMI signal, information for determining whether the transmitted video signal is 3D or 2D, or determining the type of the signal (for example, "Side-by-Side" method or "Top-and-Bottom" method) is included in the control signal transmitted in conjunction with the video. Thus, it is possible to determine whether the video signal is 2D or 3D based on the information. If the control signal is not included, the video signal may be determined as 2D.

When the video is determined as 3D program by the 3D program determination method described above, and, for example, if the 3D component specified in Figs. 5C to 5E can be appropriately processed (displayed and output) in the reception device 4, the particular video is processed (reproduced, displayed, output) in 3D. On the other hand, if the 3D component may not be appropriately processed (reproduced, displayed, output) in the reception device 4 (for example, when the reception device does not have the 3D video reproduction function corresponding to the specified 3D transmission method), or if the ES of either of the views is not transmitted in the 3D2 view-based ES transmission method, the particular video may be processed (reproduced, displayed, output) in 2D.

<3D reproduction/output/display process of the 3D content in the 3D2 view-based transmission method>

Next, the process for reproducing the 3D content (digital content including 3D video) will be described. Here, first described is the reproduction process in the 3D2 view-based ES transmission method in which a main view video ES and a sub view video ES are present in a single TS as shown in Fig. 35. First, it is assumed that the user instructs switching to 3D output/display (for example, by pressing the "3D" key on the remote controller). In this case, the user instruction reception unit 52 receives the key code. Then, the user instruction reception unit 52 instructs the system control unit 51 to switch to the 3D video. (Note that the following process is the same in the case of switching to 3D output/display on the conditions other than the user's instruction to switch the 3D content to the 3D output/display with respect to the 3D2 view-based ES transmission method.) Next, the system control unit 51 determines whether the current program is the 3D program by the method described above.

If the current program is the 3D program, the system control unit 51 first instructs the channel selection control unit 59 to output the 3D video. Upon receiving the instruction, the channel selection control unit 59 first obtains the packet ID (PID) as well as the encoding method (for example, H.264/MVC, MPEG2, H.264/AVC) with respect to the main view video ES and the sub-view video ES, respectively, from the program information analysis unit 54. Next, the channel selection control unit 59 controls the demultiplexing unit 29 to demultiplex both the main view video ES and the sub-view video ES and output to the video decoder 30.

Here, for example, the channel selection control unit 59 controls the demultiplexing unit 29 so that the main view video ES is the first input of the video decoder and the sub-view video ES is the second input of the video decoder. Then, the channel selection control unit 59 transmits the information that the first input of the video decoder 30 is the main view video ES and the second input of the video decoder 30 is the sub view video ES, to the decode control unit 57 together with the decoding methods of the respective ESs. At the same time, the channel selection control unit 59 instructs the decode control unit 57 to decode the main view video ES and the sub view video ES.

In order to decode the 3D program in which the encoding method is different between the main view video ES and the sub view video ES as in the combination examples 2 and 4 of the 3D2 view-based ES transmission method shown in Fig. 35, it is preferable that the video decoder 30 has a plurality of types of decoding functions so as to correspond to the respective encoding methods.

In order to decode the 3D program in which the encoding method is the same between the main view video ES and the sub view video ES as in the combination examples 1 and 3 of the 3D2 view-based ES transmission method shown in Fig. 35, the video decoder 30 can only have a decoding function corresponding to one encoding method. In this case, the video decoder 30 can be realized at a low cost.

Upon receiving the instruction, the decode control unit 57 decodes the main view video ES and the sub view video ES by the method corresponding to the encoding methods of the respective ESs. Then, the decode control unit 57 outputs the left-eye and right-eye image signals to the video conversion processing unit 32. Here, the system control unit 51 instructs the video conversion control unit 61 to perform the 3D output process. The video conversion control unit 61 receives the instruction from the system control unit 51. Then, the video conversion control unit 61 controls the video conversion processing unit 32 to output the video signal from the video output 41, or to display the 3D video on the display 47 included in the reception device 4.

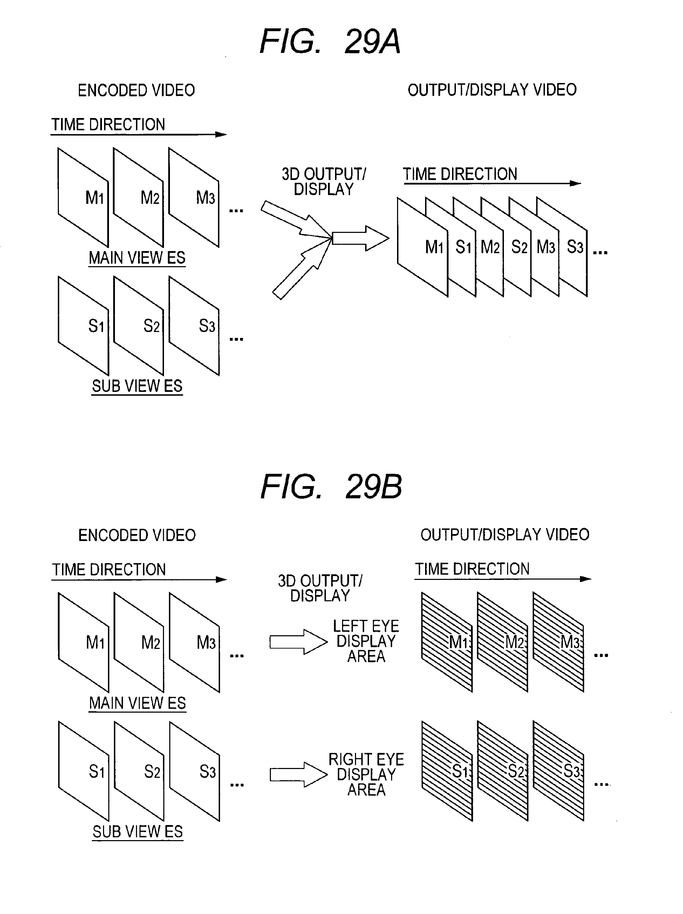

The 3D production/output/display method will be described with referenced to Figs. 29A and 29B.

Fig. 29A is a view showing the reproduction/output/display method corresponding to the output/display of the frame sequential method for alternately displaying and outputting the left and right view images of the 3D content based on the 3D2 view-based transmission method. The frame array (M1, M2, M3 and so on) on the left upper side of the figure represents a plurality of frames included in the main view (left eye) video ES of the content based on the 3D2 view-based ES transmission method. The frame array (S1, S2, S3, and so on) on the left lower side of the figure represents a plurality of frames included in the sub view (right eye) video ES of the content based on the 3D2 view-based ES transmission method. The video conversion processing unit 32 alternately outputs/displays the frames of the respective input main view (left eye) and sub view (right eye) video signals as shown in the frame array (M1, S1, M2, S2, M3, S3, and so on) on the right side of the figure. This output/display method makes the best use of the resolution that can be displayed on the display with respect to the left and right view frames. As a result, a high-resolution 3D display can be achieved.

When the method of Fig 29A is used in the system configuration of Fig. 28, the video signal is output as described above. At the same time, a synchronization signal is also output so as to be able to determine the main view video signal and the sub view video signal, from the control signal 43. The external video output device receives the video signals and the synchronization signal, and can output the main view (left eye) video and the sub view (right eye) video by synchronizing the synchronization signal. In addition, the external video output device can performed the 3D display by transmitting the synchronization signal to the 3D viewing assist device. Note that the synchronization signal output from the external video output device may be generated in the external video output device.

Further, in the system configuration shown in Fig. 27, when the video signals are displayed on the display 47 of the reception device 4 by the method of Fig. 29A, the synchronization signal is output from the device control signal transmission terminal 44 through the device control signal transmission unit 53 and the control signal transmission reception unit 33. Then, the 3D display is performed by controlling the external 3D viewing assist device (for example, active shutter glasses switching on and off).

Fig. 29B is a view showing the reproduction/output/display method corresponding to the output and display of the method for displaying the left and right view images of the 3D content based on the 3D2 view-based ES transmission method, to different areas of the display. This process decodes the 3D content by the video decoder 30, and converts the video by the video conversion processing unit 32. Here, the left and right view images are displayed in different areas of the display. This is achieved, for example, by a method of displaying the odd and even lines of the display as the main view (left eye) display area and the sub view (right eye) display area, respectively. However, the display area may not be defined by the lines. When the display has different pixels for each of the views, the display areas can be defined by the combination of a plurality of pixels for the main view (left eye), and by the combination of a plurality of pixels for the sub view (right eye). For example, the display device using the polarization method can output the images with different polarization states corresponding to the polarization states of the left and right eyes of the 3D viewing assist device. In such an output/display method, the resolution that can be displayed on the display with respect to the left and right views, is lower than the method of Fig. 29A. However, the main view (left eye) image and the sub view (right eye) image can be simultaneously output/displayed, so that there is no need to alternately display the images. Thus, the 3D display can be achieved with less fluctuation than the method of Fig. 29A.

Note that when the method of Fig. 29B is used in both system configurations of Figs. 27 and 28, the polarization splitting glasses are preferred for the 3D viewing assist device. There is especially no need to perform electronic control. In this case, the 3D viewing assist device can be provided at a lower cost.

<2D output/display process of the 3D content based on the 3D2 view-based ES transmission method>

Next described is the operation for 2D output/display of the 3D content based on the 3D2 view-based ES transmission method. It is assumed that the user instructs switching to 2D video (for example, by pressing the "2D" key on the remote controller). Upon receiving the key code, the user instruction reception unit 52 instructs the system control unit 51 to switch the signal to the 2D video. (Note that the following process is the same in the case of switching to the 2D output/display on the conditions other than the user's instruction to switch the 3D content of the 3D2 view-based ES transmission method to the 2D output/display.) Next, the system control unit 51 first instructs the channel selection control unit 59 to output the 2D video.

Upon receiving the instruction, the channel selection control unit 59 obtains the PID of ES (the main view ES, or the ES with the default tag) for the 2D video, from the program information analysis unit 54. Then, the channel selection control unit 59 controls the demultiplexing unit 29 to output the ES to the video decoder 30. Then, the channel selection control unit 59 instructs the decode control unit 57 to decode the ES. In other words, in the 3D2 view-based ES transmission method, the sub stream or ES is different between the main view and the sub view. For this reason, only the sub stream or ES of the main view is decoded.

Upon receiving the instruction, the decode control unit 57 controls the video decoder 30 to decode the ES and then output the video signal to the video conversion processing unit 32. Here, the system control unit 51 controls the video conversion control unit 61 to output the video in 2D. The video conversion control unit 61 receives the instruction from the system control unit 51. Then, the video conversion control unit 61 controls the video conversion processing unit 32 to output the 2D video signal from the video output terminal 41, or to display the 2D video on the display 47.

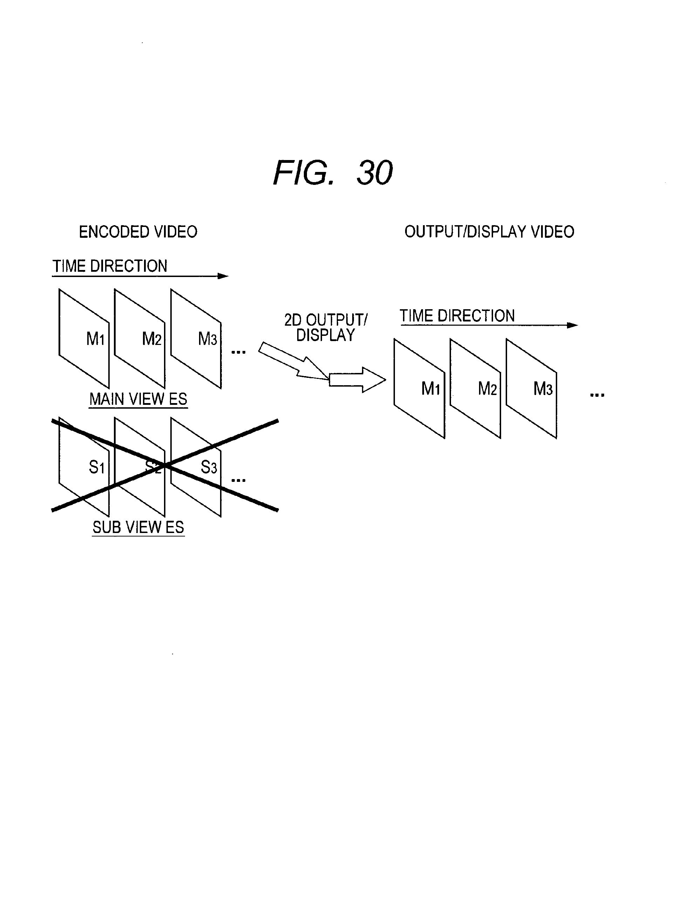

The 2D output/display method will be described with reference to Fig. 30. The configuration of the encoded video is the same as the configuration of Figs. 29A and 29B. However, as described above, the second ES (sub view video ES) is not decoded in the video decoder 30. Thus, the video signal of one of the two ESs decoded by the video conversion processing unit 32, is converted to the 2D video signal as shown in the frame array (M1, M2, M3, and so on) on the right side of the figure, and then output. In this way, the 2D output/display is performed.

Here, the method of not decoding the right view ES is described as the 2D output/display method. However, the 2D display can also be performed, similarly to the case of the 3D display, by decoding both the left eye ES and the right eye ES, and by thinning out the right eye image signal by the video conversion processing unit 32. In this case, there is no need to switch between the decoding process and the demultiplexing process. As a result, a reduction in the switching time and simplification of software processing can be expected.

<3D output/display process of the 3D content based on the Side-by-Side method/Top-and-Bottom method>

Next described is the reproduction process of the 3D content when left eye images and right eye images are present in one video ES (for example, the left eye image and right eye image are stored in one 2D video as in the Side-by-Side method and Top-and-Bottom method). Similarly to the 2D output/display process, it is also assumed that the user instructs switching to 3D video. In this case, the user instruction reception unit 52 receives the key code. Then, the user instruction reception unit 52 instructs the system control unit 51 to switch to the 3D video. (Note that the following process is the same as in the case of switching to the 2D output/display on the conditions other than the user's instruction to switch the 3D content of the Side-by-Side method or Top-and-Bottom method to the 2D output/display.) Next, the system control unit 51 determines whether the current program is the 3D program by the method similarly as described above.

When the current program is the 3D program, the system control unit 51 first instructs the channel selection control unit 59 to output 3D video. Upon receiving the instruction, first the channel selection control unit 59 obtains the packet ID (PID) of the 3D video ES including 3D video, as well as the encoding method (for example, MPEG2, H. 264/AVC) from the program information analysis unit 54. Next, the channel selection control unit 59 controls the demultiplexing unit 29 to demultiplex the 3D video ES, and then output to the video decoder 30. Further, the channel selection control unit 59 controls the video decoder 30 to decode the video signal based on the corresponding encoding method, and output the decoded video signal to the video conversion processing unit 32.

Here, the system control unit 51 instructs the video conversion control unit 61 to perform the 3D output process. The video conversion control unit 61 receives the instruction from the system control unit 51. Then, the video conversion control unit 61 instructs the video conversion processing unit 32 to divide the input video signal into left eye images and right eye images, and apply scaling or other processes (which will be described in detail below) to the images. The video conversion processing unit 32 outputs the converted video signal from the video output 41, or displays the video on the display 47 included in the reception device 4.

The reproduction/output/display method of a particular 3D video will be described with reference to Figs. 31A and 31B.

Fig. 31A is a view showing the reproduction/output/display method corresponding to the output/display of the frame sequential method for alternately displaying and outputting the left and right view images of the 3D content based on the Side-by-Side method or on the Top-and-Bottom method. For the purpose of illustrating the encoded video, the Side-by-Side method and the Top-and-Bottom method are shown together. However, the difference in the two methods is only the placement of the left eye images and the right eye images in the video. Thus, the following description will be given using the Side-by-Side method, and the description of the Top-and-Bottom method will be omitted. The frame array on the left side of the figure (L1/R1, L2/R2, L3/R3, and so on) represents the Side-by-Side method video signal in which the left eye image and right eye image are placed on the left and right sides of one frame. The video decoder 30 decodes the Side-by-Side method video signal in which the left eye image and the right eye image are placed on the left and right sides in one frame. The video conversion processing unit 32 divides each frame of the decoded Side-by-side method video signal into left and right parts corresponding to the left eye image and the right eye image, respectively. Further, the video conversion processing unit 32 applies scaling to the images. In other words, the video conversion processing unit 32 extends/complements or compresses/thins out the images to fit them to the horizontal size of the output picture. Then, the video conversion processing unit 32 alternately outputs the frames as the video signal as shown in the frame array (L1, R1, L2, R2, L3, R3, and so on) on the right side of the figure.

In Fig. 31A, the process after the conversion of the output/display images into frames to be output/displayed alternately, the output of the synchronization signal and the control signal to the 3D viewing assist device, and the like, are the same as the 3D reproduction/output/display process of the 3D content based on the 3D2 view-based ES transmission method, and the description thereof will be omitted.

Fig. 31B shows the reproduction/output/display method corresponding to the output/display of the method for displaying the left and right view images of the 3D content based on the Side-by-Side method or To-and-Bottom method, in different areas of the display. Similarly to Fig. 31A, the Side-by-Side method and the Top-and-Bottom method are shown together for the purpose of illustrating the encoded video. However, the difference in the two methods is only the placement of the left eye images and the right eye images in the video. Thus, the following description will be given using the Side-by-Side method, and the description of the Top-and-Bottom method will be omitted. The frame array on the left side of the figure (L1/R1, L2/R2, L3/R3, and so on) represents the Side-by-Side method video signal in which the left eye image and right eye image are placed on the left and right sides of one frame. The video decoder 30 decodes the Side-by-Side method video signal in which the left eye image and the right eye image are placed on the left and right sides in one frame. The video conversion processing unit 32 divides each frame of the decoded Side-by-side method video signal into left and right parts corresponding to the left eye image and the right eye image, respectively. Then, the video conversion processing unit 32 applies scaling to the images. In other words, the video conversion processing unit 32 extends/complements or compresses/thins out the images to fit them to the horizontal size of the output picture. Further, the video conversion processing unit 32 outputs and displays the scaled left eye image and the right eye image to different areas. As described in Fig. 29B, here, the left and right view images are displayed in different areas of the display. This is achieved, for example, by a method of displaying the odd and even lines of the display as the main view (left eye) display area and the sub view (right eye) display area, respectively. The other display process to different areas and the display method in the display device of the polarization method are the same as the 3D reproduction/output/display process of the 3D content based on the 3D2 view-based ES transmission method shown in Fig. 29B, and the description thereof will be omitted.

In the method of Fig. 31B, even if the vertical resolution of the display is the same as the vertical resolution of the input video, when the left eye image and right eye image are output and displayed to the odd line and even line of the display, respectively, it may be necessary to reduce their vertical resolutions. In this case also, the images are thinned out according to the resolution of the display areas of left eye image and the right eye image in the scaling process described above.

<2D output/display process of the 3D content based on the Side-by-Side method/Top-and-Bottom method>

Next described is the operation of the individual units for performing the 2D display of the 3D content based on the Side-by-Side method or on the Top-and-Bottom method. When the user instructs switching to 2D video (for example, by pressing the "2D" key on the remote controller), the user instruction reception unit 52 receives the key code. Then, the user instruction reception unit 52 instructs the system control unit 51 to switch the signal to 2D video. (Note that the following process is the same in the case of switching to the 2D output/display on the conditions other than the user's instruction to switch to the 2D output/display of the 3D content based on the Side-by-Side method or Top-and-Bottom method.) Upon receiving the instruction, the system control unit 51 instructs the video conversion control unit 61 to output 2D video. The video conversion control unit 61 receives the instruction from the system control unit 51. Then, the video conversion control unit 61 controls the video signal input to the video conversion processing unit 32 so that the 2D video is output.

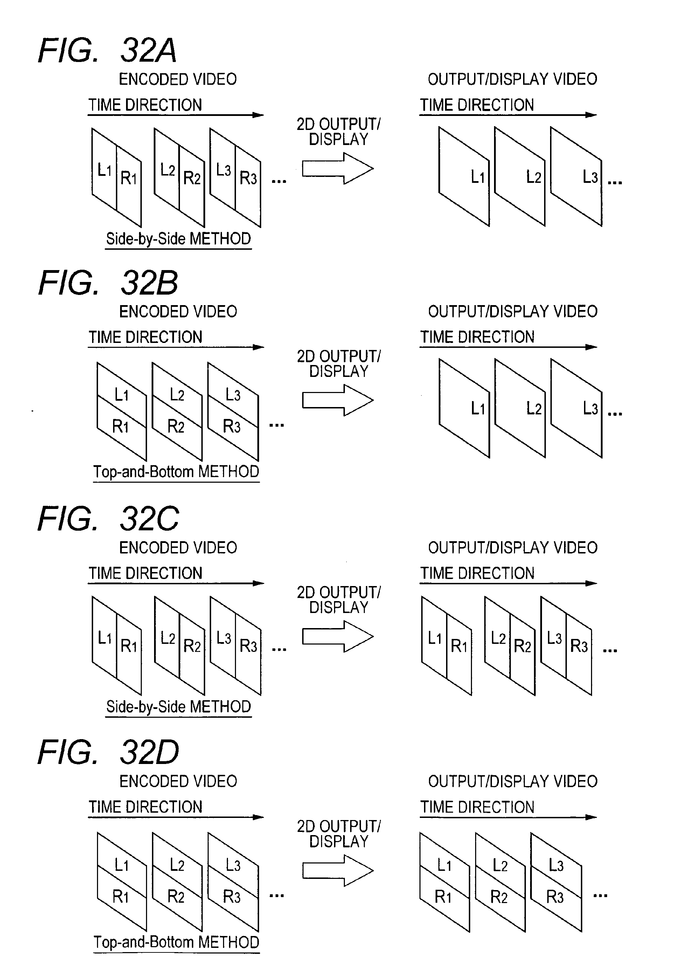

The 2D output/display method of the video will be described with reference to Figs. 32A to 32D. Fig. 32A is a view showing the Side-by-Side method, and Fig. 32B is a view showing the To-and-Bottom method. The difference between the two methods is only the placement of left eye image and the right eye image in the picture. Thus the description will be given using the Side-by-Side method of Fig. 32A. The frame array (L1/R1, L2/R2, L3/R3, and so on) on the left side of the figure represents the Side-by-Side method video signal in which the left eye and right eye image signals are placed on the left side and right side of one frame. The video conversion processing unit 32 divides each frame of the input Side-by-Side method video signal into left and right parts corresponding to the left eye image and the right eye image, respectively. Then, the video conversion processing unit 32 applies scaling only to the main view images (left eye images), and outputs only the main view images (left eye images) as the video signal as shown in the frame array (L1, L2, L3, and so on) on the right side of the figure.

The video conversion processing unit 32 outputs the processed video signal as the 2D video from the video output 41, while outputting the control signal from the control signal output 43. In this way, the 2D output/display is performed.

Figs. 32C and 32D show examples of the 2D output/display of the 3D content based on the Side-by-Side method or Top-and-Bottom method in a state in which the two view images are still stored in one picture. For example, in the case in which the reception device and the viewing device are separately configured as shown in Fig. 28, it is possible that the reception device outputs the video of the Side-by-Side method or Top-and-Bottom method in the state in which the two view images are still stored in one picture, and that the viewing device performs the conversion for 3D display.

<Example of the video display process flow according to the user's state in program change>

Next described is the output/display process when the broadcast method of the currently viewed program is changed (3D program and the transmission method thereof, 2D program). When the broadcast method of the currently viewed program is switched, and if the process method of the video is not changed in the reception device, the video may not be normally displayed, resulting in the user convenience being impaired. However, the user convenience can be improved by the following process.

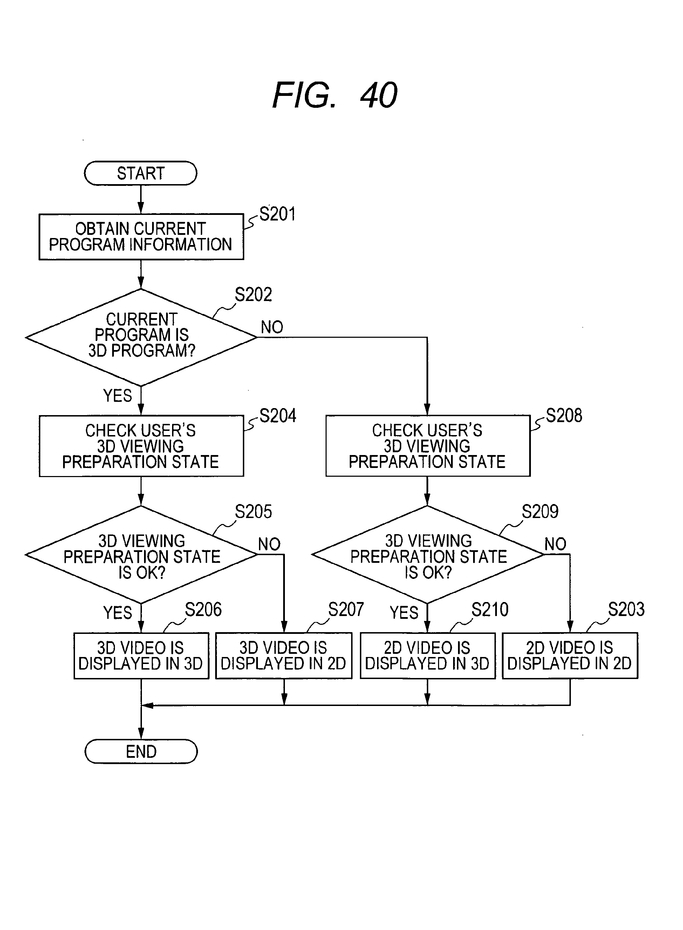

Fig. 40 shows an example of the process flow of the system control unit 51 whose execution is triggered by an event such as the change in the current program or the program information at the time of program switching.

The system control unit 51 obtains the program information of the current program from the program information analysis unit 54. Then, the system control unit 51 determines whether the current program is the 3D program by the 3D program determination method described above. Further, the system control unit 51 obtains the 3D method type (for example, two view-based ES transmission method/Side-by-Side method, and the like, which is determined, for example, from the 3D method type described in the detailed 3D program descriptor) of the current program from the program information analysis unit 54 (S201) . Note that the program information acquisition of the current program is not limited to at the time of program switching, and may be performed periodically.

As a result of the determination, when the current program is the 3D program (Yes in S202), the system control unit 51 then checks the 3D viewing preparation state of the user (S204).

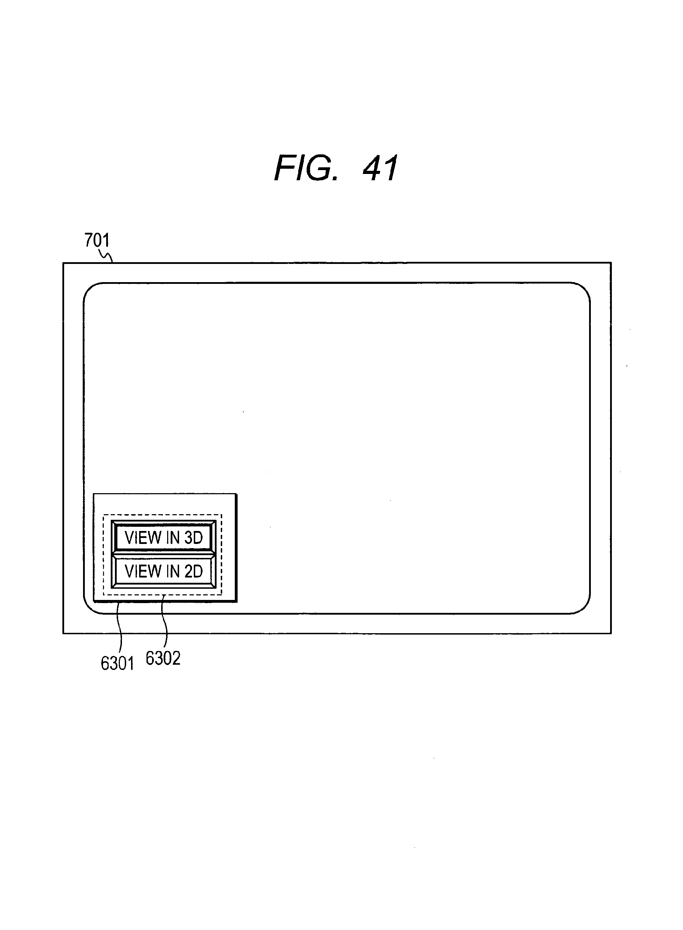

The 3D viewing preparation state means that the user expresses the desire to view the 3D program in 3D display. For example, when the user presses the "3D" button on the remote controller, the 3D/2D switch display as shown in the menu of Fig. 41 is displayed and the user selects "View in 3D" from the displayed menu. For example, when the state is transmitted to the reception device through the user operation input unit 45, it is determined that the 3D viewing preparation state is "OK". Then, the system control unit 51 stores the state.

In addition to the determination of the 3D viewing preparation state of the user described above, it is also possible to determine that the user wears the 3D viewing assist device, for example, by a user wearing completion signal transmitted from the 3D viewing assist device, or by imaging the viewing state of the user by an imaging device to perform the image recognition and the facial recognition of the user from the imaging result.

The operation of determining the 3D viewing preparation state to be "NG" is as follows. The user expresses the desire not to view the 3D program, such as, for example, removing the 3D viewing assist device or pressing the 2D button on the remote controller. When the user's desire is transmitted to the reception device, for example, through the user operation input unit 45, it is determined that the 3D viewing preparation state is "NG". Then, the system control unit 51 stores the state.

If the 3D viewing preparation state of the user is "OK" (Yes in S205), the system control unit 51 performs 3D output of the 3D content according to each of the above 3D methods that corresponds to the particular 3D content.

If the 3D viewing preparation state of the user is "NG" (No in S205), the system control unit 51 controls one view of the 3D video signal (for example, the main view) , to be displayed in 2D according to each of the 3D methods described in Fig. 30 or Figs. 32 A and B that corresponds to the particular view (S207) . At this time, a message indicating 3D program may be superimposed on the 2D display image.

As a result of the determination of step S202, if the current program is not 3D (No in S202), similarly to the above, the 3D viewing preparation state of the user is checked (208) and then determined (209). As a result of the determination, if the 3D viewing preparation state of the user is OK (Yes in S209), the system control unit 51 controls the 2D3D conversion of the video to display the converted video in 3D by the method described above (S210).

Here, when the video is converted from 2D into 3D and then output, a mark (2D3D conversion mark) may be displayed to indicate that the 2D3D conversion is done. In this case, the user can discriminate whether the video is 3D by the broadcast or 3D generated by the device. As a result, the user can determine to stop the 3D viewing.

Further, if the device does not have the 2D3D conversion function, the reception device can control outputting the 2D video remaining in 2D, without performing the 2D3D conversion control operation in step S210.

If the 3D viewing preparation state of the user is not OK (No in S209), the system control unit 51 controls outputting the 2D broadcast signal remaining in 2D (S203).

As described above, it is possible to determine the broadcast method of the actual transmission (3D program and the transmission method thereof, 2D program) and the 3D viewing preparation state of the user, and to automatically output the video in a format suitable for the broadcast method and the 3D viewing preparation state.

Here, it is possible to determine 3D program or not as well as the 3D method type, by using the identifiers encoded together with the video and stored in the user data area and in the supplemental enhancement information area as the 3D program determination method. This makes it possible to control the conversion for each frame. As a result, the user convenience is improved.

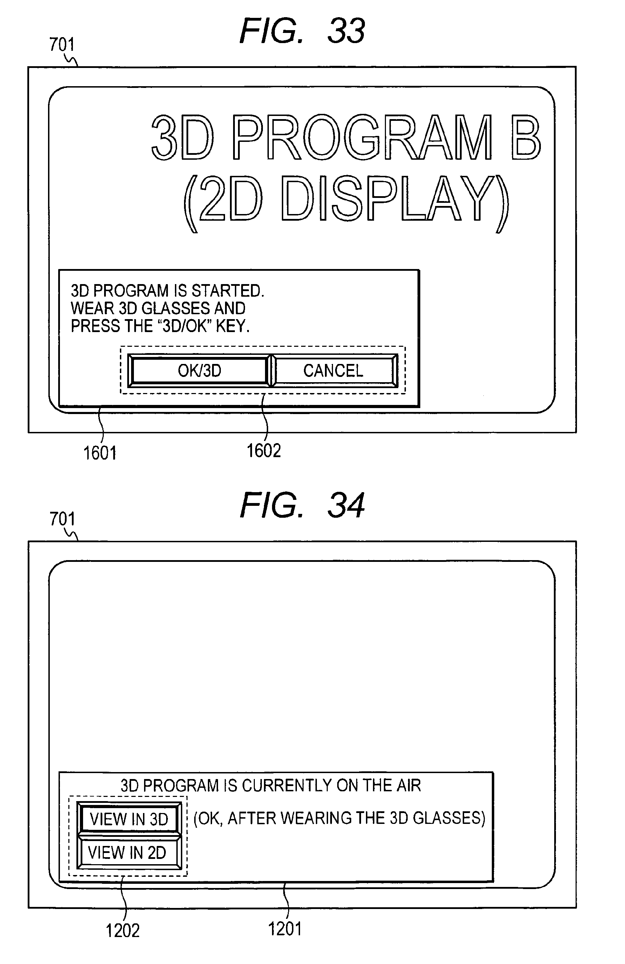

Fig. 33 shows an example in which, for example, the 3D broadcast video is displayed in 2D in step S207 with a message that the system control unit 51 causes the OSD generation unit 60 to display. Reference numeral 701 denotes the entire screen that the device displays. The screen displays a message 1601 notifying the user that the 3D program is started, as well as an object 1602 (hereinafter referred to as a user response reception object: for example, a button on the OSD) for the user response, on which the user selects the operation to be performed.

With the message 1601 being displayed, for example, when the user presses the "OK" button on the remote controller, the user instruction reception unit 52 notifies the system control 51 that the "OK" is pressed.

As an example of the determination method of the user selection in the screen display of Fig. 33, the user operates the remote controller and presses the "3D" button on the remote controller, or presses the "OK" button on the remote controller with the cursor on the "OK/3D" on the screen. In this case, it is determined that the 3D viewing preparation state is "OK".

On the other hand, when the user presses the "Cancel" or "Return" button on the remote controller, or when the user presses the "OK" button on the remote controller with the cursor on the "Cancel" on the display, it is determined that the 3D viewing preparation state is "NG". In addition, with the operations by which the 3D viewing preparation state is determined to be OK, the 3D viewing preparation state is changed to "OK".

After the user performs the above selection, the flow of Fig. 40 is executed again by the system control unit 51.

In this way, for example, when the 3D viewing preparation state of the user is NG and the 3D program is displayed in 2D, the system control unit 51 can notify the user that the 3D program is started. In addition, the system control unit 51 can easily notify the 3D viewing assist device that the 3D viewing preparation state is OK. As a result, the user can determine the start of the 3D program, and can easily switch the display mode to the 3D video. Thus, it is possible to provide a viewing method according to the user convenience.

Note that in the display example of Fig. 33, the object for the user response is displayed. However, it is also possible to display a simple character, logo, or mark, such as "3D program", that simply indicates that the particular program is a program supporting "3D viewing". In this case, the user recognizes the program supporting "3D viewing", and then presses the "3D" key on the remote controller. The user instruction reception unit 52 receives the signal from the remote controller, and notifies the system control unit 51. Upon receiving the notification, the system control unit 51 switches from 2D display to 3D display.

Further, as another example of the message display displayed in step S207, there may be a method of clearly indicating whether the program display method is 2D video or 3D video, in addition to simply displaying OK as shown in Fig. 33. Fig. 34 shows an example of the message and the user response reception object in this case.

With this display method, as compared to the method of displaying "OK" as shown in Fig. 33, the user can easily determine the operation after pressing the button. In addition, the user can explicitly specify the display in 2D. At this time, when the user presses "View in 2D" indicated by reference numeral 1202, it is determined that the user's 3D viewing preparation state is NG. As a result, the user convenience is improved.

It is preferable that the message display for each user described in this embodiment is deleted after the user operation. In this case, there is an advantage that the video can be easily viewed after the user operation. Similarly, when a certain time has elapsed after the message display, the message is deleted on the assumption that the user has recognized the information of the message. This makes the video easy to view and the user convenience is improved.

Note that when the cannel selection operation is performed to change the current program, the above flow is also executed by the system control unit 51.

<3D determination method based on the video information>

Here is the method of determining whether the video signal is the 3D video based on the video information.

The 3D video transmission method will be described on the assumption that the right eye image and the left eye image are inserted into one normal picture, for example, using the "Side-by-Side" or "Top-and-Bottom" method, or using the "Field alternative" or "Line alternative" method.

With respect to the left eye image and the right eye image in the 3D video transmission method, the video information is the same in the shallowness area, or the histograms of the pixel values of the left eye image and the right eye image are very similar to each other.

For example, in the "Side-by-Side" method, like the frame described as the encoded video in Figs. 31A and 31B, the left eye image is placed in the left half of the encoded plane while the right eye image is placed in the right half of the encoded plane. In such a situation, the pixel value of the upper left of the left half plane (the position of (0, 0), assuming that the coordinate system starts in the upper left corner), and the pixel value of the upper left of the right half plane (the position of (x/2, 0) , assuming that the coordinate system starts the upper left corner, where x is the horizontal size of the entire screen) are considered to be similar to each other.

Thus, as an example of the 3D video determination method, there is a method of calculating the difference, for example, between the values of RGB and YUV for each of the pixels whose display positions are assumed to be the same in the left eye image and the right eye image, and comparing the sum of the differences as the difference of the video with a constant value. If the difference is smaller than the constant value, it is determined as the 3D video.

To give a specific example, suppose the video whose 3D transmission method is Side-by-Side, with the entire size in the horizontal direction defined as X (namely, the horizontal size of each view image is X/2) while the size in the vertical direction defined as Y. The difference between the left and right view images is compared with the YUV component as follows:

$$\sum_{b=0}^{Y}\sum_{a=0}^{X/2}\left[\{Y(a,b)-Y(a+X/2,b)\}+\{U(a,b)-U(a+X/2,b)\}+\{V(a,b)-V(a+X/2,b)\}\right]\le D$$

$$(1)$$

Here, the right side represents the sum of the difference of the YUV components of the video, and the right side represents the constant value (here, D) . Further, Y (x, y) represents the value of the Y component at the (x, y) coordinates of the video, which is the same with respect to U (x, y) and V (x, y).

When it is considered with the difference of the histogram instead of the difference of the pixel value, the difference can be calculated as the following equation:

$$\sum_{i=0}^{n}\left\{\left(\sum LY(i)-\sum RY(i)\right)+\left(\sum LU(i)-\sum RU(i)\right)+\left(\sum LV(i)-\sum RV(i)\right)\right\}\leq D \qquad \cdots (2)$$

Here, n is the maximum value of the pixel value, which is, for example, 255 if the video can be represented by 8 bits. Further, $\sum LY(i)$ represents the sum of the number of Y components i in the left eye image. Similarly, $\sum RY(i)$ represents the sum of the number of Y components i in the right eye image. This is the same for the U/V components. If the calculated sum of the histogram is smaller than the constant value, it is possible to determine that the current video is the 3D video.

Here, all of the values of the YUV components are calculated. However, it is possible to calculate only the Y component in order to simplify the calculation. Further, it is also possible to use the RGB components instead of the YUV components. In this case, the difference is calculated by converting the video to different dimensional color spaces. As a result, the pattern that the 3D video is incorrectly determined is changed, allowing for an effective determination and the like.

The above has described the simple pixel difference comparison as well as the histogram difference comparison for each component. Each of the calculations can be performed, for example, by weighting the Y component, by weighting the center value of the histogram, or by applying a specific filter (for example, a low pass filter) before the comparison, in order to further reduce the risk of erroneous determination.

As the video analysis method, there is a method of analyzing what object is placed in the video (for example, contour definition and facial recognition techniques). Based on these techniques, the placement of the object in the video is checked to determine, for example, that the similar objects are present in the same positions in the right eye image and the left eye image in the 3D video transmission method described above. In this way, the 3D video can be determined. The erroneous determination is less likely to occur with this determination method than with the simple pixel comparison.

The comparison of the pixel information and the like is not necessarily performed in all areas of the image. The comparison may be performed in a specific area (for example, the upper half, only a horizontal line n, only a specific object). In this case, the accuracy of the 3D determination is reduced. However, there is an advantage that the calculation amount is reduced.

In the comparison of the left eye image and the right eye image, there is a difference in the placement between the left eye image and the right eye image according to the 3D transmission method. For example, in the case of the "Side-by-Side" method, the left eye image is placed on the left side of the encoded plane while the right eye image is placed on the right side of the encoded plane. In the case of the "Top-and-Bottom" method, the left eye image is placed on the top of the encoded plane while the right eye image is placed on the bottom of the encoded plane. For this reason, in order to support a plurality of 3D transmission methods, the comparison should be made between the left eye image and the right eye image for each assumed 3D transmission method. The comparison is made using one of the 3D transmission methods (for example, "Side-by-Side"), and if it is determined as the 3D video, the 3D transmission method (in this case, "Side-by-Side") of the video can also be determined.

The application of the comparison process is limited, for example, to the 3D transmission method that the reception device supports, or to the 3D transmission method selected by the user for automatic 3D determination. In this way, it is possible to reduce the calculation amount.

Further, the determination of the 3D video can be performed, for example, over a plurality of frames to further reduce the risk of erroneous determination. For example, in the case of the difference comparison described above, if the difference is smaller than D in the range of a plurality of frames (for example, 10 frames) , it is determined as the 3D video. In this case, the time until the determination result is obtained is delayed. However, there is an advantage that it is possible to prevent accidentally erroneous determination with regards to a similar image in the range of one to several frames.

Further, in the case of the determination based on the video information, it is possible to determine that the video is not the 3D broadcast as a result of the determination by the aspect information. For example, when the video is transmitted by information other than the aspect information specified as 3D broadcast in the broadcasting standards (for example, 1920×1080), it is determined that the particular video is not the 3D video. In this way, it is possible to reduce the risk of erroneous determination.

It is possible to use not only one of these methods but also combinations of these methods to achieve 3D determination with small errors.

<3D determination process based on the video information>

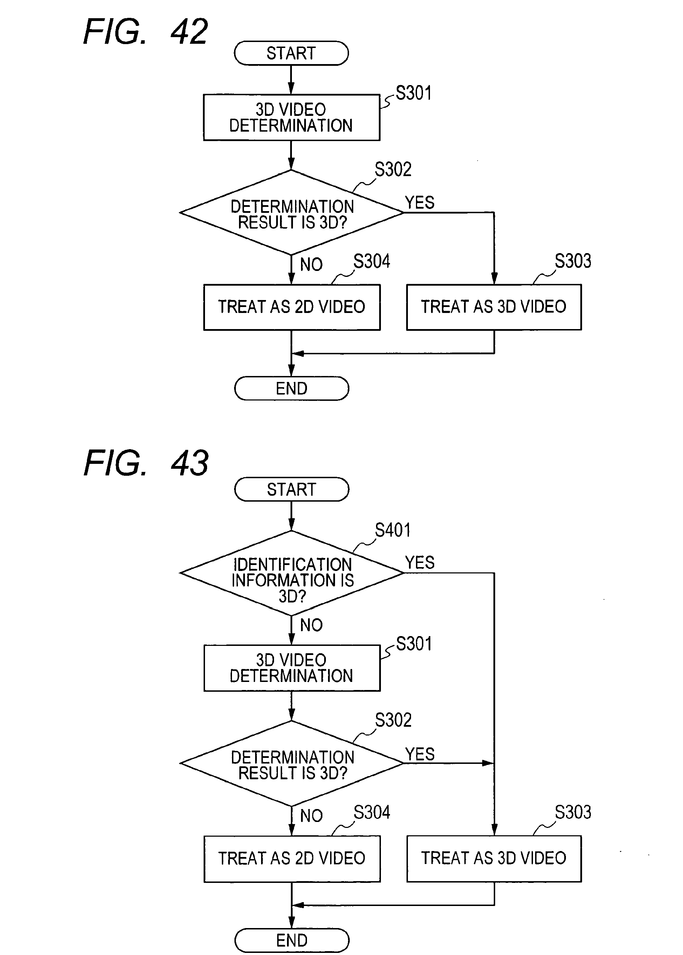

The 3D determination process by video information will be described in detail with reference to a flow chart of Fig. 42. Fig. 42 shows an example of the process flow of the system control unit 51 for performing the 3D determination based on the video information.

The system control unit 51 analyzes an input video signal to perform the 3D determination of the input video by the method such as the 3D determination method based on the video information (5301). As a result of the determination, if the video signal is the 3D video (Yes in 5302), the system control unit 51 treats the input video signal as the 3D signal (5303). For example, the system control unit 51 executes the video display process flow according to the state of the user, and displays the video in 3D. As a result of the determination, if the video signal is not the 3D video (No in S302), the system control unit 51 treats the video signal as the 2D video (5304), and executes the display process or other processes according to the determination result. In this way, the system control unit 51 performs the 3D determination based on the video information, and then displays the video.

Here, before performing the 3D determination based on the video information, for example, there is a method of reducing the process of the device by previously determining whether the video signal is 3D or not, by the identification information that is transmitted in conjunction with the video signal. Fig. 43 shows the process flow of the system control unit 51 in this case. First, the system control unit 51 determines whether the video is 3D or not by the method shown in the example of the detailed 3D program determination method using the program information or other information (S401). Here, if the identification information is 3D (Yes in S401), the system control unit 51 treats the video as 3D and displays the video as described above. If the identification information is not 2D (No in S401), the system control unit 51 performs the 3D determination process based on the video information as described above (S301). In this way, the process can be reduced, for example, by not performing the 3D determination process based on the video information if the identification information exists.

Here, if it is obvious that the video is other 3D from the identification information (for example, the descriptor corresponds to 3D but the description of the descriptor is stated as 2D), the 3D determination based on the video information may not be performed similarly to the case described above. In this case, if the determination in S401 of Fig. 43 is No, the system control unit 51 directly moves to the process of S304, not through the process of S301 and the determination of S302. In this way, the 3D determination process based on the video information is not performed also in the case in which the video signal is obviously 2D. As a result, the process of the device can be reduced.

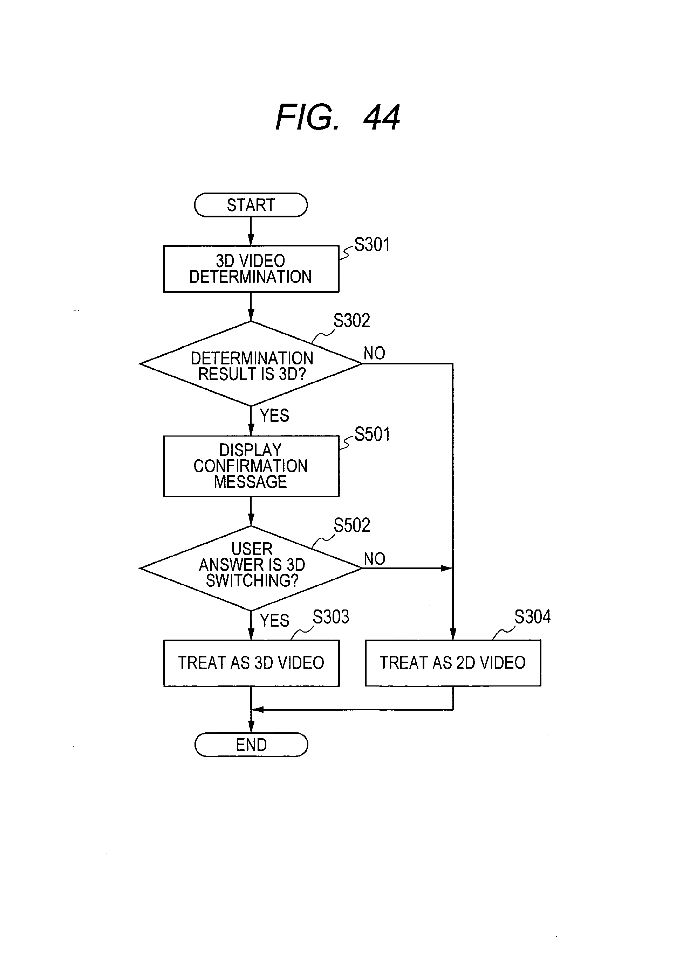

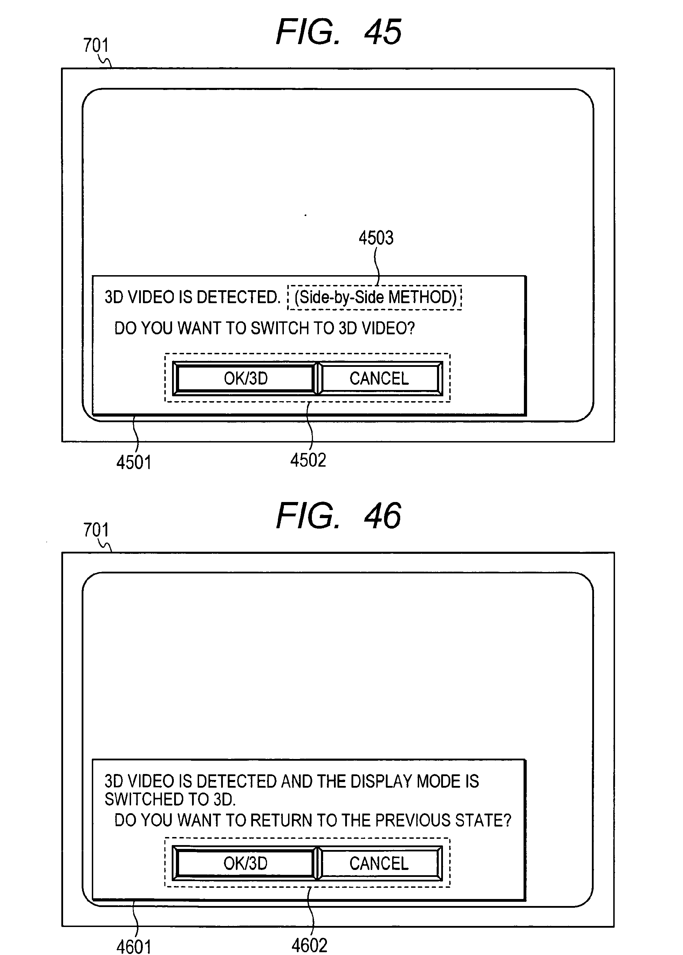

Fig. 44 is a flow chart of the process of the system control 51 for displaying a confirmation message to the user after the 3D determination is performed based on the video information. Similarly to the process described above, the system control unit 51 performs the 3D determination based on video information (S301). If the determination result is 3D (Yes in S302), the system control unit 51 displays the 3D switching confirmation message shown in Fig. 45 (S501). Here, 701 represents the entire screen that the device displays, 4501 represents the whole message, 4502 represents the user response reception object, and 4503 represents the display of the transmission method of the 3D broadcast that is detected based on the 3D determination by video information.

Here, for example, the user operates the remote controller to presses the "3D" button on the remote controller, or to press the "OK" button on the remote controller with the cursor on the "OK/3D" of the screen. In this case, the user response is determined as 3D switching. If the user response is 3D switching (Yes in S502), the system control unit 51 treats the video as 3D (S303), and performs the process such as video switching as described above. On the other hand, if the user response is not 3D switching (No in S502), the system control unit 51 treats the video as 2D (S304), and performs the process such as video switching.

As described above, even if the 3D determination is performed based on the video information and the video is determined as 3D, the system control unit 51 notifies the user that the video is the 3D video. Then, the system control unit 51 checks if the user enables or disables 3D switching. This makes it possible to prevent the device from switching to 3D due to erroneous determination.

Here, the user response reception object 4502 is not necessarily included in the content of the message. The content of the message can be simplified. For example, only "3D" can be displayed on the screen. In this case, the user should explicitly press the 3D button to switch the video to 3D. This can improve the user visibility of the screen. In addition, there is no need to perform the steps of S502, S303, and S304 shown in the example of the flow chart of Fig. 44. As a result, the process of the reception device can be simplified.

Further, there may be another method different from the above example. More specifically, the method includes the steps of switching the video to 3D when it is determined as 3D by the 3D determination method based on the video information, transmitting a message indicating that the video is switched to 3D, and returning to the previous state by the user operation. In this case, an example of the message is as shown in Fig. 46. Further, a process is added to the flow chart process in S501, to treat the video as 3D and switch to the 3D display. In this way, first the video is automatically switched to 3D, and then the user can easily return it to the 2D display.

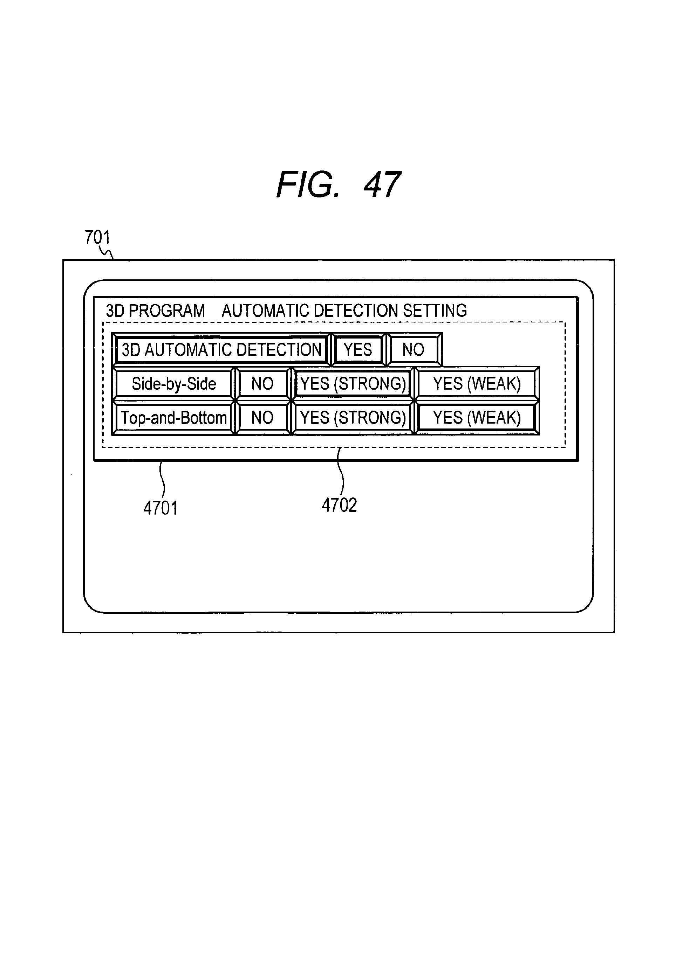

The user may be able to specify whether to enable or disable the 3D determination process based on the video information, and to specify the threshold of the determination. This can be achieved by displaying the menu shown in Fig. 47 to allow the user to set various settings. In the example of Fig. 47, for example, the user sets the 3D automatic detection to "No". In this case, the system control unit 51 stores the user set value so that the process flows of Figs. 42, 43, and 44 are not performed. Further, as shown in the example of Fig. 47, the user specifies whether to enable or disable the process for each 3D video transmission method, to perform the process. In this case, the threshold (for example, the value D of the equation (1)) is changed. At this time, if "Yes (strong)", the value of D is set to half the value of "Yes (weak) ". Then, the system control unit 51 stores the user set value. In this way, it is possible to perform the 3D determination based on the video information according to the user preferred method.

The 3D determination method based on the video information, as well as the 3D determination process based on the video information can also be applied to the video input from the outside (for example, input from the high-speed digital interface, multimedia interface, or network interface). In this case also, the same effect can be obtained.

The flow chart of the system control 51 can typically be performed. However, 3D broadcast is often provided in the program unit. Thus, it is preferable that the flow chart is performed periodically (for example, 10 second cycle), only just after the current program or video content is changed (for example, 5 minutes after the change), such as start-up and channel selection in which program switching may occur, or program change with time. In addition to the program switching, the change in the video content includes: reproduction start or content change from the recording reproducing unit 27, or content input start or content change from the high speed digital I/F 46, or content input start or content change from the network I/F 25. Further, with respect to the change in the video content, all the changes are not necessarily detected. It is possible to select changes according to the necessity. For example, it is possible to detect only the program change and not to determine other changes). This makes it possible to prevent the phenomenon that the video is suddenly switched due to an erroneous determination of the video as 3D during the program or video content. Further, the power can be saved by not performing unwanted processes, and the interference to the other operations can be reduced.

<Automatic 3D determination in external output/recording>

As a result of the above determination, when the video signal and the like as is output to the outside or is recorded, it is desirable to describe the information that the video is 3D video or 2D video, which is obtained from the result of the determination based on the video information, into the information associated with the video. In this way, there is no need to perform the 3D determination based on the video information on the reception side or in the reproduction of the video.

For example, in the case of the high-speed digital interface, the multimedia interface (for example, HDMI), or the network interface, the following information is described in the control signal transmitted together with the video: the information for determining whether the video signal transmitted together with the control signal is 3D or 2D, and if the video signal is 3D, the transmission method (for example, the "Side-by-Side" method or "Top-and-Bottom" method). In this way, there is no need to perform the 3D determination based on the video information on the reception side. In addition, it is possible to avoid the risk that the video might be erroneously determined to be 3D video or 2D video from the incorrect additional information (3D or not, and 3D transmission method).

Further, when the broadcast is recorded, it is desirable to describe the information that can be determined in the examples of the detailed 3D program determination method using the program information, and the like, so that the video signal is determined as 3D. In this way, it is possible to determine the video as 3D at the time of the reproduction.

With respect to the message display for each user described in this embodiment, it is desirable to delete the display after the user operation. In this case, there is an advantage that the video can easily be viewed after the user operation. Similarly, when a certain time has elapsed after the message display, the message is deleted on the assumption that the user has recognized the information of the message, to make the video easily viewed. As a result, the user convenience is improved.

According to the above embodiment, it is possible to automatically determine whether the video is 2D or 3D from the video information and the like of the video signal. This makes it possible to display the video with a more appropriate method for the user. In particular, a plurality of 3D transmission methods can be supported, so that the 3D video can be determined by a plurality of determination methods. This can reduce the risk of erroneous determination. Further, the video information is determined only when the identifier used for the 3D determination does not exist, or when the information is uncertain. Or the video information is determined only when the information is more likely to be changed such as when the program is changed. This makes it possible to achieve the reduction in the process load as well as the power saving. Further, when the video signal is recorded or output to the outside, the information of the determination result is added to the additional information of the video signal. In this way, there is no need to perform the determination based on the video information on the side of the external device that receives the video signal. In addition, it is possible to avoid the risk of erroneous determination due to the incorrect descriptor.

The above description is an example of transmitting the detailed 3D program descriptor described in Fig. 10A, by placing the detailed 3D program descriptor in the table such as program map table (PMT) or event information table (EIT). However, replacing this or adding to this, it is also possible to transmit the information included in the particular detailed 3D program descriptor, by storing the particular information in the user data area or the supplemental enhancement information area that is encoded at the same time when the video is encoded. In this case, the information is included in the video ES of the program.

Examples of the stored information may include the 3d_2d_type (3D/2D type) information described in Fig. 10B and the 3d_method_type (3D method type) information described in Fig. 11. Note that at the time of storing, the 3d_2d_type (3D/2D type) information and the 3d_method_type (3D method type) information may be different. However, it is also possible to combine the information for discriminating between 3D video and 2D video, and the information for identifying which 3D method is for the particular 3D video into a single information resource for identification.

More specifically, when the video encoding method is MPEG2, the 3D/2D type information and the 3D method type information are encoded in such a way that they are included in the user data area following the picture header and the picture coding extension.

When the video encoding method is H.264/AVC, the video including the 3D/2D type information and the 3D method type information are encoded in such a way that they are included in the supplemental enhancement information included in the access unit.

As described above, the information indicating the 3D video/2D video type, as well as the information indicating the 3D method type are transmitted in the video coding layer of the ES. This makes it possible to identify the video in the unit of frame (picture).

In this case, the identification can be achieved in shorter time intervals than the case of storing the information in the program map table (PMT). This makes it possible to increase the response speed of the reception device to 3D video/2D video switching in the video to be transmitted. As a result, it is possible to prevent more of the noise that may occur at the time of 3D video/2D video switching.

Further, it is assumed that the detained 3D program descriptor is not placed in the program map table (PMT), but is stored in the video coding layer that is encoded at the same time when the video is encoded. In this case, when a new 2D/3D mixed broadcast is started in a broadcast station for the existing 2D broadcast, for example, it is enough that only the encoder 12 of the transmission device 1 newly supports the 2D/3D mixed broadcast on broadcast station side. There is no need to change the configuration of the program map table (PMT) that is added by the management information addition unit 16. As a result, the 2D/3D mixed broadcast can be started at a lower cost.

Note that when the 3D related information (in particular, the information for identifying 3D/2D) , such as the 3d_2d_type (3D/2D type) information and the 3d_method_type (3D method type) information, is not stored in the given area such as the user data area or the supplemental enhancement information area, which is encoded at the same time when the video is encoded, the reception device may determine that the particular video is the 2D video. In this case, the broadcast station can omit storing the information in the encoding process. As a result, the number of processes in the broadcast can be reduced.

The above description provides an example of the methods of placing the identification information for identifying the 3D video in program (event) unit or service unit. One of the examples is that the identification information is included in the program information such as the component descriptor, the component group descriptor, the service descriptor, and the service list descriptor. The other is that the detailed 3D program descriptor is newly provided. Further in the above description, these descriptors are transmitted in such a way that they are included in the tables such as PMT, EIT [schedule basic/schedule extended/present/following], NIT, and SDT.

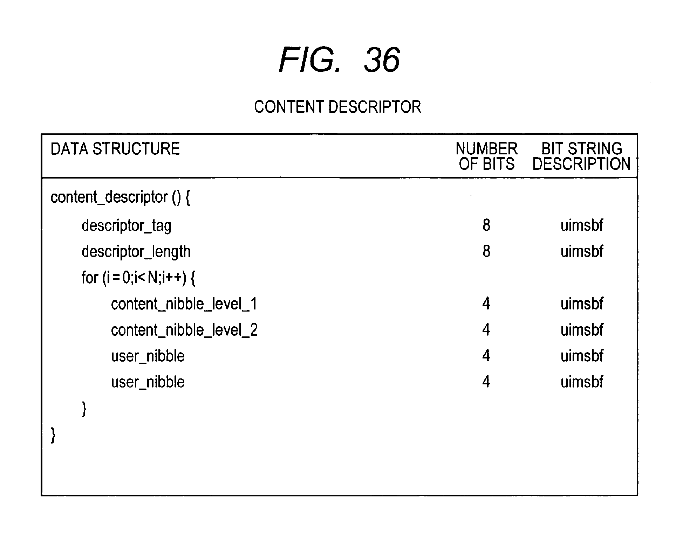

Here, as still another example, there is a method of placing the identification information of the 3D program (event) in the content descriptor shown in Fig. 36.

Fig. 36 shows an example of the structure of the content descriptor which is one of the program information resources. The content descriptor describes the information about the category of the event (program). This descriptor is placed in EIT. The content descriptor can describe not only the category information of the event (program) but also information of the program characteristics.

The structure of the content descriptor is as follows. A descriptor_tag is an 8-bit field for identifying the descriptor itself, describing the value "0x54" by which the descriptor can be identified as the content descriptor. A descriptor_length is an 8-bit field that describes the size of the descriptor.

A content_nibble_level_1 (category 1) is a 4-bit field that indicates the first category for the content identification. More specifically, it describes the major program category. The value "0xE" is specified to indicate the program characteristics.

A content_nibble_level_2 (category 2) is a 4-bie field that indicates the second category for the more detailed content identification. More specifically, it describes the medium category of the program category. When content_nibble_level_1="0xE", the type of the program characteristics code is described.

A user_nibble (user category) is a 4-bit field that describes the program characteristics only when content_nibble_level_1="0xE". Otherwise, it describes "0xFF" (unknown). As shown in Fig. 36, the user_nibble 4-bit field can be placed in two ways. The program characteristics can be defined by the combination of the particular two user_nibble values. Hereinafter the first placed bit is referred to as "first user_nibble bit", and the next placed bit is referred to as "second user_nibble bit".

The reception device receives the content descriptor. If descriptor_tag is "0x54", the reception device determines that the particular descriptor is the content descriptor. The reception device can also determine the end of the data described in the descriptor, from descriptor_length. Further, the reception device determines that the part of the description within the range of the length indicated by descriptor_length, is valid, and ignores the part of the description exceeding this range in the process.

Further, the reception device determines whether the value of content_mibble_level_1 is "0xE". If not "0xE", then the reception device determines as the major program category. The value without "0xE" is not determined as the category but is determined that certain program characteristics are specified by the following user_nibble.

If the value of content_nibble_level_1 is not "0xE", the reception device determines that content_level_2 is the medium program category that used for search, display or other purposes together with the major program category. If the value of content_nibble_level_1 is "0xE", the reception device determines that it indicates the type of the program characteristics code table specified by the combination of the first and second user_nibble bits.

If the value of content_nibble_level_1 1 is "0xE", the reception device determines the value as the bit indicating the program characteristics by the combination of the first and second user_nibble bits. If the value of content_nibble_level_1 is not "0xE", the reception device ignores it regardless of what values might be in the first and second user_nibble bits.

Thus, when the value of content_nibble_level_1 of the particular content descriptor is not "0xE", the broadcast station can transmit the category information of the target event (program) to the reception device, by combing the value of content_nibble_level_1 and the value of content_nibble_level_2.

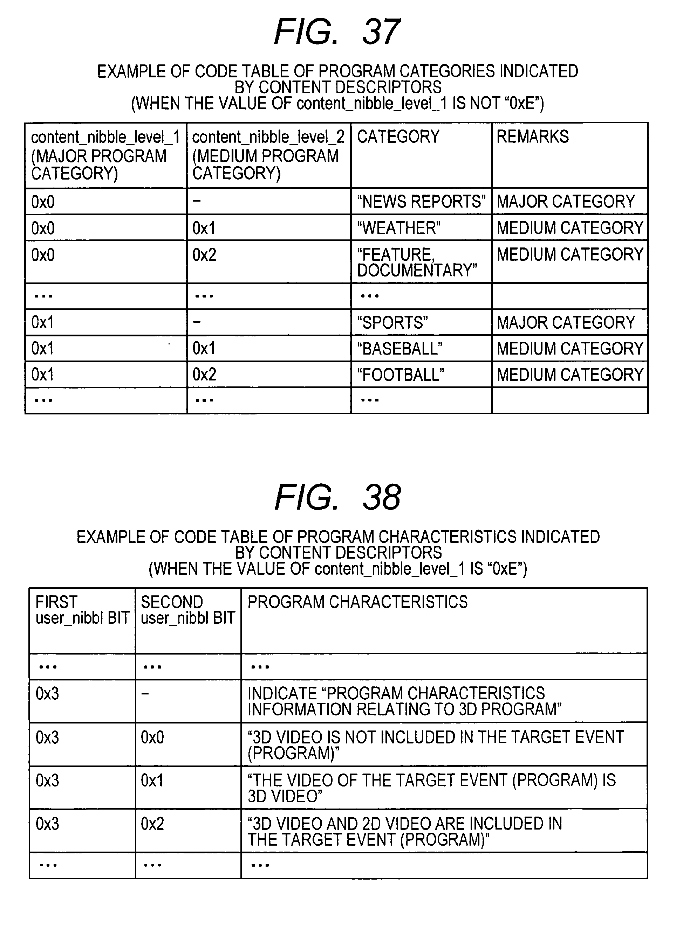

Here, for example, as shown in Fig. 37, when the value of content_nibble_level_1 is "0x0", the major program category is specified as "news/reports". When the value of content_nibble_level_1 is "0x0" and the value of content_nibble_level_2 is "0x1", it is specified as "weather". When the value of content_nibble_level_1 is "0x0" and the value of content_nibble_level_2 is "0x2", it is specified as "feature, documentary". When the value of content_nibble_level_1 is "0x1", the major program category is specified as "sports". When the value of content_nibble_level_1 is "0x1" and the value of content_nibble_level_2 is "0x1", it is specified as "baseball". When the value of content_nibble_level_1 is "0x1" and the value of content_nibble_level_2 is "0x2", it is specified as "football".

In this case, the reception device can determine whether the major program category is "news/reports" or "sports" by the value of content_nibble_level_1. In addition, the reception device can also determine the medium program category, which is the lower program category than the major program category such as "news/reports" and "sports", by the combination of the value of content_nibble_level_1 and the value of content_nibble_level_2.

Note that the determination process can be realized by storing the category code table information indicating the relationship between the combination of the value of content_nibble_level_1 and the value of contet_nibble_level_2, and the program category definition into the storage unit of the reception device in advance.

Here is a description of the case in which the program characteristics information relating to the 3D program of the target event (program) is transmitted using a particular content descriptor. The following description assumes that the 3D program identification information is transmitted as the program characteristics, and not the program category.

First, the program characteristics information relating to the 3D program is transmitted using the content descriptor. At this time, the broadcast station transmits the value of content_nibble_level_1 as "0xE". From this value, the reception device can determine that the information transmitted by the particular content descriptor is not the category information of the target event (program), but is the program characteristics information of the target event (program). At the same time, the reception device can determine that the particular information indicates the program characteristics information by the combination of the first and second user_nibble bits described in the content descriptor.

Here, for example, as shown in Fig. 38, if the value of the first user_nibble bit is "0x3", the program characteristics information of the target event (program) transmitted by the content descriptor is defined as "program characteristics information relating to the 3D program". If the value of the first user_nibble bit is "0x3" and the value of the second user_nibble bit is "0x0", the program characteristics are defined as that "3D video is not included in the target event (program) ". If the value of the first user_nibble bit is "0x3" and the value of the second user_nibble bit is "0x1", the program characteristics are defined as that "the video of the target event (program) is the 3D video". If the value of the first user_nibble bit is "0x3" and the value of the second user_nibble bit is "0x2", the program characteristics are defined as that "3D video and 2D video are included in the target event (program)".

In this case, the reception device can determine the program characteristics relating to the 3D program of the target event (program) by the combination of the value of the first and second user_nibble bits. The reception device receives EIT containing the particular content descriptor. Then, the reception device can display the description on an electronic program guide (EPG) display as follows: "3D video is not included" for the program to be received in the future or the program currently received; "3D video program" for the particular program; and "3D video and 2D video are included" for the particular program. The reception device can also display graphics representing these descriptions.

Further, when receiving the EIT containing the particular content descriptor, the reception device can search the program not including 3D video, the program including 3D video, and the program including 3D video and 2D video. Thus, the reception device can display a list of the particular program, and the like.

Note that the determination process can be realized by storing the program characteristics code table information indicating the relationship between the combination of the value of the first and second user_nibble bits, and the program characteristics definition into the storage unit of the reception device in advance.

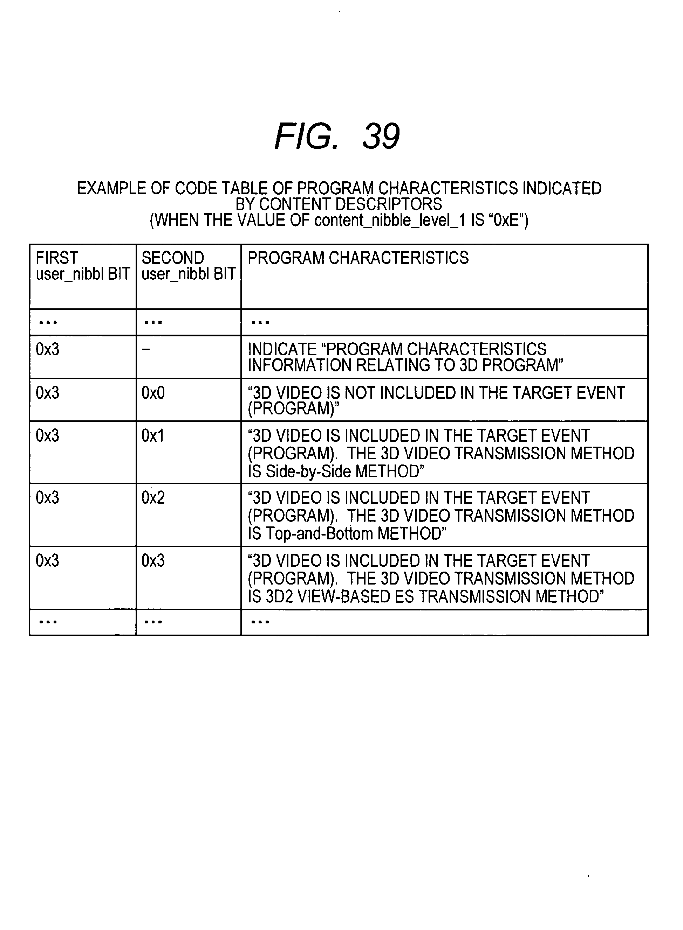

Other definition examples of the program characteristics information relating to the 3D program are as follows. For example, as shown in Fig. 39, when the value of the first user_nibble bit is "0x3", the program characteristics information of the target event (program) transmitted by the particular content descriptor is defined as "program characteristics information relating to the 3D program". When the value of the first user_nibble bit is "0x3" and the value of the second user_nibble bit is "0x0", the program characteristics are defined as that "3D video is not included in the target event (program)". When the value of the first user_nibble bit is "0x3" and the value of the second user_nibble bit is "0x1", the program characteristics are defined as that "3D video is included in the target event (program), and the 3D video transmission method is the Side-by-Side method". When the value of the first user_nibble bit is "0x3" and the value of the second user_nibble bit is "0x2", the program characteristics are defined as that "3D video is included in the target event (program) , and the 3D video transmission method is the Top-and-Bottom method". When the value of the first user_nibble bit is "0x3" and the value of the second user_nibble bit is "0x3", the program characteristics are defined as that "3D video is included in the target event (program), and the 3D video transmission method is the 3D2 view-based ES transmission method".

In this case, the reception device can determine the program characteristics information relating to the 3D program of the target event (program) by the combination of the value of the first user_nibble bit and the value of the second user_nibble bit. Thus, the reception device can determine not only whether the 3D video is included in the target event (program), but also the 3D transmission method for the case in which the 3D video is included in the target event (program). In this case, the information of the 3D transmission methods that can be supported (reproduced in 3D) by the reception device is stored in the storage unit of the reception device in advance. Thus, the reception device can compare the information of the particular 3D transmission method that can be supported (reproduced) and stored in the storage unit in advance, with the information of the 3D transmission method of the target event (program) determined by the content descriptor contained in the EIT. In this way, the reception device can display the description on the electronic program guide (EPG) display as follows: "3D video is not included" for the program to be received in the future or the program currently received; "3D video program is included and able to be reproduced in 3D by the reception device" for the particular program, and "3D video is included but unable to be reproduced in 3D by the reception device" for the particular program. The reception device can also display graphics representing these descriptions.

Further, in the above example, the program characteristics of the case in which the value of the first user_nibble bit is "0x3" and the value of the second user_nibble bit is "0x3", are defined as that "the 3D video is included in the target event (program), and the 3D video transmission method is the 3D2 view-based ES transmission method". However, it is also possible to prepare the value of the second user_nibble bit for each detailed stream combination of the "3D2 view-based ES transmission method" shown in Fig. 35. This allows more detailed identification in the reception device.

Further, it is also possible to display the information of the 3D transmission method of the target event (program).

Further, when receiving the EIT containing the particular content descriptor, the reception device can search for specific programs such as the program without including 3D video, the program including 3D video able to be reproduced in 3D by the reception device, the program including 3D video unable to be reproduced in 3D by the reception device. Thus, the reception device can display a list of the particular program and the like.

Further, the reception device can also search programs for each 3D transmission method with respect to the program including 3D video. Thus, the reception device can display a list of programs for each 3D transmission method. Note that the search for the program including 3D video unable to be reproduced in 3D by the reception device, and the search for the program for each 3D transmission method are effective, for example, when the program can be reproduced in another 3D video program reproduction device that the user has, although the particular program is unable to be reproduced in 3D by the reception device. Even if the program includes 3D video unable to be reproduced in 3D by the reception device, the 3D reproduction of the program can be achieved by the following steps: outputting the particular program with the transport stream type remaining unchanged, to the other 3D video program reproduction device from the video output of the reception device; and reproducing the received program with the particular transport stream type in 3D by the 3D video program reproduction device. Further, if the reception device includes a recording unit for recording the content into a removable media, the 3D reproduction of the program can also be achieved by recording the particular program into the removable media. In this case, the particular program recoded in the removable media can be reproduced in 3D by the other 3D video program reproduction device.

Note that the determination process can be realized by storing the information of the program characteristics code table showing the relationship between the combination of the value of the first user_nibble bit and the value of the second user_nibble bit, and the program characteristics definition, as well as the information of the 3D transmission method that can be supported (reproduced in 3D) by the reception device, into the storage unit of the reception device in advance.

**Claims**

1. A video output device comprising a control unit for determining whether a video signal is 3D video or 2D video by a 3D determination method based on video information,
   wherein the video output is switched between 2D video and 3D video based on the determination result.

2. The video output device according to claim 1,
   wherein the video output device comprises a control unit for determining the 3D viewing preparation state of a user,
   wherein the video output is switched between 2D video and 3D video based on the determination result of the video signal and on the 3D viewing preparation state of the user.

3. The video output device according to claim 1 or 2,
   wherein the video output device comprises a control unit for obtaining and processing a description that describes whether the video signal is 3D video, from a control signal transmitted in conjunction with the video signal,
   wherein the 3D determination method based on video information is performed if it is not determined by the descriptor whether the video is 3D video or not, to switch the video output between 2D video and 3D video.

4. A reception device for receiving a digital broadcast signal that is broadcasted as a combined signal of 3D video program content and 2D video program content, the reception device comprising:

   a reception unit for receiving the digital broadcast signal including the program content, as well as first identification information for identifying whether the particular program content is 3D video program or 2D video program; and
   a control unit for determining whether the received program content is 3D video program content or 2D video program content by the first identification information on the program content that is received by the reception unit, and for determining whether the video signal is 3D video or 2D video by a 3D determination method based on video information,
   wherein the 3D determination method based on video information is applied to the program content that is determined as 2D video program content from the first identification information, or to the program content not including the first identification information, to switch the video output between 2D video and 3D video.

5. The reception device according to claim 4,
   wherein the reception device comprises a control unit for determining the 3D viewing preparation state of a user,
   wherein the 3D determination method based on video information is applied to the program content that is determined as 2D video program content from the first identification information, or to the program content not including the first identification information,
   wherein the video output is switched between 2D video and 3D video based on the determination result and on the 3D viewing preparation state of the user.

6. The device according to any of claims 1 to 5, which comprises:

   a display unit for displaying a message to check if the user enables or disables 3D switching; and
   a user operation input unit for receiving a response from the user,
   wherein the message is displayed to the user before the display video is switched to 3D based on the determination result of the video signal,
   wherein the video output is switched between 2D video and 3D video according to the response.

7. The device according to any of claims 1 to 6, which comprises a control unit for adding or inserting information on whether the video signal is 3D video, to the control signal transmitted in conjunction with the video signal,
   wherein the information on whether the video signal is 3D video is added to the control signal based on the determination result of the video signal, and is output to the outside.

8. The device according to any of claims 1 to 7, which comprises:

   a control unit for describing information on whether the video signal is 3D video in the control signal transmitted in conjunction with the video signal; and
   a recording unit for recording the video signal and the control signal,
   wherein the information on whether the video signal is 3D video is added to the control signal based on the determination result of the video signal,
wherein the video signal and the control signal are recorded.

9. The device according to any of claims 1 to 8, which comprises a control unit for determining the switching of the program or video content,
wherein the determination process of the video signal is performed for a certain period of time after the program or the video content is switched.

10. A video output method comprising a video determination step for determining whether a video signal is 3D video or 2D video by a 3D determination method based on video information,
wherein the video output is switched between 2D video and 3D video based on the determination result.

11. The video output method according to claim 10,
wherein the video output method comprises a 3D viewing preparation state determination step for determining the 3D viewing preparation state of a user,
wherein the video output is switched between 2D video and 3D video based on the determination method of the video signal and on the 3D viewing preparation state of the user.

12. The video output method according to claim 10 or 11,
wherein the video output method comprises an identification information determination step for obtaining and processing a description that describes whether the video signal is 3D video, from a control signal transmitted in conjunction with the video signal,
wherein the 3D determination method based on video information is performed only if it is not determined by the description whether the video is 3D video or not, to switch the video output between 2D video and 3D video.

13. A reception method for receiving a digital broadcast signal that is broadcasted as a combined signal of 3D video program content and 2D video program content, the reception method comprising:

a receiving step for receiving the digital broadcast signal including the program content, as well as first identification information for identifying whether the particular program content is 3D video program or 2D video program; and
a video determination step for determining whether the received program content is 3D video program content or 2D video program content by the first identification information on the program content received in the receiving step, and for determining whether the video signal is 3D video or 2D video by a 3D determination method based on video information,
wherein the 3D determination method based on video information is applied to the program content that is determined as 2D video program content by the first identification information, or to the program content not including the first identification information, to switch the video output between 2D video and 3D video.

14. The reception method according to claim 13,
wherein the reception method comprises a 3D viewing preparation state determination step for determining the 3D viewing preparation state of a user,
wherein the 3D determination method based on video information is applied to the program content that is determined as 2D video program content by the first identification information, or to the program content not including the first identification information,
wherein the video output is switched between 2D video and 3D video based on the determination result and on the 3D viewing preparation state of the user.

15. The method according to any of claims 10 to 14, which comprises a message display step for displaying a message to check if the user enables or disables 3D switching; and
a user operation input step for receiving a response of the user,
wherein the message is displayed to the user before the display video is switched to 3D based on the determination result of the video signal,
wherein the video output is switched between 2D video and 3D video according to the response.

16. The method according to any of claims 10 to 15, which comprises a 3D identification information process or 3D information insertion step for adding or inserting information on whether the video signal is 3D video into the control signal transmitted in conjunction with the video signal,

wherein the information on whether the video signal is 3D video is added to the control signal based on the determination result of the video signal, and is preferably output to the outside.

17. The method according to any of claims 10 to 16, which comprises:

a 3D identification information process or 3D information insertion step for adding or inserting information on whether the video signal is 3D video into the control signal transmitted in conjunction with the video signal; and
a recording step for recording the video signal and the control signal,
wherein the information on whether the video signal is 3D video is added to the control signal based on the determination result of the video signal,
wherein the video signal and the control signal are recorded.

18. The method according to any of claims 10 to 17, which comprises a video switching determination or switching determination step for determining the switching of the program or video content,
wherein the determination process of the video signal is performed only for a certain period of time after the program or the video content is switched.

# FIG. 1

# FIG. 2

# FIG. 3

STREAM TYPE ASSIGNMENT

| STREAM TYPE | MEANING |
|---|---|
| 0x00 | UNKNOWN |
| 0x01 | ISO/IEC 11172-2 VIDEO (MPEG1 VIDEO) |
| 0x02 | ITU-T RECOMMENDATION H.262 \| ISO/IEC 13818-2 VIDEO, OR ISO/IEC 11172-2 CONSTRAINT PARAMETER VIDEO STREAM, OR BASE VIEW BIT STREAM (MAIN VIEW) OF H.262 (MPEG2) METHOD FOR TRANSMITTING MULTIPLE 3D VIDEO VIEWS IN DIFFERENT STREAMS |
| 0x03 | ISO/IEC 11172-3 AUDIO |
| 0x04 | ISO/IEC 13818-3 AUDIO |
| 0x05 | ITU-T RECOMMENDATION H.222.0 \| ISO/IEC 13818-1 PRIVATE SECTION |
| 0x06 | ITU-T RECOMMENDATION H.222.0 \| ISO/IEC 13818-1 PES PACKET CONTAINING PRIVATE DATA |
| 0x07 | ISO/IEC 13522 MHEG |
| 0x08 | ITU-T RECOMMENDATION H.222.0 \| ISO/IEC 13818-1 APPENDIX A DSM-CG |
| 0x09 | ITU-T RECOMMENDATION H.222.1 |
| 0x0A | ISO/IEC 13818-6 (TYPE A) |
| 0x0B | ISO/IEC 13818-6 (TYPE B) |
| 0x0C | ISO/IEC 13818-6 (TYPE C) |
| 0x0D | ISO/IEC 13818-6 (TYPE D) (DATA CAROUSEL) |
| 0x0E | DATA TYPE DEFINED IN ITU-T RECOMMENDATION H.222.0 \| ISO/IEC 13818-1 OTHER THAN THE ABOVE RECOMMENDATIONS |
| 0x0F | ISO/IEC 13818-7 AUDIO (ADTS TRANSPORT STRUCTURE) (MPEG2 AAC) |
| 0x10 | ISO/IEC 14496-2 VIDEO |
| 0x11 | ISO/IEC 14496-3 AUDIO (LATM TRANSPORT STRUCTURE DEFINED IN ISO/IEC 14496-3/AMD 1) |
| 0x12 | ISO/IEC 14496-1 SL PACKETIZED STREAM OR FLEX MAX STREAM TRANSMITTED IN PES PACKET |

(CONT.)

(FIG. 3 CONTINUED)

| 0x13 | ISO/IEC 14496-1 SL PACKETIZED STREAM OR FLEX MAX STREAM TRANSMITTED IN ISO/IEC 14496 SECTION |
|---|---|
| 0x14 | ISO/IEC 13818-6 SYNCHRONIZED DOWNLOAD PROTOCOL |
| 0x15 | META DATA TRANSMITTED IN PES PACKET |
| 0x16 | META DATA TRANSMITTED IN THE META DATA SECTION |
| 0x17 | META DATA TRANSMITTED IN ISO/IEC 13818-6 DATA CAROUSEL |
| 0x18 | META DATA TRANSMITTED IN ISO/IEC 13818-6 OBJECT CAROUSEL |
| 0x19 | META DATA TRANSMITTED IN ISO/IEC 13818-6 SYNCHRONIZED DOWNLOAD PROTOCOL |
| 0x1A | IPMP STREAM (MPEG-2 IPMP DEFINED IN ISO/IEC 13818-11) |
| 0x1B | AVC VIDEO STREAM DEFINED IN ITU-T RECOMMENDATION H.264 \| ISO/IEC 14496-10, OR BASE VIEW SUB BIT STREAM (MAIN VIEW) OF MULTI-VIEW VIDEO ENCODED (E.G. H.264/MVC) STREAM |
| 0x1C | ISO/IEC 14496-3 AUDIO (NOT USING ANY ADDITIONAL TRANSPORT STRUCTURES SUCH AS DST, ALS, SLS) |
| 0x1D | ISO/IEC 14496-17 TEXT |
| 0x1E | AUXILIARY VIDEO STREAM DEFINED IN ISO/IEC 23002-3 |
| 0x1F | SCALABLE VIDEO ENCODED (E.G. H.264/SVC) STREAM |
| 0x20 | SUB BIT STREAM (ANOTHER VIEW) OF MULTI-VIEW VIDEO ENCODED (E.G. H.264/MVC) STREAM |
| 0x21 | ANOTHER VIEW BIT STREAM OF H.262 (MPE82) METHOD FOR TRANSMITTING MULTIPLE 3D VIDEO VIEWS IN DIFFERENT STREAMS |
| 0x22 | ANOTHER VIEW BIT STREAM OF AVC STREAM METHOD DEFINED IN ITU-T RECOMMENDATION H.264 \| ISO/IEC 14496-10 VIDEO FOR TRANSMITTING MULTIPLE 3D VIDEO VIEWS IN DIFFERENT STREAMS |
| 0x23 - 0x7E | UNKNOWN |
| 0x7F | IPMP STREAM |
| 0x80 - 0xFF | USER AREA |

# FIG. 4

COMPONENT DESCRIPTOR

| DATA STRUCTURE | NUMBER OF BITS | BIT STRING DESCRIPTION |
|---|---|---|
| component_descriptor () { | | |
| descriptor_tag | 8 | uimsbf |
| descriptor_length | 8 | uimsbf |
| reserved_future_use | 4 | bslbf |
| stream_content | 4 | uimsbf |
| component_type | 8 | uimsbf |
| component_tag | 8 | uimsbf |
| ISO_639_language_code | 24 | bslbf |
| for (i=0;i<N;i++){ | | |
| text_char | 8 | uimsbf |
| } | | |
| } | | |

# FIG. 5A

COMPONENT CONTENT AND COMPONENT TYPE

| COMPONENT CONTENT | COMPONENT TYPE | DESCRIPTION |
|---|---|---|
| 0x00 | 0x00 - 0xFF | RESERVE FOR FUTURE USE |
| 0x01 | 0x00 | RESERVE FOR FUTURE USE |
| 0x01 | 0x01 | VIDEO 480i (525i), ASPECT RATIO 4:3 |
| 0x01 | 0x02 | VIDEO 480i (525i), ASPECT RATIO 16:9 WITH PAN VECTOR |
| 0x01 | 0x03 | VIDEO 480i (525i), ASPECT RATIO 16:9 WITHOUT PAN VECTOR |
| 0x01 | 0x04 | VIDEO 480i (525i), ASPECT RATIO > 16:9 |
| 0x01 | 0x05 - 0x90 | RESERVE FOR FUTURE USE |
| 0x01 | 0x91 | VIDEO 2160p, ASPECT RATIO 4:3 |
| 0x01 | 0x92 | VIDEO 2160p, ASPECT RATIO 16:9 WITH PAN VECTOR |
| 0x01 | 0x93 | VIDEO 2160p, ASPECT RATIO 16:9 WITHOUT PAN VECTOR |
| 0x01 | 0x94 | VIDEO 2160p, ASPECT RATIO > 16:9 |
| 0x01 | 0x95 - 0xA0 | RESERVE FOR FUTURE USE |
| 0x01 | 0xA1 | VIDEO 480p (525p), ASPECT RATIO 4:3 |
| 0x01 | 0xA2 | VIDEO 480p (525p), ASPECT RATIO 16:9 WITH PAN VECTOR |
| 0x01 | 0xA3 | VIDEO 480p (525p), ASPECT RATIO 16:9 WITHOUT PAN VECTOR |
| 0x01 | 0xA4 | VIDEO 480p (525p), ASPECT RATIO > 16:9 |
| 0x01 | 0xA5 - 0xB0 | RESERVE FOR FUTURE USE |
| 0x01 | 0xB1 | VIDEO 1080i (1125i), ASPECT RATIO 4:3 |
| 0x01 | 0xB2 | VIDEO 1080i (1125i), ASPECT RATIO 16:9 WITH PAN VECTOR |
| 0x01 | 0xB3 | VIDEO 1080i (1125i), ASPECT RATIO 16:9 WITHOUT PAN VECTOR |
| 0x01 | 0xB4 | VIDEO 1080i (1125i), ASPECT RATIO > 16:9 |
| 0x01 | 0xB5 - 0xC0 | RESERVE FOR FUTURE USE |

(CONT.)

(FIG. 5A CONTINUED)

| 0x01 | 0xC1 | VIDEO 720p (750p), ASPECT RATIO 4:3 |
|------|------|-------------------------------------|
| 0x01 | 0xC2 | VIDEO 720p (750p), ASPECT RATIO 16:9 WITH PAN VECTOR |
| 0x01 | 0xC3 | VIDEO 720p (750p), ASPECT RATIO 16:9 WITHOUT PAN VECTOR |
| 0x01 | 0xC4 | VIDEO 720p (750p), ASPECT RATIO > 16:9 |
| 0x01 | 0xC5 - 0xD0 | RESERVE FOR FUTURE USE |
| 0x01 | 0xD1 | VIDEO 240p, ASPECT RATIO 4:3 |
| 0x01 | 0xD2 | VIDEO 240p, ASPECT RATIO 16:9 WITH PAN VECTOR |
| 0x01 | 0xD3 | VIDEO 240p, ASPECT RATIO 16:9 WITHOUT PAN VECTOR |
| 0x01 | 0xD4 | VIDEO 240p, ASPECT RATIO > 16:9 |
| 0x01 | 0xD5 - 0xE0 | RESERVE FOR FUTURE USE |
| 0x01 | 0xE1 | VIDEO 1080p (1125p), ASPECT RATIO 4:3 |
| 0x01 | 0xE2 | VIDEO 1080p (1125p), ASPECT RATIO 16:9 WITH PAN VECTOR |
| 0x01 | 0xE3 | VIDEO 1080p (1125p), ASPECT RATIO 16:9 WITHOUT PAN VECTOR |
| 0x01 | 0xE4 | VIDEO 1080p (1125p), ASPECT RATIO > 16:9 |
| 0x01 | 0xE5 - 0xFF | RESERVE FOR FUTURE USE |

# FIG. 5B

COMPONENT CONTENT AND COMPONENT TYPE

| COMPONENT CONTENT | COMPONENT TYPE | DESCRIPTION |
|---|---|---|
| 0x05 | 0x00 | RESERVE FOR FUTURE USE |
| 0x05 | 0x01 | H.264\|MPEG-4 AVC, VIDEO 480i (525i), ASPECT RATIO 4:3 |
| 0x05 | 0x02 | H.264\|MPEG-4 AVC, VIDEO 480i (525i), ASPECT RATIO 16:9 WITH PAN VECTOR |
| 0x05 | 0x03 | H.264\|MPEG-4 AVC, VIDEO 480i (525i), ASPECT RATIO 16:9 WITHOUT PAN VECTOR |
| 0x05 | 0x04 | H.264\|MPEG-4 AVC, VIDEO 480i (525i), ASPECT RATIO > 16:9 |
| 0x05 | 0x05 - 0x90 | RESERVE FOR FUTURE USE |
| 0x05 | 0x91 | H.264\|MPEG-4 AVC, VIDEO 2160p, ASPECT RATIO 4:3 |
| 0x05 | 0x92 | H.264\|MPEG-4 AVC, VIDEO 2160p, ASPECT RATIO 16:9 WITH PAN VECTOR |
| 0x05 | 0x93 | H.264\|MPEG-4 AVC, VIDEO 2160p, ASPECT RATIO 16:9 WITHOUT PAN VECTOR |
| 0x05 | 0x94 | H.264\|MPEG-4 AVC, VIDEO 2160p, ASPECT RATIO > 16:9 |
| 0x05 | 0x95 - 0xA0 | RESERVE FOR FUTURE USE |
| 0x05 | 0xA1 | H.264\|MPEG-4 AVC, VIDEO 480p (525p), ASPECT RATIO 4:3 |
| 0x05 | 0xA2 | H.264\|MPEG-4 AVC, VIDEO 480p (525p), ASPECT RATIO 16:9 WITH PAN VECTOR |
| 0x05 | 0xA3 | H.264\|MPEG-4 AVC, VIDEO 480p (525p), ASPECT RATIO 16:9 WITHOUT PAN VECTOR |
| 0x05 | 0xA4 | H.264\|MPEG-4 AVC, VIDEO 480p (525p), ASPECT RATIO > 16:9 |
| 0x05 | 0xA5 - 0xB0 | RESERVE FOR FUTURE USE |
| 0x05 | 0xB1 | H.264\|MPEG-4 AVC, VIDEO 1080i (1125i), ASPECT RATIO 4:3 |
| 0x05 | 0xB2 | H.264\|MPEG-4 AVC, VIDEO 1080i (1125i), ASPECT RATIO 16:9 WITH PAN VECTOR |
| 0x05 | 0xB3 | H.264\|MPEG-4 AVC, VIDEO 1080i (1125i), ASPECT RATIO 16:9 WITHOUT PAN VECTOR |
| 0x05 | 0xB4 | H.264\|MPEG-4 AVC, VIDEO 1080i (1125i), ASPECT RATIO > 16:9 |
| 0x05 | 0xB5 - 0xC0 | RESERVE FOR FUTURE USE |

(CONT.)

(FIG. 5B CONTINUED)

| 0x05 | 0xC1 | H.264\|MPEG-4 AVC, VIDEO 720p (750p), ASPECT RATIO 4:3 |
|------|------|------------------------------------------------------|
| 0x05 | 0xC2 | H.264\|MPEG-4 AVC, VIDEO 720p (750p), ASPECT RATIO 16:9 WITH PAN VECTOR |
| 0x05 | 0xC3 | H.264\|MPEG-4 AVC, VIDEO 720p (750p), ASPECT RATIO 16:9 WITHOUT PAN VECTOR |
| 0x05 | 0xC4 | H.264\|MPEG-4 AVC, VIDEO 720p (750p), ASPECT RATIO > 16:9 |
| 0x05 | 0xC5 - 0xD0 | RESERVE FOR FUTURE USE |
| 0x05 | 0xD1 | H.264\|MPEG-4 AVC, VIDEO 240p, ASPECT RATIO 4:3 |
| 0x05 | 0xD2 | H.264\|MPEG-4 AVC, VIDEO 240p, ASPECT RATIO 16:9 WITH PAN VECTOR |
| 0x05 | 0xD3 | H.264\|MPEG-4 AVC, VIDEO 240p, ASPECT RATIO 16:9 WITHOUT PAN VECTOR |
| 0x05 | 0xD4 | H.264\|MPEG-4 AVC, VIDEO 240p, ASPECT RATIO > 16:9 |
| 0x05 | 0xD5 - 0xE0 | RESERVE FOR FUTURE USE |
| 0x05 | 0xE1 | H.264\|MPEG-4 AVC, VIDEO 1080p (1125p), ASPECT RATIO 4:3 |
| 0x05 | 0xE2 | H.264\|MPEG-4 AVC, VIDEO 1080p (1125p), ASPECT RATIO 16:9 WITH PAN VECTOR |
| 0x05 | 0xE3 | H.264\|MPEG-4 AVC, VIDEO 1080p (1125p), ASPECT RATIO 16:9 WITHOUT PAN VECTOR |
| 0x05 | 0xE4 | H.264\|MPEG-4 AVC, VIDEO 1080p (1125p), ASPECT RATIO > 16:9 |
| 0x05 | 0xE5 - 0xFF | RESERVE FOR FUTURE USE |

# FIG. 5C

COMPONENT CONTENT AND COMPONENT TYPE

| COMPONENT CONTENT | COMPONENT TYPE | DESCRIPTION |
|---|---|---|
| 0x06 | 0x00 | RESERVE FOR FUTURE USE |
| 0x06 | 0x01 | MULTI-VIEW VIDEO ENCODED, VIDEO 480i (525i), ASPECT RATIO 4:3 |
| 0x06 | 0x02 | MULTI-VIEW VIDEO ENCODED, VIDEO 480i (525i), ASPECT RATIO 16:9 WITH PAN VECTOR |
| 0x06 | 0x03 | MULTI-VIEW VIDEO ENCODED, VIDEO 480i (525i), ASPECT RATIO 16:9 WITHOUT PAN VECTOR |
| 0x06 | 0x04 | MULTI-VIEW VIDEO ENCODED, VIDEO 480i (525i), ASPECT RATIO > 16:9 |
| 0x06 | 0x05 - 0x90 | RESERVE FOR FUTURE USE |
| 0x06 | 0x91 | MULTI-VIEW VIDEO ENCODED, VIDEO 2160p, ASPECT RATIO 4:3 |
| 0x06 | 0x92 | MULTI-VIEW VIDEO ENCODED, VIDEO 2160p, ASPECT RATIO 16:9 WITH PAN VECTOR |
| 0x06 | 0x93 | MULTI-VIEW VIDEO ENCODED, VIDEO 2160p, ASPECT RATIO 16:9 WITHOUT PAN VECTOR |
| 0x06 | 0x94 | MULTI-VIEW VIDEO ENCODED, VIDEO 2160p, ASPECT RATIO > 16:9 |
| 0x06 | 0x95 - 0xA0 | RESERVE FOR FUTURE USE |
| 0x06 | 0xA1 | MULTI-VIEW VIDEO ENCODED, VIDEO 480p (525p), ASPECT RATIO 4:3 |
| 0x06 | 0xA2 | MULTI-VIEW VIDEO ENCODED, VIDEO 480p (525p), ASPECT RATIO 16:9 WITH PAN VECTOR |
| 0x06 | 0xA3 | MULTI-VIEW VIDEO ENCODED, VIDEO 480p (525p), ASPECT RATIO 16:9 WITHOUT PAN VECTOR |
| 0x06 | 0xA4 | MULTI-VIEW VIDEO ENCODED, VIDEO 480p (525p), ASPECT RATIO > 16:9 |
| 0x06 | 0xA5 - 0xB0 | RESERVE FOR FUTURE USE |
| 0x06 | 0xB1 | MULTI-VIEW VIDEO ENCODED, VIDEO 1080i (1125i), ASPECT RATIO 4:3 |

(CONT.)

(FIG. 5C CONTINUED)

| 0x06 | 0xB2 | MULTI-VIEW VIDEO ENCODED, VIDEO 1080i (1125i), ASPECT RATIO 16:9 WITH PAN VECTOR |
|------|------|--------------------------------------------------------------------------------|
| 0x06 | 0xB3 | MULTI-VIEW VIDEO ENCODED, VIDEO 1080i (1125i), ASPECT RATIO 16:9 WITHOUT PAN VECTOR |
| 0x06 | 0xB4 | MULTI-VIEW VIDEO ENCODED, VIDEO 1080i (1125i), ASPECT RATIO > 16:9 |
| 0x06 | 0xB5 - 0xC0 | RESERVE FOR FUTURE USE |
| 0x06 | 0xC1 | MULTI-VIEW VIDEO ENCODED, VIDEO 720p (750p), ASPECT RATIO 4:3 |
| 0x06 | 0xC2 | MULTI-VIEW VIDEO ENCODED, VIDEO 720p (750p), ASPECT RATIO 16:9 WITH PAN VECTOR |
| 0x06 | 0xC3 | MULTI-VIEW VIDEO ENCODED, VIDEO 720p (750p), ASPECT RATIO 16:9 WITHOUT PAN VECTOR |
| 0x06 | 0xC4 | MULTI-VIEW VIDEO ENCODED, VIDEO 720p (750p), ASPECT RATIO > 16:9 |
| 0x06 | 0xC5 - 0xD0 | RESERVE FOR FUTURE USE |
| 0x06 | 0xD1 | MULTI-VIEW VIDEO ENCODED, VIDEO 240p, ASPECT RATIO 4:3 |
| 0x06 | 0xD2 | MULTI-VIEW VIDEO ENCODED, VIDEO 240p, ASPECT RATIO 16:9 WITH PAN VECTOR |
| 0x06 | 0xD3 | MULTI-VIEW VIDEO ENCODED, VIDEO 240p, ASPECT RATIO 16:9 WITHOUT PAN VECTOR |
| 0x06 | 0xD4 | MULTI-VIEW VIDEO ENCODED, VIDEO 240p, ASPECT RATIO > 16:9 |
| 0x06 | 0xD5 - 0xE0 | RESERVE FOR FUTURE USE |
| 0x06 | 0xE1 | MULTI-VIEW VIDEO ENCODED, VIDEO 1080p (1125p), ASPECT RATIO 4:3 |
| 0x06 | 0xE2 | MULTI-VIEW VIDEO ENCODED, VIDEO 1080p (1125p), ASPECT RATIO 16:9 WITH PAN VECTOR |
| 0x06 | 0xE3 | MULTI-VIEW VIDEO ENCODED, VIDEO 1080p (1125p), ASPECT RATIO 16:9 WITHOUT PAN VECTOR |
| 0x06 | 0xE4 | MULTI-VIEW VIDEO ENCODED, VIDEO 1080p (1125p), ASPECT RATIO > 16:9 |
| 0x06 | 0xE5 - 0xFF | RESERVE FOR FUTURE USE |

# FIG. 5D

COMPONENT CONTENT AND COMPONENT TYPE

| COMPONENT CONTENT | COMPONENT TYPE | DESCRIPTION |
|---|---|---|
| 0x07 | 0x00 | RESERVE FOR FUTURE USE |
| 0x07 | 0x01 | 3D VIDEO Side-by-Side 720p, ASPECT RATIO 4:3 |
| 0x07 | 0x02 | 3D VIDEO Side-by-Side 720p, ASPECT RATIO 16:9 WITH PAN VECTOR |
| 0x07 | 0x03 | 3D VIDEO Side-by-Side 720p, ASPECT RATIO 16:9 WITHOUT PAN VECTOR |
| 0x07 | 0x04 | 3D VIDEO Side-by-Side 720p, ASPECT RATIO > 16:9 |
| 0x07 | 0x05 - 0x90 | RESERVE FOR FUTURE USE |
| 0x07 | 0x91 | 3D VIDEO Side-by-Side 1080i, ASPECT RATIO 4:3 |
| 0x07 | 0x92 | 3D VIDEO Side-by-Side 1080i, ASPECT RATIO 16:9 WITH PAN VECTOR |
| 0x07 | 0x93 | 3D VIDEO Side-by-Side 1080i, ASPECT RATIO 16:9 WITHOUT PAN VECTOR |
| 0x07 | 0x94 | 3D VIDEO Side-by-Side 1080i, ASPECT RATIO > 16:9 |
| 0x07 | 0x95 - 0xA0 | RESERVE FOR FUTURE USE |
| 0x07 | 0xA1 | 3D VIDEO Side-by-Side 1080p, ASPECT RATIO 4:3 |
| 0x07 | 0xA2 | 3D VIDEO Side-by-Side 1080p, ASPECT RATIO 16:9 WITH PAN VECTOR |
| 0x07 | 0xA3 | 3D VIDEO Side-by-Side 1080p, ASPECT RATIO 16:9 WITHOUT PAN VECTOR |
| 0x07 | 0xA4 | 3D VIDEO Side-by-Side 1080p, ASPECT RATIO > 16:9 |
| 0x07 | 0xA5 - 0xFF | RESERVE FOR FUTURE USE |

# FIG. 5E

COMPONENT CONTENT AND COMPONENT TYPE

| COMPONENT CONTENT | COMPONENT TYPE | DESCRIPTION |
|---|---|---|
| 0x08 | 0x00 | RESERVE FOR FUTURE USE |
| 0x08 | 0x01 | 3D VIDEO Top-and-Bottom 720p, ASPECT RATIO 4:3 |
| 0x08 | 0x02 | 3D VIDEO Top-and-Bottom 720p, ASPECT RATIO 16:9 WITH PAN VECTOR |
| 0x08 | 0x03 | 3D VIDEO Top-and-Bottom 720p, ASPECT RATIO 16:9 WITHOUT PAN VECTOR |
| 0x08 | 0x04 | 3D VIDEO Top-and-Bottom 720p, ASPECT RATIO > 16:9 |
| 0x08 | 0x05 - 0x90 | RESERVE FOR FUTURE USE |
| 0x08 | 0x91 | 3D VIDEO Top-and-Bottom 1080i, ASPECT RATIO 4:3 |
| 0x08 | 0x92 | 3D VIDEO Top-and-Bottom 1080i, ASPECT RATIO 16:9 WITH PAN VECTOR |
| 0x08 | 0x93 | 3D VIDEO Top-and-Bottom 1080i, ASPECT RATIO 16:9 WITHOUT PAN VECTOR |
| 0x08 | 0x94 | 3D VIDEO Top-and-Bottom 1080i, ASPECT RATIO > 16:9 |
| 0x08 | 0x95 - 0xA0 | RESERVE FOR FUTURE USE |
| 0x08 | 0xA1 | 3D VIDEO Top-and-Bottom 1080p, ASPECT RATIO 4:3 |
| 0x08 | 0xA2 | 3D VIDEO Top-and-Bottom 1080p, ASPECT RATIO 16:9 WITH PAN VECTOR |
| 0x08 | 0xA3 | 3D VIDEO Top-and-Bottom 1080p, ASPECT RATIO 16:9 WITHOUT PAN VECTOR |
| 0x08 | 0xA4 | 3D VIDEO Top-and-Bottom 1080p, ASPECT RATIO > 16:9 |
| 0x08 | 0xA5 - 0xFF | RESERVE FOR FUTURE USE |
| 0x09 - 0x0B | 0x00 - 0xFF | RESERVE FOR FUTURE USE |
| 0x0C - 0x0F | 0x00 - 0xFF | SERVICE PROVIDER DEFINITION |

# FIG. 6

COMPONENT GROUP DESCRIPTOR

| DATA STRUCTURE | NUMBER OF BITS | BIT STRING DESCRIPTION |
|---|---|---|
| component_group_descriptor () { | | |
|     descriptor_tag | 8 | uimsbf |
|     descriptor_length | 8 | uimsbf |
|     component_group_type | 3 | uimsbf |
|     total_bit_rate_flag | 1 | uimsbf |
|     num_of_group | 4 | uimsbf |
|     for (i=0;i<num_of_group;i++){ | | |
|         component_group_id | 4 | uimsbf |
|         num_of_CA_unit | 4 | uimsbf |
|         for (i=0;i<num_of_CA_unit;i++){ | | |
|             CA_unit_id | 4 | uimsbf |
|             num_of_component | 4 | uimsbf |
|             for (i=0;i<num_of_component_unit;i++){ | | |
|                 component_tag | 8 | uimsbf |
|             } | | |
|         } | | |
|         if(total_bit_rate_flag==1){ | | |
|             total_bit_rate | 8 | uimsbf |
|         } | | |
|         text_length | 8 | uimsbf |
|         for (i=0;i<text_length;i++){ | | |
|             text_char | 8 | uimsbf |
|         } | | |
|     } | | |
| } | | |

# FIG. 7

COMPONENT GROUP TYPE

| COMPONENT GROUP TYPE | DESCRIPTION |
|---|---|
| 000 | MULTI-VIEW TV SERVICE |
| 001 | 3DTV SERVICE |
| 002 – 111 | UNKNOWN |

# FIG. 8

COMPONENT GROUP IDENTIFICATION

| COMPONENT GROUP IDENTIFICATION | DESCRIPTION |
|---|---|
| 0x0 | MAIN GROUP |
| 0x1 – 0xF | SUB GROUP |

# FIG. 9

CHARGE UNIT IDENTIFICATION

| CHARGE UNIT IDENTIFICATION | DESCRIPTION |
|---|---|
| 0x0 | NON-CHARGE UNIT GROUP |
| 0x1 | CHARGE UNIT GROUP INCLUDING DEFAULT ES GROUP |
| 0x2 – 0xF | OTHER CHARGE UNIT GROUPS |

# FIG. 10A

DETAILED 3D PROGRAM DESCRIPTOR

| DATA STRUCTURE | NUMBER OF BITS | BIT STRING DESCRIPTION |
|---|---|---|
| 3d_encode_descriptor () { | | |
|  descriptor_tag | 8 | uimsbf |
|  descriptor_length | 8 | uimsbf |
|  3d_2d_type | 8 | uimsbf |
|  3d_method_type | 8 | uimsbf |
|  stream_type | 8 | uimsbf |
|  for (i=0;i<N;i++){ | | |
|   component_tag | 8 | uimsbf |
|  } | | |
| } | | |

# FIG. 10B

3D/2D IDENTIFICATION

| 3D/2D IDENTIFICATION | DESCRIPTION |
|---|---|
| 0x00 | RESERVED FOR FUTURE USE |
| 0x01 | 3D IMAGE |
| 0x02 | 2D IMAGE |
| 0x03 – 0x0F | RESERVED FOR FUTURE USE |
| | |

# FIG. 11

3D METHOD IDENTIFICATION

| 3D METHOD IDENTIFICATION | DESCRIPTION |
|---|---|
| 0x00 | RESERVED FOR FUTURE USE |
| 0x01 | 3D2 VIEW-BASED ES TRANSMISSION METHOD |
| 0x02 | Side-by-Side METHOD |
| 0x03 | Top-and-Bottom METHOD |
| 0x04 – 0x0F | RESERVE FOR FUTURE USE |

# FIG. 12

SERVICE DESCRIPTOR

| DATA STRUCTURE | NUMBER OF BITS | BIT STRING DESCRIPTION |
|---|---|---|
| service_descriptor () { | | |
|     descriptor_tag | 8 | uimsbf |
|     descriptor_length | 8 | uimsbf |
|     service_type | 8 | uimsbf |
|     service_provider_name_length | 8 | uimsbf |
|     for (i=0;i<N;i++){ | | |
|         char | 8 | uimsbf |
|     } | | |
|     service_name_length | 8 | uimsbf |
|     for (i=0;i<N;i++){ | | |
|         char | 8 | uimsbf |
|     } | | |
| } | | |

# FIG. 13

SERVICE TYPE

| SERVICE TYPE | MEANING |
|---|---|
| 0x00 | UNKNOWN |
| 0x01 | DIGITAL TV SERVICE |
| 0x02 | DIGITAL AUDIO SERVICE |
| 0x03 – 0x10 | UNKNOWN |
| 0x11 | 3D VIDEO SERVICE |
| 0x12 – 0x7F | UNKNOWN |
| 0x80 – 0xA0 | SERVICE PROVIDER DEFINITION |
| 0xA1 | SPECIAL VIDEO SERVICE |
| 0xA2 | SPECIAL AUDIO SERVICE |
| 0xA3 | SPECIAL DATA SERVICE |
| 0xA4 | ENGINEERING SERVICE |
| 0xA5 | PROMOTIONAL VIDEO SERVICE |
| 0xA6 | PROMOTIONAL AUDIO SERVICE |
| 0xA7 | PROMOTIONAL DATA SERVICE |
| 0xA8 | DATA SERVICE FOR ACCUMULATION IN ADVANCE |
| 0xA9 | DATA SERVICE EXCLUSIVE FOR ACCUMULATION |
| 0xAA | BOOKMARK LIST DATA SERVICE |
| 0xAB | SERVER-TYPE SIMULTANEOUS SERVICE |
| 0xAC | INDEPENDENT FILE SERVICE |
| 0xAD – 0xBF | UNKNOWN (AREA DEFINED BY STANDARDIZATION ORGANIZATION) |
| 0xC0 | DATA SERVICE |
| 0xC1 | TLV-BASED CUMULATIVE SERVICE |
| 0xC2 – 0xFF | UNKNOWN |

# FIG. 14

SERVICE LIST DESCRIPTOR

| DATA STRUCTURE | NUMBER OF BITS | BIT STRING DESCRIPTION |
|---|---|---|
| service_list_descriptor () { | | |
|     descriptor_tag | 8 | uimsbf |
|     descriptor_length | 8 | uimsbf |
|     for (i=0;i<N;i++){ | | |
|         service_id | 16 | uimsbf |
|         service_type | 8 | uimsbf |
|     } | | |
| } | | |

# FIG. 15

COMPONENT DESCRIPTOR TRANSMISSION OPERATION RULES

| TRANSMISSION OPERATION RULES OF THE FIELDS | |
|---|---|
| descriptor_tag | DESCRIBE "0x50". |
| descriptor_length | DESCRIBE THE DESCRIPTOR LENGTH OF THE COMPONENT DESCRIPTOR. THE MAXIMUM VALUE IS NOT SPECIFIED. |
| stream_content | DESCRIBE "0x01" (VIDEO). |
| component_type | DESCRIBE THE VIDEO COMPONENT TYPE OF THE PARTICULAR COMPONENT |
| component_tag | DESCRIBE A UNIQUE COMPONENT TAG VALUE IN THE PARTICULAR PROGRAM |
| ISO_639_language_code | DESCRIBE "jpn ("0x6A706E")". |
| text_char | DESCRIBE AS A VIDEO TYPE NAME WITHIN 16 BYTES (8 TWO-BYTE CHARACTERS) WHEN A PLURALITY OF VIDEO COMPONENTS ARE PRESENT. THE LINE FEED CODE IS NOT USED. THIS FIELD CAN BE OMITTED IF THE COMPONENT DESCRIPTION IS A DEFAULT CHARACTER STRING. THE DEFAULT CHARACTER STRING IS "VIDEO". |

# FIG. 16

COMPONENT GROUP DESCRIPTOR TRANSMISSION OPERATION RULES

| TRANSMISSION OPERATION RULES OF THE FIELDS | |
|---|---|
| descriptor_tag | DESCRIBE "0xD9". |
| descriptor_length | DESCRIBE THE DESCRIPTOR LENGTH OF THE COMPONENT GROUP DESCRIPTOR. THE MAXIMUM VALUE IS NOT SPECIFIED. |
| component_group_type | INDICATE THE TYPE OF THE COMPONENT GROUP. '000': MULTI-VIEW TV '001': 3D TV |
| total_bit_rate_flag | = '0': ALL OF THE TOTAL BIT RATES OF THE GROUPS IN THE EVENT ARE A SPECIFIED DEFAULT. = '1': ANY OF THE TOTAL BIT RATES OF THE GROUPS IN THE EVENT EXCEED THE SPECIFIED DEFAULT. |
| num_of_group | DESCRIBE THE NUMBER OF COMPONENT GROUPS IN THE EVENT. MAXIMUM NUMBER IS 3 FOR MVTV. MAXIMUM NUMBER IS 2 FOR 3DTV. |
| component_group_id | DESCRIBE THE COMPONENT GROUP IDENTIFICATION. ASSIGN "0x0" TO THE MAIN GROUP. A UNIQUE ID IS ASSIGNED TO EACH SUB GROUP IN THE EVENT BY THE SERVICE PROVIDER. |
| num_of_CA_unit | DESCRIBE THE NUMBER OF CHARGE/NON-CHARGE UNITS IN THE COMPONENT GROUP. THE MAXIMUM VALUE IS 2. ASSIGN "0x1" TO THE COMPONENT GROUP IN WHICH NO COMPONENT FOR CHARGING IS INCLUDED. |
| CA_unit_id | DESCRIBE THE CHARGE UNIT IDENTIFICATION. A UNIQUE ID IS ASSIGNED IN THE EVENT BY THE SERVICE PROVIDER. |
| num_of_component | DESCRIBE THE NUMBER OF COMPONENTS BELONGING TO THE PARTICULAR COMPONENT GROUP, AND BELONGING TO THE CHARGE/NON-CHARGE UNIT INDICATED BY THE PREVIOUS CA_unit_id. THE MAXIMUM NUMBER IS 15. |
| component_tag | DESCRIBE THE COMPONENT TAG VALUE BELONGING TO THE COMPONENT GROUP |
| total_bit_rate | DESCRIBE THE TOTAL BIT RATE OF THE COMPONENT GROUP. ASSIGN "0x00" IF IT IS DEFAULT. |
| text_length | DESCRIBE THE BYTE LENGTH OF THE FOLLOWING COMPONENT GROUP DESCRIPTION. THE MAXIMUM VALUE IS 16 (8 TWO-TYPE CHARACTERS). |
| text_char | SURELY DESCRIBE ABOUT THE COMPONENT GROUP. THE DEFAULT CHARACTER STRING IS NOT SPECIFIED. THE LINE FEED CODE IS NOT USED. |

# FIG. 17

DETAILED 3D PROGRAM DESCRIPTOR TRANSMISSION OPERATION RULES

| TRANSMISSION OPERATION RULES OF THE FIELDS | |
|---|---|
| descriptor_tag | DESCRIBE "0xE1". |
| descriptor_length | DESCRIBE THE DESCRIPTOR LENGTH OF THE DETAILED 3D PROGRAM DESCRIPTOR. |
| 3d_2d_type | DESCRIBE 3D/2D IDENTIFICATION.<br>THIS IS SET FROM FIG. 10B. |
| 3d_method_type | DESCRIBE 3D METHOD IDENTIFICATION.<br>THIS IS SET FROM FIG. 11. |
| stream_type | DESCRIBE THE ES TYPE OF THE PROGRAM.<br>THIS IS SET FROM FIG. 3. |
| component_tag | DESCRIBE A UNIQUE COMPONENT TAG VALUE IN THE PARTICULAR PROGRAM. |

# FIG. 18

SERVICE DESCRIPTOR TRANSMISSION OPERATION RULES

| TRANSMISSION OPERATION RULES OF THE FIELDS | |
|---|---|
| descriptor_tag | DESCRIBE "0x48". |
| descriptor_length | DESCRIBE THE DESCRIPTOR LENGTH OF THE SERVICE DESCRIPTOR. |
| service_type | DESCRIBE THE SERVICE TYPE. THIS IS SET FROM FIG. 13. |
| service_provider_name_length | DESCRIBE THE SERVICE PROVIDER NAME LENGTH FOR BS/CS DIGITAL TV BROADCASTING.<br>THE MAXIMUM VALUE IS 20.<br>DESCRIBE "0x00" FOR TERRESTRIAL DIGITAL TV BROADCASTING, AS IT DOES NOT SUPPORT "service_provide_name". |
| char | DESCRIBE THE SERVICE PROVIDER NAME FOR BC/CS DIGITAL TV BROADCASTING<br>(UP TO 10 TWO-BYTE CHARACTERS).<br>DESCRIBE NOTHING FOR TERRESTRIAL DIGITAL TV BROADCASTING. |
| service_name_length | DESCRIBE THE SUB-CHANNEL NAME LENGTH.<br>THE MAXIMUM VALUE IS 20. |
| char | DESCRIBE THE SUB-CHANNEL NAME (WITHIN 20 BYTES UP TO 10 TWO-BYTE CHARACTERS). |

# FIG. 19

SERVICE LIST DESCRIPTOR TRANSMISSION OPERATION RULES

| TRANSMISSION OPERATION RULES OF THE FIELDS | |
|---|---|
| descriptor_tag | DESCRIBE "0x41". |
| descriptor_length | DESCRIBE THE DESCRIPTOR LENGTH OF THE SERVICE LIST DESCRIPTOR. |
| loop | DESCRIBE A LOOP OF THE NUMBER OF SERVICES INCLUDED IN THE TARGET TRANSPORT STREAM. |
| service_id | DESCRIBE service_id INCLUDED IN THE PARTICULAR TRANSPORT STREAM. |
| service_type | DESCRIBE THE SERVICE TYPE OF THE TARGET SERVICE. THIS IS SET FROM FIG. 13. |

# FIG. 20

COMPONENT DESCRIPTOR RECEPTION OPERATION REQUIREMENTS

| RECEPTION OPERATION REQUIREMENTS OF THE FIELDS | |
|---|---|
| descriptor_tag | DETERMINED THAT THE DESCRIPTOR WITH "0x50" IS THE COMPONENT DESCRIPTOR. |
| descriptor_length | DETERMINED AS THE DESCRIPTOR LENGTH OF THE COMPONENT DESCRIPTOR. |
| stream_content | = "0x01", "0x05", "0x06", "0x07": DETERMINED TO BE VALID (VIDEO).<br>≠ "0x01", "0x05", "0x06", "0x07": DETERMINED TO BE INVALID. |
| component_type | DETERMINED AS THE VIDEO COMPONENT TYPE OF THE PARTICULAR COMPONENT (SEE FIG. 5 FOR THE COMPONENT TYPE). |
| component_tag | UNIQUE COMPONENT TAG VALUE IN THE PARTICULAR PROGRAM, ABLE TO BE USED ACCORDING TO THE COMPONENT TAG VALUE OF THE PMT STREAM IDENTIFIER. |
| ISO_639_language_code | TREAT THE FOLLOWING CHARACTER CODE AS "jpn", EVEN IF IT IS OTHER THAN "jpn ("0x6A706E")". |
| text_char | DETERMINED AS THE COMPONENT DESCRIPTOR WITHIN 16 BYTES (8 TWO-BYTE CHARACTERS).<br>IT IS DETERMINED AS THE DEFAULT COMPONENT DESCRIPTION IF THIS FIELD IS OMITTED.<br>THE DEFAULT STRING IS "VIDEO". |

# FIG. 21

COMPONENT GROUP DESCRIPTOR RECEPTION OPERATION REQUIREMENTS

| RECEPTION OPERATION REQUIREMENTS OF THE FIELDS | |
|---|---|
| descriptor_tag | = "0xD9": DETERMINED THAT THE PARTICULAR DESCRIPTOR IS THE COMPONENT GROUP DESCRIPTOR. |
| descriptor_length | DETERMINED AS THE DESCRIPTOR LENGTH OF THE COMPONENT GROUP DESCRIPTOR. |
| component_group_type | '000': DETERMINED AS MULTI-VIEW TV SERVICE. '001': DETERMINED AS 3D TV SERVICE. |
| total_bit_rate_flag | = '0': DETERMINED THAT THE TOTAL BIT RATE OF THE GROUP IN THE EVENT IS NOT DESCRIBED IN THE PARTICULAR DESCRIPTOR. = '1': DETERMINED THAT THE TOTAL BIT RATE OF THE GROUP IN THE EVENT IS DESCRIBED IN THE PARTICULAR DESCRIPTOR. |
| num_of_group | DETERMINED AS THE NUMBER OF COMPONENT GROUPS IN THE EVENT. IF THERE IS A MAXIMUM VALUE, THE NUMBER OF THE COMPONENT GROUPS EXCEEDING THE MAXIMUM VALUE MAY BE TREATED AS THE MAXIMUM VALUE. |
| component_group_id | = "0x0": DETERMINED AS THE MAIN GROUP. ≠ "0x0": DETERMINED AS THE SUB GROUP. |
| num_of_CA_unit | DETERMINED AS THE NUMBER OF CHARGE/ NON-CHARGE UNITS IN THE COMPONENT GROUP. IF THE NUMBER EXCEEDS THE MAXIMUM VALUE, IT MAY BE TREATED AS 2. |
| CA_unit_id | "0x0": DETERMINED AS THE NON-CHARGE UNIT GROUP. "0x1": DETERMINED AS THE CHARGE UNIT INCLUDING THE DEFAULT ES GROUP. OTHER VALUES: DETERMINED AS OTHER CHARGE UNIT IDENTIFICATIONS. |
| num_of_component | DETERMINED AS THE NUMBER OF COMPONENTS BELONGING TO THE PARTICULAR COMPONENT, AND BELONGING TO THE CHARGE/NON-CHARGE UNIT INDICATED BY THE PREVIOUS CA_unit_id. IF THE NUMBER EXCEEDS THE MAXIMUM VALUE, IT MAY BE TREATED AS 15. |
| component_tag | DETERMINED AS THE COMPONENT TAG VALUE BELONGING TO THE COMPONENT GROUP. THIS CAN BE USED ACCORDING TO THE COMPONENT TAG VALUE OF THE PMT STREAM IDENTIFIER. |
| total_bit_rate | DETERMINED AS THE TOTAL BIT RATE OF THE COMPONENT GROUP. HOWEVER, "0x00" IS DETERMINED AS DEFAULT. |
| text_length | ≤ 16 (8 TWO-BYTE CHARACTERS): DETERMINED AS THE COMPONENT GROUP DESCRIPTOR LENGTH. >16 (8 TWO-BYTE CHARACTERS): ABLE TO IGNORE THE DESCRIPTION OF THE PART OF THE COMPONENT GROUP DESCRIPTION LENGTH EXCEEDING 16 BYTES (8 TWO-BYTE CHARACTERS). |
| text_char | INDICATE THE DESCRIPTION OF THE COMPONENT GROUP. |

# FIG. 22

DETAILED 3D PROGRAM DESCRIPTOR TRANSMISSION OPERATION RULES

| TRANSMISSION OPERATION RULES OF THE FIELDS | |
|---|---|
| descriptor_tag | DESCRIBE "0xE1". |
| descriptor_length | DESCRIBE THE DESCRIPTOR LENGTH OF THE DETAILED 3D PROGRAM DESCRIPTOR. |
| 3d_2d_type | DETERMINED AS 3D/2D IDENTIFICATION IN THE PARTICULAR 3D PROGRAM. THIS IS SPECIFIED FROM FIG. 10B. |
| 3d_method_type | DETERMINED AS THE 3D METHOD IDENTIFICATION IN THE PARTICULAR 3D PROGRAM. THIS IS SPECIFIED FROM FIG. 11 |
| stream_type | DETERMINED AS THE TYPE OF ES OF THE PARTICULAR 3D PROGRAM. THIS IS SPECIFIED FROM FIG. 3. |
| component_tag | DETERMINED AS THE UNIQUE COMPONENT TAG VALUE IN THE 3D PROGRAM. |

# FIG. 23

SERVICE DESCRIPTOR RECEPTION OPERATION REQUIREMENTS

| RECEPTION OPERATION REQUIREMENTS OF THE FIELDS | |
|---|---|
| descriptor_tag | = "0x48": DETERMINED THAT THE PARTICULAR DESCRIPTOR IS THE SERVICE DESCRIPTOR. |
| descriptor_length | DETERMINED AS THE DESCRIPTOR LENGTH OF THE SERVICE DESCRIPTOR. |
| service_type | DETERMINED THAT THE PARTICULAR DESCRIPTOR IS VALID IF IT IS OTHER THAN service_type SHOWN IN FIG. 13. |
| service_provider_name_length | BS/CS DIGITAL TV BROADCASTING: ≤ 20: DETERMINED AS THE PROVIDER NAME LENGTH. >20: DETERMINED THAT THE SERVICE PROVIDER NAME IS INVALID. TERRESTRIAL DIGITAL TV BROADCASTING: DETERMINED TO BE INVALID IF IT IS OTHER THAN "0x00". |
| char | BS/CS DIGITAL TV BROADCASTING: DETERMINED AS THE SERVICE PROVIDER NAME. TERRESTRIAL DIGITAL TV BROADCASTING: IGNORE THE DESCRIPTION CONTENT. |
| service_name_length | ≤ 20: DETERMINED AS THE SUB-CHANNEL NAME LENGTH. >20: DETERMINED THAT THE SUB-CHANNEL NAME IS INVALID. |
| char | DETERMINED AS THE SUB-CHANNEL NAME. |

# FIG. 24

SERVICE LIST DESCRIPTOR (NIT SECOND LOOP)
RECEPTION OPERATION REQUIREMENTS

| RECEPTION OPERATION REQUIREMENTS OF THE FIELDS | |
|---|---|
| descriptor_tag | DETERMINED THAT THE PARTICULAR DESCRIPTOR IS THE SERVICE LIST DESCRIPTOR IF IT IS "0x41". |
| descriptor_length | DETERMINED AS THE DESCRIPTOR LENGTH OF THE SERVICE LIST DESCRIPTOR. |
| loop | DESCRIBE A LOOP OF THE NUMBER OF SERVICES INCLUDED IN THE TARGET TRANSPORT STREAM. |
| service_id | DETERMINED AS service_id FOR THE PARTICULAR TRANSPORT STREAM. |
| service_type | INDICATE THE SERVICE TYPE OF THE TARGET SERVICE. IT IS DETERMINED THAT THE SERVICE TYPE OTHER THAN SPECIFIED IN FIG. 13 IS INVALID. |

## FIG. 25

INPUT BY USER
OPERATION

DEVICE CONTROL
SIGNAL TRANSMISSION

- 45
- 44

21 — CPU

34 — TIMER

33 — CONTROL SIGNAL TRANSMISSION RECEPTION

47 — DISPLAY

22

4

23 — TUNER

24 — DESCRAMBLER

29 — DE-MULTIPLEXING

30 — VIDEO DECODING

VIDEO CONVERSION PROCESSING

43 — CONTROL SIGNAL

41 — VIDEO OUTPUT

32

3

25 — NETWORK I/F

27 — RECORDING REPRODUCING

31 — AUDIO DECODING

SPEAKER — 48

42 — AUDIO OUTPUT

26 — RECORDING MEDIUM

46 — HIGH-SPEED DIGITAL I/F

49 — MULTIMEDIA I/F

35 — VIDEO ENCODING

37 — MULTIPLEXING

36 — AUDIO ENCODING

→ : SIGNAL FLOW

········ : CONTROL CONNECTION

EP 2 451 174 A2

60

# FIG. 26

USER INSTRUCTION RECEPTION — 52

DEVICE CONTROL SIGNAL TRANSMISSION — 53

TIME MANAGEMENT — 55

SYSTEM CONTROL — 51

OSD GENERATION — 60

NETWORK CONTROL — 56

RECORDING REPRODUCING CONTROL — 58

PROGRAM INFORMATION ANALYSIS — 54

CHANNEL SELECTION CONTROL — 59

VIDEO CONVERSION CONTROL — 61

DECODE CONTROL — 57

EP 2 451 174 A2

# FIG. 27

3501

3503

3502

# FIG. 28

3603

3601

3503

3502

3602

# FIG. 29A

ENCODED VIDEO

OUTPUT/DISPLAY VIDEO

TIME DIRECTION

M1 M2 M3 ...

MAIN VIEW ES

S1 S2 S3 ...

SUB VIEW ES

3D OUTPUT/ DISPLAY

TIME DIRECTION

M1 S1 M2 S2 M3 S3 ...

# FIG. 29B

ENCODED VIDEO

OUTPUT/DISPLAY VIDEO

TIME DIRECTION

M1 M2 M3 ...

MAIN VIEW ES

S1 S2 S3 ...

SUB VIEW ES

3D OUTPUT/ DISPLAY

LEFT EYE DISPLAY AREA

RIGHT EYE DISPLAY AREA

TIME DIRECTION

M1 M2 M3 ...

S1 S2 S3 ...

# FIG. 30

ENCODED VIDEO                    OUTPUT/DISPLAY VIDEO

TIME DIRECTION →

M1   M2   M3   ...

MAIN VIEW ES

2D OUTPUT/
DISPLAY →

TIME DIRECTION →

M1   M2   M3   ...

S1   S2   S3   ...

SUB VIEW ES

# FIG. 31A

ENCODED VIDEO

TIME DIRECTION

3D OUTPUT/
DISPLAY

OUTPUT/DISPLAY VIDEO

TIME DIRECTION

L1 R1    L2 R2    L3 R3  ...

Side-by-Side METHOD

L1 R1 L2 R2 L3 R3 ...

L1    L2    L3
R1    R2    R3  ...

Top-and-Bottom METHOD

# FIG. 31B

OUTPUT/DISPLAY VIDEO

TIME DIRECTION

ENCODED VIDEO

3D OUTPUT/
DISPLAY

TIME DIRECTION

L1 R1    L2 R2    L3 R3  ...

Side-by-Side METHOD

LEFT EYE
DISPLAY
AREA

L1    L2    L3  ...

RIGHT EYE
DISPLAY
AREA

R1    R2    R3  ...

L1    L2    L3
R1    R2    R3  ...

Top-and-Bottom METHOD

## FIG. 32A

ENCODED VIDEO

TIME DIRECTION →

2D OUTPUT/
DISPLAY
⇨

L1 R1   L2 R2   L3 R3  ...

Side-by-Side METHOD

OUTPUT/DISPLAY VIDEO

TIME DIRECTION →

L1   L2   L3  ...

## FIG. 32B

ENCODED VIDEO

TIME DIRECTION →

2D OUTPUT/
DISPLAY
⇨

L1   L2   L3
R1   R2   R3  ...

Top-and-Bottom METHOD

OUTPUT/DISPLAY VIDEO

TIME DIRECTION →

L1   L2   L3  ...

## FIG. 32C

ENCODED VIDEO

TIME DIRECTION →

2D OUTPUT/
DISPLAY
⇨

L1 R1   L2 R2   L3 R3  ...

Side-by-Side METHOD

OUTPUT/DISPLAY VIDEO

TIME DIRECTION →

L1 R1   L2 R2   L3 R3  ...

## FIG. 32D

ENCODED VIDEO

TIME DIRECTION →

2D OUTPUT/
DISPLAY
⇨

L1   L2   L3
R1   R2   R3  ...

Top-and-Bottom METHOD

OUTPUT/DISPLAY VIDEO

TIME DIRECTION →

L1   L2   L3
R1   R2   R3  ...

## FIG. 33

701

# 3D PROGRAM B
# (2D DISPLAY)

3D PROGRAM IS STARTED.
WEAR 3D GLASSES AND
PRESS THE "3D/OK" KEY.

| OK/3D | CANCEL |

1601          1602

## FIG. 34

701

3D PROGRAM IS CURRENTLY ON THE AIR

| VIEW IN 3D | (OK, AFTER WEARING THE 3D GLASSES) |
| VIEW IN 2D | |

1202          1201

# FIG. 35

EXAMPLES OF STREAM COMBINATION FOR TRANSMITTING MULTIPLE 3D VIDEO VIEWS IN DIFFERENT ESS
("3D2 VIEW-BASED ES TRANSMISSION METHOD")

| | MAIN VIEW (LEFT EYE) VIDEO ES | SUB VIEW (RIGHT EYE) VIDEO ES |
|---|---|---|
| COMBINATION EXAMPLE 1 | BASE VIEW SUB BIT STREAM (MAIN VIEW) OF MULTI-VIEW VIDEO ENCODED (E.G. H.264/MVC) STREAM (STREAM TYPE 0x1B) | SUB BIT STREAM (ANOTHER VIEW) OF MULTI-VIEW VIDEO ENCODED (E.G. H.264/MVC) STREAM (STREAM TYPE 0x20) |
| COMBINATION EXAMPLE 2 | BASE VIEW BIT STEAM (MAIN VIEW) OF H.262 (MPEG2) METHOD FOR TRANSMITTING MULTIPLE 3D VIDEO VIEWS IN DIFFERENT STREAMS (STREAM TYPE 0x02) | ANOTHER VIEW BIT STREAM (STREAM TYPE 0x22) OF AVC STREAM METHOD DEFINED IN ITU-T RECOMMENDATION H.264|ISO/IEC 14496-10 VIDEO FOR TRANSMITTING MULTIPLE 3D VIDEO VIEWS IN DIFFERENT STREAMS |
| COMBINATION EXAMPLE 3 | BASE VIEW BIT STREAM (MAIN VIEW) OF H.262 (MPEG2) METHOD FOR TRANSMITTING MULTIPLE 3D VIDEO VIEWS IN INDIFFERENT STREAMS (STREAM TYPE 0x02) | ANOTHER VIEW BIT STREAM (STREAM TYPE 0x21) OF H.262 (MPEG2) METHOD FOR TRANSMITTING MULTIPLE 3D VIDEO VIEWS IN DIFFERENT STREAMS |
| COMBINATION EXAMPLE 4 | BASE VIEW SUB BIT STREAM (MAIN VIEW) OF MULTI-VIEW VIDEO ENCODED (E.G. H.264/WVC) STREAM (STREAM TYPE 0x18) | ANOTHER VIEW BIT STREAM (STEAM TYPE 0x21) OF H.262 (MPEG2) METHOD FOR TRANSMITTING MULTIPLE 3D VIDEO VIEWS IN DIFFERENT STREAMS |

EP 2 451 174 A2

# FIG. 36

CONTENT DESCRIPTOR

| DATA STRUCTURE | NUMBER OF BITS | BIT STRING DESCRIPTION |
|---|---|---|
| content_descriptor () { | | |
|     descriptor_tag | 8 | uimsbf |
|     descriptor_length | 8 | uimsbf |
|     for (i=0;i<N;i++) { | | |
|         content_nibble_level_1 | 4 | uimsbf |
|         content_nibble_level_2 | 4 | uimsbf |
|         user_nibble | 4 | uimsbf |
|         user_nibble | 4 | uimsbf |
|     } | | |
| } | | |

# FIG. 37

EXAMPLE OF CODE TABLE OF PROGRAM CATEGORIES INDICATED
BY CONTENT DESCRIPTORS
(WHEN THE VALUE OF content_nibble_level_1 IS NOT "0xE")

| content_nibble_level_1 (MAJOR PROGRAM CATEGORY) | content_nibble_level_2 (MEDIUM PROGRAM CATEGORY) | CATEGORY | REMARKS |
|---|---|---|---|
| 0x0 | – | "NEWS REPORTS" | MAJOR CATEGORY |
| 0x0 | 0x1 | "WEATHER" | MEDIUM CATEGORY |
| 0x0 | 0x2 | "FEATURE, DOCUMENTARY" | MEDIUM CATEGORY |
| ... | ... | ... | |
| 0x1 | – | "SPORTS" | MAJOR CATEGORY |
| 0x1 | 0x1 | "BASEBALL" | MEDIUM CATEGORY |
| 0x1 | 0x2 | "FOOTBALL" | MEDIUM CATEGORY |
| ... | ... | ... | |

# FIG. 38

EXAMPLE OF CODE TABLE OF PROGRAM CHARACTERISTICS INDICATED
BY CONTENT DESCRIPTORS
(WHEN THE VALUE OF content_nibble_level_1 IS "0xE")

| FIRST user_nibbl BIT | SECOND user_nibbl BIT | PROGRAM CHARACTERISTICS |
|---|---|---|
| ... | ... | ... |
| 0x3 | – | INDICATE "PROGRAM CHARACTERISTICS INFORMATION RELATING TO 3D PROGRAM" |
| 0x3 | 0x0 | "3D VIDEO IS NOT INCLUDED IN THE TARGET EVENT (PROGRAM)" |
| 0x3 | 0x1 | "THE VIDEO OF THE TARGET EVENT (PROGRAM) IS 3D VIDEO" |
| 0x3 | 0x2 | "3D VIDEO AND 2D VIDEO ARE INCLUDED IN THE TARGET EVENT (PROGRAM)" |
| ... | ... | ... |

# FIG. 39

EXAMPLE OF CODE TABLE OF PROGRAM CHARACTERISTICS INDICATED
BY CONTENT DESCRIPTORS
(WHEN THE VALUE OF content_nibble_level_1 IS "0xE")

| FIRST user_nibbl BIT | SECOND user_nibbl BIT | PROGRAM CHARACTERISTICS |
|---|---|---|
| ... | ... | ... |
| 0x3 | – | INDICATE "PROGRAM CHARACTERISTICS INFORMATION RELATING TO 3D PROGRAM" |
| 0x3 | 0x0 | "3D VIDEO IS NOT INCLUDED IN THE TARGET EVENT (PROGRAM)" |
| 0x3 | 0x1 | "3D VIDEO IS INCLUDED IN THE TARGET EVENT (PROGRAM). THE 3D VIDEO TRANSMISSION METHOD IS Side-by-Side METHOD" |
| 0x3 | 0x2 | "3D VIDEO IS INCLUDED IN THE TARGET EVENT (PROGRAM). THE 3D VIDEO TRANSMISSION METHOD IS Top-and-Bottom METHOD" |
| 0x3 | 0x3 | "3D VIDEO IS INCLUDED IN THE TARGET EVENT (PROGRAM). THE 3D VIDEO TRANSMISSION METHOD IS 3D2 VIEW-BASED ES TRANSMISSION METHOD" |
| ... | ... | ... |

# FIG. 40

```
            ( START )
                │
                ▼
    ┌─────────────────────────┐  S201
    │  OBTAIN CURRENT          │
    │  PROGRAM INFORMATION     │
    └─────────────────────────┘
                │
                ▼              S202
          ╱─────────────╲         NO
         ╱  CURRENT      ╲──────────────────────────┐
         ╲  PROGRAM IS   ╱                           │
          ╲ 3D PROGRAM? ╱                            │
            ╲─────────╱                              │
               YES│                                  │
                  ▼                                  ▼
    ┌─────────────────────────┐ S204   ┌─────────────────────────┐ S208
    │  CHECK USER'S           │        │  CHECK USER'S           │
    │  3D VIEWING             │        │  3D VIEWING             │
    │  PREPARATION STATE      │        │  PREPARATION STATE      │
    └─────────────────────────┘        └─────────────────────────┘
                │                                    │
                ▼              S205                  ▼              S209
          ╱─────────────╲                     ╱─────────────╲
         ╱ 3D VIEWING    ╲    NO             ╱ 3D VIEWING    ╲    NO
         ╲ PREPARATION    ╲──────┐          ╲ PREPARATION    ╲──────┐
          ╲ STATE IS OK?  ╱      │           ╲ STATE IS OK?  ╱      │
            ╲─────────╱          │             ╲─────────╱          │
               YES│   S206       │  S207          YES│  S210        │  S203
                  ▼              ▼                   ▼              ▼
    ┌───────────────┐ ┌───────────────┐ ┌───────────────┐ ┌───────────────┐
    │ 3D VIDEO IS   │ │ 3D VIDEO IS   │ │ 2D VIDEO IS   │ │ 2D VIDEO IS   │
    │ DISPLAYED IN 3D│ │ DISPLAYED IN 2D│ │ DISPLAYED IN 3D│ │ DISPLAYED IN 2D│
    └───────────────┘ └───────────────┘ └───────────────┘ └───────────────┘
                │              │                 │                 │
                ◄──────────────┴─────────────────┴─────────────────┘
                │
                ▼
            ( END )
```

# FIG. 41

701

VIEW IN 3D

VIEW IN 2D

6301  6302

## FIG. 42

```
                    ┌──────────┐
                    │  START   │
                    └────┬─────┘
                         │
                         ▼
              ┌─────────────────────┐  ╭S301
              │     3D VIDEO        │
              │   DETERMINATION     │
              └──────────┬──────────┘
                         │
                         ▼            ╭S302
                    ◇─────────────◇
                   ╱ DETERMINATION ╲      YES
                  ◇  RESULT IS 3D?  ◇─────────────┐
                   ╲               ╱              │
                    ◇─────────────◇               │
                         │                        │
                     NO  │  ╭S304         ╭S303   │
                         ▼                        ▼
              ┌─────────────────────┐  ┌─────────────────────┐
              │  TREAT AS 2D VIDEO  │  │  TREAT AS 3D VIDEO  │
              └──────────┬──────────┘  └──────────┬──────────┘
                         │◄───────────────────────┘
                         ▼
                    ┌──────────┐
                    │   END    │
                    └──────────┘
```

## FIG. 43

```
                    ┌──────────┐
                    │  START   │
                    └────┬─────┘
                         │
                         ▼            ╭S401
                    ◇─────────────◇
                   ╱ IDENTIFICATION╲      YES
                  ◇  INFORMATION IS ◇─────────────────────┐
                   ╲      3D?      ╱                       │
                    ◇─────────────◇                        │
                         │                                 │
                      NO │                                 │
                         ▼            ╭S301                │
              ┌─────────────────────┐                      │
              │     3D VIDEO        │                      │
              │   DETERMINATION     │                      │
              └──────────┬──────────┘                      │
                         │                                 │
                         ▼            ╭S302                │
                    ◇─────────────◇                        │
                   ╱ DETERMINATION ╲      YES              │
                  ◇  RESULT IS 3D?  ◇───────────────┐      │
                   ╲               ╱                │      │
                    ◇─────────────◇                 │      │
                         │                          ▼◄─────┘
                     NO  │  ╭S304         ╭S303
                         ▼                        ▼
              ┌─────────────────────┐  ┌─────────────────────┐
              │  TREAT AS 2D VIDEO  │  │  TREAT AS 3D VIDEO  │
              └──────────┬──────────┘  └──────────┬──────────┘
                         │◄───────────────────────┘
                         ▼
                    ┌──────────┐
                    │   END    │
                    └──────────┘
```

# FIG. 44

```
         ( START )
             │
             ▼
    ┌─────────────────┐  ⌇S301
    │   3D VIDEO      │
    │  DETERMINATION  │
    └─────────────────┘
             │
             │        S302
             ▼
        ╱─────────╲    NO
    ╱─────────────────╲──────────────┐
    ╲  DETERMINATION  ╱              │
     ╲ RESULT IS 3D? ╱               │
       ╲───────────╱                 │
             │ YES                   │
             ▼                       │
    ┌─────────────────┐  ⌇S501       │
    │    DISPLAY      │              │
    │  CONFIRMATION   │              │
    │    MESSAGE      │              │
    └─────────────────┘              │
             │        S502           │
             ▼                       │
        ╱─────────╲                  │
    ╱─────────────────╲    NO        │
    ╲     USER        ╱──────────┐   │
     ╲ ANSWER IS 3D  ╱           │   │
      ╲ SWITCHING?  ╱            │   │
       ╲──────────╱             │   │
             │ YES  S303        │   ▼
             ▼                  S304
    ┌─────────────────┐    ┌─────────────────┐
    │ TREAT AS 3D VIDEO│   │ TREAT AS 2D VIDEO│
    └─────────────────┘    └─────────────────┘
             │                       │
             ▼◄──────────────────────┘
         (  END  )
```

## FIG. 45

701

4503

3D VIDEO IS DETECTED. (Side-by-Side METHOD)

DO YOU WANT TO SWITCH TO 3D VIDEO?

| OK/3D | CANCEL |

4501    4502

## FIG. 46

701

3D VIDEO IS DETECTED AND THE DISPLAY MODE IS
SWITCHED TO 3D.
  DO YOU WANT TO RETURN TO THE PREVIOUS STATE?

| OK/3D | CANCEL |

4601    4602

# FIG. 47

701

3D PROGRAM   AUTOMATIC DETECTION SETTING

| 3D AUTOMATIC DETECTION | YES | NO | |
|---|---|---|---|
| Side-by-Side | NO | YES (STRONG) | YES (WEAK) |
| Top-and-Bottom | NO | YES (STRONG) | YES (WEAK) |

4701

4702

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3295393 A